(19) Europäisches Patentamt
European Patent Office
Office européen des brevets

(11) EP 2 347 910 A1

(12) # EUROPEAN PATENT APPLICATION
published in accordance with Art. 153(4) EPC

(43) Date of publication:
**27.07.2011 Bulletin 2011/30**

(21) Application number: **09819009.3**

(22) Date of filing: **09.10.2009**

(51) Int Cl.:
***B41M 5/26*** *(2006.01)* ***G11B 7/24*** *(2006.01)*
***G11B 7/244*** *(2006.01)*

(86) International application number:
**PCT/JP2009/005295**

(87) International publication number:
**WO 2010/041470 (15.04.2010 Gazette 2010/15)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.10.2008 JP 2008264480**

(71) Applicant: **FUJIFILM Corporation**
**Tokyo 106-0031 (JP)**

(72) Inventors:
- **FUJIMOTO, Taisuke**
**Minami-ashigara-shi**
**Kanagawa 250-0193 (JP)**
- **WATANABE, Kousuke**
**Minami-ashigara-shi**
**Kanagawa 250-0193 (JP)**
- **HASHIZUME, Taro**
**Odawara-shi**
**Kanagawa 250-0001 (JP)**

(74) Representative: **Wiedemann, Peter**
**Hoffmann - Eitle**
**Patent- und Rechtsanwälte**
**Arabellastraße 4**
**D-81925 München (DE)**

(54) **OPTICAL INFORMATION RECORDING MEDIUM, INFORMATION RECORDING METHOD AND PHOTOSENSITIZER**

(57) An aspect of the present invention relates to an optical information recording medium comprising a recording layer, wherein the recording layer comprises a cationic dye and a polynuclear azo metal complex dye comprising an azo dye and a metal ion, and a method of recording information comprising recording information on the recording layer comprised in the optical recording medium, and conducting the recording by irradiation of a laser beam having a wavelength of equal to or shorter than 440 nm onto the optical information recording medium. Another aspect of the present invention relates to a photosensitizer.

FIG. 1

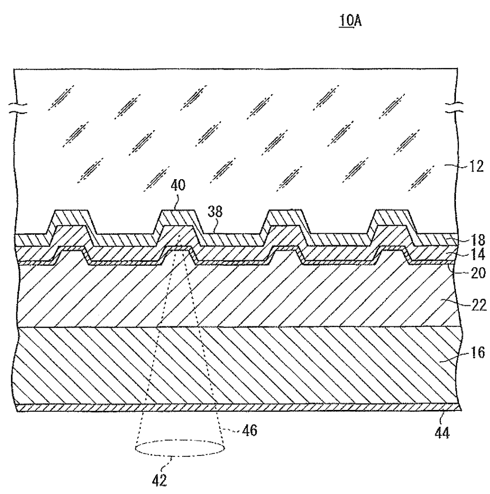


EP 2 347 910 A1

## Description

CROSS-REFERENCE TO RELATED APPLICATIONS

This application claims the benefit of priority to Japanese Patent Application No. 2008-264480 filed on October 10, 2008, which is expressly incorporated herein by reference in its entirety.

Technical field

The present invention relates to an optical information recording medium permitting the recording and reproducing of information with a laser beam, and more particularly, to a heat mode optical information recording medium suited to the recording and reproducing of information with a short-wavelength laser beam with a wavelength of equal to or shorter than 440 nm and to a method of recording information on the optical information recording medium by irradiation of a short-wavelength laser beam with a wavelength of equal to or shorter than 440 nm.
The present invention further relates to a novel photosensitizer suitable for use as a sensitizer for a light with a wavelength of equal to or shorter than 440 nm.

Background technique

The recordable CD (CD-R) and recordable DVD (DVD-R) have been known as optical information recording media permitting the write-once recording of information with a laser beam. In contrast to the recording of information on a CD-R, which is conducted with a laser beam in the infrared range (normally, at a wavelength of about 780 nm), the recording of information on a DVD-R is conducted with a visible light laser beam (with a wavelength of about 630 to 680 nm). Since a recording laser beam of shorter wavelength is employed for a DVD-R than for a CD-R, the DVD-R has an advantage of being able to record at higher density than on a CD-R. Thus, the status of the DVD-R as a high-capacity recording medium has to some degree been ensured in recent years.
Networks, such as the Internet, and high-definition television have recently achieved widespread popularity. With high-definition television (HDTV) broadcasts near at hand, demand is growing for high-capacity recording media for recording image information both economically and conveniently. However, the CD-R and DVD-R do not afford recording capacities that are adequate to handle future needs. Accordingly, to increase the recording density by using a laser beam of even shorter wavelength than that employed in a DVD-R, the development of high-capacity disks capable of recording with laser beams of short wavelength is progressing. For example, an optical recording disk known as the Blu-ray type (Blu-ray Disc, also referred to as "BD", hereinafter) employing a blue laser of 405 nm, and HD-DVD have been proposed as such optical disks.
For example, Reference 1 (Japanese Unexamined Patent Publication (KOKAI) Heisei No. 11-310728), Reference 2 (Japanese Unexamined Patent Publication (KOKAI) Heisei No. 11-130970), Reference 3 (Japanese Unexamined Patent Publication (KOKAI) No. 2002-274040), and Reference 4 (Japanese Unexamined Patent Publication (KOKAI) No. 2000-168237) propose the use of azo metal complex dyes as dyes contained in the recording layer in DVD-R optical disks. The contents of the above applications are expressly incorporated herein by reference in their entirety. These azo metal complex dyes have absorption waveforms corresponding to red lasers, and cannot achieve adequate recording characteristics in recording by laser beams of short wavelength (for example, 405 nm).
Accordingly, in optical recording disks employing short-wavelength laser beams (such as a 405 nm blue laser beam), attempts are being made to shorten the absorption wavelength of the azo metal complexes employed in DVD-Rs. These attempts are disclosed in, for example, Reference 5 (Japanese Unexamined Patent Publication (KOKAI) No. 2001-158862), Reference 6 (Japanese Unexamined Patent Publication (KOKAI) No. 2006-142789), Reference 7 (Japanese Unexamined Patent Publication (KOKAI) No. 2006-306070) and English language family member US2009/0053455A1, which are expressly incorporated herein by reference in their entirety.

Disclosure of the invention

The present inventors evaluated the light resistance of the dye films and the recording and reproduction characteristics of optical information recording media corresponding to short wavelength lasers, such as blue lasers, for the azo metal complexes described in References 5 to 7. As a result, the present inventors found that none of these azo metal complexes achieved both light resistance and recording and reproduction characteristics.
Accordingly, in order to provide an optical information recording medium, affording good recording and reproduction characteristics and good light resistance in recording and reproduction by irradiation of a short-wavelength laser beam (particularly in information recording by irradiation of a laser beam having a wavelength of equal to or shorter than 440 mm), the present inventors conducted extensive research into the light resistance of dyes and the recording and

reproduction characteristics of optical information recording media corresponding to blue lasers, resulting in the following discoveries.
The azo metal complex dyes specifically disclosed in References 5 to 7 are all azo metal complex dyes in which two molecules of azo dyes are coordinated to one metal ion. However, these metal complexes are incapable of affording adequate light resistance and recording and reproduction characteristics in recording and reproduction by irradiation of the above-described short-wavelength laser beam. Accordingly, the present inventors thought that the above azo metal complex dyes might be unable to afford either light resistance or reproduction durability due to an inability to efficiently deactivate the excited state of the azo molecules as ligands, and conducted further extensive research. As a result, the present inventors discovered that an azo metal complex dye (polynuclear azo metal complex dye) incorporating two or more metal ions per molecule, with the number of metal ions being greater than or equal to the number of azo dye molecules, made it possible to promote the shifting of energy from the azo ligands to the metal ions, thereby yielding an optical information recording medium with good light resistance as well as good recording and reproduction characteristics when irradiated with a short wavelength laser.

Under these circumstances, the present invention was devised with the object of further enhancing the polynuclear azo metal complex dye performance in an optical information recording medium corresponding to a short wavelength laser,

The present inventors conducted extensive research into achieving the above object. As a result, they discovered that by employing a polynuclear azo metal complex dye in combination with a cationic dye, it was possible to obtain a highly sensitive optical information recording medium while maintaining good light resistance by means of the polynuclear azo metal complex dye.

An aspect of the present invention relates to an optical information recording medium comprising a recording layer, wherein the recording layer comprises a cationic dye and a polynuclear azo metal complex dye comprising an azo dye and a metal ion.

The azo dye may be an azo dye comprising a partial structure denoted by general formula (A) below:

[Chem. 1]

General formula (A)

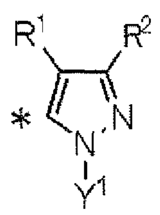

[In general formula (A), $R^1$ and $R^2$ each independently denote a hydrogen atom or a substituent, $Y^1$ denotes a hydrogen atom that may dissociate during formation of the azo metal complex dye, and * denotes a binding position with -N=N- group.]

The azo dye may be an azo dye denoted by general formula (1) below:

[Chem. 2]

General formula (1)

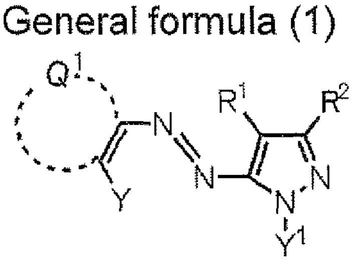

[In general formula (1), $Q^1$ denotes an atom group forming a heterocyclic ring or a carbon ring with two adjacent carbon atoms, Y denotes a group comprising a hydrogen atom that may dissociate during formation of the azo metal complex dye, and $R^1$, $R^2$, and $Y^1$ are defined respectively as in general formula (A).]

$Q^1$ in general formula (1) may denote an atom group forming a pyrazol ring with two adjacent carbon atoms.

The cationic dye moiety contained in the cationic dye may be denoted by any of general formulas (C) to (E) below:

[Chem. 3]

General formula (C)

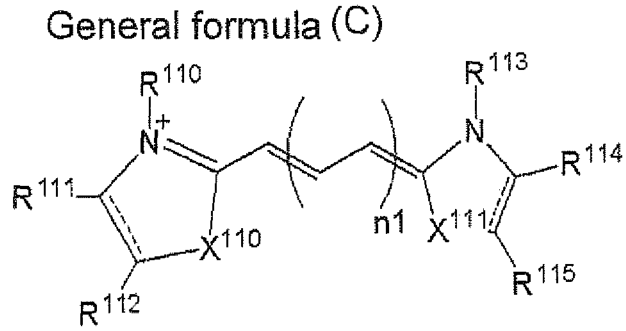

[In general formula (C), each of $R^{110}$, $R^{111}$, $R^{112}$, $R^{113}$, $R^{114}$, and $R^{115}$ independently denotes a hydrogen atom or a substituent, $R^1$ and $R^{112}$ may bond together to form a ring structure, $R^{114}$ and $R^{115}$ may bond together to form a ring structure, each of $X^{110}$ and $X^{111}$ independently denotes a carbon atom, oxygen atom, nitrogen atom, or sulfur atom, and n1 denotes an integer of equal to or greater than 0.]

[Chem. 4]

General formula (D)

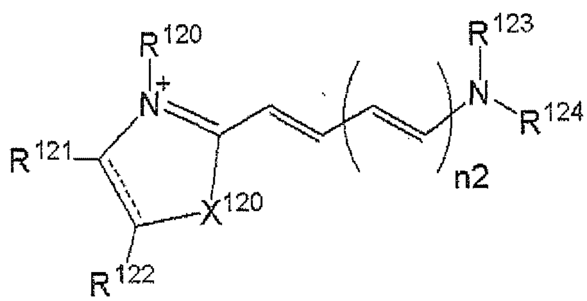

[In general formula (D), each of $R^{120}$, $R^{121}$, and $R^{122}$ independently denotes a hydrogen atom or a substituent, $R^{121}$

and $R^{122}$ may bond together to form a ring structure, each of $R^{123}$ and $R^{124}$ independently denotes a substituent and may bond together to form a ring structure, $X^{120}$ independently denotes a carbon atom, oxygen atom, nitrogen atom, or sulfur atom, and n2 denotes an integer of equal to or greater than 0]

[Chem. 5]

General formula (E)

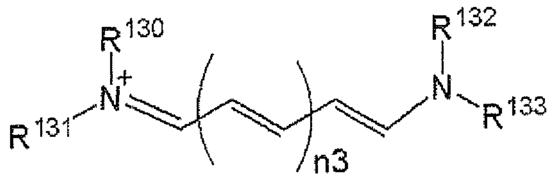

[In general formula (E), each of $R^{130}$, $R^{131}$, $R^{132}$, and $R^{133}$ independently denotes a substituent, $R^{130}$ and $R^{131}$ may bond together to form a ring structure, $R^{132}$ and $R^{133}$ may bond together to form a ring structure, and n3 denotes an integer of equal to or greater than 0.]

The cationic dye may have a maximum absorption wavelength at a wavelength range of 385 to 425 nm.

The recording layer may comprise the polynuclear azo metal complex dye and the cationic dye at a mass ratio of 95:5 to 50:50.

The metal ion containing the polynuclear azo metal complex dye may be a copper ion.

The optical information recording medium may comprise the recording layer on a surface of a support, and the surface has pregrooves with a track pitch ranging from 50 to 500 nm.

The optical information recording medium may be employed for recording information by irradiation of a laser beam having a wavelength of equal to or shorter than 440 nm.

A further aspect of the present invention relates to a method of recording information comprising recording information on the recording layer comprised in the above optical recording medium, and conducting the recording by irradiation of a laser beam having a wavelength of equal to or shorter than 440 nm onto the optical information recording medium.

A still further aspect of the present invention relates to a photosensitizer comprising a cationic dye moiety denoted by any of general formulas (C) to (E) above.

The photosensitizer may be employed together with a polynuclear azo metal complex dye comprising an azo dye and a metal ion.

The azo dye may be the azo dye comprising a partial structure denoted by general formula (A) above or the azo dye denoted by general formula (1) above.

The photosensitizer may have a maximum absorption wavelength at a wavelength range of 385 to 425 nm.

The photosensitizer may be a photosensitizer for a light with a wavelength of equal to or shorter than 440 nm.

The present invention can provide an optical information recording medium affording good recording and reproduction characteristics with a blue laser beam having a wavelength of equal to or shorter than 440 nm as well as having extremely good light resistance (in particular, an optical information recording medium permitting the recording of information by irradiation of a laser beam with a wavelength of equal to or shorter than 440 nm).

The photosensitizer of the present invention can produce a good sensitizing effect on polynuclear azo metal complex dyes.

## BEST MODE FOR CARRYING OUT THE INVENTION

### [Optical information recording medium]

The optical information recording medium of the present invention comprises a recording layer, desirably on a surface of a support, the surface having pregrooves with a track pitch ranging from 50 to 500 nm, and is suitable as a high-density recording optical disk for recording and reproducing information with short-wavelength lasers, such as a BD or HD-DVD.

The above-described high-density recording optical disk is structurally characterized by a narrower track pitch than conventional recordable optical disks. Further, optical disks of the BD configuration have a layer structure, differing from that of conventional recordable optical disks, in the form of a reflective layer and a recording layer sequentially provided on a support, and a relatively thin protective layer (commonly referred to as a "cover layer") present on the recording layer, In such optical information recording media having a structure different from conventional recordable optical disks,

there has been a problem in that adequate recording characteristics cannot not be easily achieved with the dyes employed as recording dyes in conventional recordable optical information recording media such as CD-Rs and DVD-Rs. By contrast, the present invention can yield an optical information recording medium with good recording and reproduction characteristics by employing a cationic dye with a polynuclear azo metal complex dye in the recording layer. This is because the cationic dye has a good sensitizing effect on the polynuclear azo metal complex dye. The optical information recording medium of the present invention can achieve good recording characteristics by irradiation with a laser beam of short wavelength (for example, a wavelength of equal to or shorter than 440 nm). In particular, the optical information recording medium of the present invention is suitable as a medium constituting a BD with a structure comprising a reflective layer between the support and the recording layer.

The present inventors further discovered that the polynuclear azo metal complex dye exhibited extremely good light resistance and good solution stability, and that the cationic dye increased the sensitivity of the optical information recording medium without loss of the good light resistance or solution stability of the polynuclear azo metal complex dye. The optical information recording medium of the present invention, by incorporating an azo metal complex dye with a cationic dye in the recording layer, can achieve both good light resistance and recording and reproduction characteristics when irradiated with a short wavelength laser beam. The optical information recording medium of the present invention can further achievehigh productivity because it is formed with a recording layer dye of high storage stability in solution.

Details of the cationic dye and polynuclear azo metal complex dye in the present invention will be described below.

Polynuclear azo metal complex dye

Only the azo form in the azo-hydrazone tautomeric equilibrium is described in the general formula denoting the azo dye in the present invention. However, the corresponding hydrazone form is also possible. In that case, the hydrazone form is to be considered the same component as the azo form in the present invention.

A tautomeric structure can also be obtained for the pyrazole ring described in the general formula. This is also considered to be covered by the same general formula.

The azo dye in the present invention denotes a dye compound that comprises an acyclic azo group (-N=N-) and is capable of forming a complex with a metal ion, including cases where it becomes a ligand in a metal complex. For example, when two azo ligands are coordinated with one metal ion in each molecule, the number of azo dye molecules per molecule is two. The case where an azo dye forms a complex with a metal ion is referred to as an azo metal complex dye. In the present invention, the term "azo ligand" refers to the case where the azo dye becomes a ligand. The azo ligand becomes an anionic ligand by losing a hydrogen atom, desirably becoming a divalent anionic ligand by losing two hydrogen atoms. In the present invention, the term "polynuclear azo metal complex dye" refers to a complex of an azo dye and a number of metal ions equal to or greater than the number of azo dye molecules, with two or more metal ions being contained per molecule. In the polynuclear azo metal complex dye, the multiple metal ions contained in each molecule may be identical or different. When multiple azo dye molecules are contained in a single molecule, the multiple azo dye molecules may be identical or different. Other components, such as ligands and ions required to neutralize the charge of the molecule, may be incorporated with the azo dye and metal ions in the polynuclear azo metal complex dye.

(i) Metal ion

The metal ion contained in the polynuclear azo metal complex dye is desirably in the form of transition metal ions from the perspective of recording and reproduction characteristics with short wavelength laser beams. The term "Transition metal ion" in the present invention denotes the ions of transition metal atoms. The term "transition metal atoms" is a collective term for the elements of groups IIIa to VIII and group Ib in the periodic table of the elements, which have an incomplete d electron shell. The transition metal atoms are not specifically limited. Mn, Fe, Co, Ni, Cu, and Zn are desirable; Co, Ni, and Cu are preferred; and Cu is of greater preference.

A monovalent or divalent transition metal ion is desirable as the transition metal ion. Examples of monovalent and divalent transition metal ions are: $Mn^{2+}$, $Fe^{2+}$, $Co^{2+}$, $Ni^{2+}$, $Cu^{+}$, $Cu^{2+}$, $Zn^{2+}$, $Ru^{2+}$, $Pd^{2+}$, $Ag^{+}$, $Re^{+}$, $Pt^{2+}$ and $Au^{+}$. Transition metal ions such as $Co^{2+}$, $Ni^{2+}$, and $Cu^{2+}$ are desirably incorporated, and $Cu^{2+}$ is preferred.

(ii) Azo dye

At least a portion of the azo dye molecules contained in the polynuclear azo metal complex dye are desirably divalent azo dye anions. This is because, since efficient deactivation of the excited state of the azo ligands relates to enhancing light resistance, an increase in the σ-donor property and increased rupturing of the ligand field of the metal ions are thought to be desirable to enhance efficient energy displacement.

The polynuclear azo metal complex dye desirably contains two or more metal ions per molecule, with at least one metal being coordinate bonded with each azo dye. To enhance film stability, the azo dye preferably functions as a

crosslinking ligand, with each azo ligand coordinating with two or more metal ions. An azo dye having the partial structure denoted by general formula (A) is an example of an azo dye capable of forming such an azo metal complex dye.

[Chem. 6]

General formula (A)

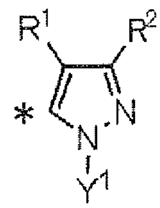

[In general formula (A), $R^1$ and $R^2$ each independently denote a hydrogen atom or a substituent, $Y^1$ denotes a hydrogen atom that may dissociate during formation of the azo metal complex dye, and * denotes a binding position with -N=N- group.]

In general formula (A), $Y^1$ denotes a hydrogen atom that may dissociate during formation of the azo metal complex dye (also referred to as a "dissociating hydrogen atom", hereinafter). In the partial structure denoted by general formula (A), the hydrogen atom $Y^1$ on the pyrazole ring can be dissociated, permitting the formation of a complex with a transition metal ion through the other nitrogen atom on the pyrazole ring in partial structure (A) and achieving a high film stability and good recording characteristics even when the number of transition metal ions is larger than the number of azo dyes.

In general formula (A), $R^1$ and $R^2$ each independently denote a hydrogen atom or a substituent. From the perspective of enhancing solubility, $R^1$ and $R^2$ are preferably substituents. The substituents are not specifically limited; examples are: halogen atoms, alkyl groups (including cycloalkyl groups and bicycloalkyl groups), alkenyl groups (including cycloalkenyl groups and bicycloalkenyl groups), alkynyl groups, aryl groups, heterocyclic groups, cyano groups, hydroxyl groups, nitro groups, carboxyl groups, alkoxy groups, aryloxy groups, silyloxy groups, heterocyclic oxy groups, acyloxy groups, carbamoyloxy groups, alkaxycarbonyloxy groups, aryloxycarbonyloxy groups, amino groups (including anilino groups), acylamino groups, aminocarbonylamino groups, alkoxycarbonylamino groups, aryloxycarbonylamino groups, sulfamoylamino groups, alkyl and arylsulfonylamino groups, mercapto groups, alkylthio groups, arylthio groups, heterocyclic thio groups, sulfamoyl groups, sulfo groups, alkyl and arylsulfinyl groups, alkyl and arylsulfonyl groups, acyl groups, aryloxycarbonyl groups, alkoxycarbonyl groups, carbamoyl groups, aryl and heterocyclic azo groups, imido groups, phosphino groups phosphinyl groups, phosphinyloxy groups, phosphinylamino groups, and silyl groups.

More specifically, Examples of $R^1$ and $R^2$ include: halogen atoms (such as chlorine atoms, bromine atoms, and iodine atoms), alkyl groups [linear, branched, or cyclic substituted or unsubstituted alkyl groups in the form of allyl groups (preferably alkyl groups having 1 to 30 carbon atoms such as methyl groups, ethyl groups, n-propyl groups, isopropyl groups, t-butyl groups, n-octyl groups, eicosyl groups, 2-chloroethyl groups, 2-cyanoethyl groups, and 2-ethylhexyl groups), cycloalkyl groups (preferably substituted or unsubstituted cycloalkyl groups having 3 to 30 carbon atoms such as cyclohexyl groups, cyclopentyl groups, and 4-n-dodecyleyelohexyl groups), bicycloalkyl groups (preferably substituted or unsubstituted bicycloalkyl groups having 5 to 30 carbon atoms, that is, monovalent groups obtained by removing a single hydrogen atom from a bicycloalkane having 5 to 30 carbon atoms, such as bicyclo[1,2,2]heptane-2-yl and bicyclo[2,2,2]octane-3-yl), and tricyclo structures having an additional ring; the allyl groups in the description of substituents given below (such as the alkyl group in an alkylthio group) denote this same concept of an allyl group]; alkenyl groups [linear, branched, or cyclic substituted or unsubstituted alkenyl groups including alkenyl groups (preferably substituted or unsubstituted alkenyl groups having 2 to 30 carbon atoms, such as vinyl groups, allyl groups, prenyl groups, geranyl groups, and oleyl groups), cycloalkenyl groups (preferably substituted or unsubstituted cycloalkenyl groups having 3 to 30 carbon atoms, that is, monovalent groups obtained by removing a single hydrogen atom from a cycloalkene having 3 to 30 carbon atoms, such as 2-cyclopentene-1-yl and 2-cyclohexene-1-yl), bicycloalkenyl groups (substituted or unsubstituted bicycloalkenyl groups, preferably substituted or unsubstituted bicycloalkenyl groups having 5 to 30 carbon atoms, that is, monovalent groups obtained by removing a hydrogen atom from a bicycloalkene having a single double bond, such as bicyclo[2,2,1]hepto-2-ene-1-yl and bicyclo[2,2,2]-octo-2-ene-4-yl)]; alkynyl groups (preferably substituted or unsubstituted alkynyl groups having 2 to 30 carbon atoms such as ethynyl groups, propargyl groups, trimethylsilylethynyl groups, and aryl groups (preferably substituted or unsubstituted aryl groups having 6 to 30 carbon atoms, such as phenyl groups, p-tolyl groups, naphthyl groups, m-chlorophenyl groups, and o-hexadecanoylaminophenyl

groups); heterocyclic groups (preferably monovalent groups obtained by removing a single hydrogen atom from a substituted or unsubstituted five or six-membered aromatic or nonaromatic heterocyclic compound; more preferably five or six-membered aromatic heterocyclic groups having 3 to 30 carbon atoms, such as 2-furyl groups, 2-thienyl groups, 2-pyrimidinyl groups, and 2-benzothiazolyl groups); cyano groups; hydroxyl groups; nitro groups; carboxyl groups; alkoxy groups (preferably substituted or unsubstituted alkoxy groups having 1 to 30 carbon atoms, such as methoxy groups, ethoxy groups, isopropoxy groups, t-butoxy groups, n-octyloxy groups, and 2-methoxyethoxy groups); aryloxy groups (preferably substituted or unsubstituted aryloxy groups having 6 to 30 carbon atoms, such as phenoxy groups, 2-methylphenoxy groups, 4-t-butylphenoxy groups, 3-nitrophenoxy groups, and 2-tetradecanoylaminophenoxy groups); silyloxy groups (preferably silyloxy groups having 3 to 20 carbon atoms, such as trimethylsilyloxy groups and t-butyldimethylsilyloxy groups); heterocyclic oxy groups (preferably substituted or unsubstituted heterocyclic oxy groups having 2 to 30 carbon atoms, 1-phenyltetrazole-5-oxy groups, and 2-tetrahydropyranyloxy groups); acyloxy groups (preferably formyloxy groups, substituted or unsubstituted alkylcarbonyloxy groups having 2 to 30 carbon atoms, substituted or unsubstituted arylcarbonyloxy groups having 6 to 30 carbon atoms, such as formyloxy groups, acetyloxy groups, pivaloyloxy groups, stearoyloxy groups, benzoyloxy groups, and p-methoxyphenylcarbonyloxy groups); carbamoyloxy groups (preferably substituted or unsubstituted carbamoyloxy groups having 1 to 30 carbon atoms, such as N,N-dimethylcarbamoyloxy groups, N,N-diethylcarbamoyloxy groups, morpholinocarbonyloxy groups, N,N-di-n-octylaminocarbonyloxy groups, and N-n-octylcarbamoyloxy groups); alkoxycarbonyloxy groups (preferably substituted or unsubstituted alkoxycarbonyloxy groups having 2 to 30 carbon atoms, such as methoxycarbonyloxy groups, ethoxycarbonyloxy groups, t-butoxycarbonyloxy groups, and n-octylcarbonyloxy groups); aryloxycarbonyloxy groups (preferably substituted or unsubstituted aryloxycarbonyloxy groups having 7 to 30 carbon atoms, such as phenoxycarbonyloxy groups, p-methoxyphenoxycarbonyloxy groups, and p-n-hexadecyloxyphenoxycarbonyloxy groups); amino groups (preferably amino groups, substituted or unsubstituted alkylamino groups having 1 to 30 carbon atoms and substituted or unsubstituted aniline groups having 6 to 30 carbon atoms such as amino groups, methylamino groups, dimethylamino groups, anilino groups, N-methylanilino groups, and diphenylamino groups); acylamino groups (preferably formylamino groups, substituted or unsubstituted alkylcarbonylamino groups having 1 to 30 carbon atoms, and substituted or unsubstituted arylcarbonylamino groups having 6 to 30 carbon atoms, such as formylamino groups, acetylamino groups, pivaloylamino groups, lauroylamino groups, benzoylamino groups, and 3,4,5-tri-n-octyloxyphenylcarbonylamino groups); aminocarbonylamino groups (preferably substituted or unsubstituted aminocarbonylamino groups having 1 to 30 carbon atoms, such as carbamoylamino groups, N,N-dimethylaminocarbonylamino groups, N,N-diethylaminocarbonylamino groups, and morpholinocarbonylamino groups); alkoxycarbonylamino groups (preferably substituted or unsubstituted alkoxycarbonylamino groups having 2 to 30 carbon atoms, such as methoxycarbonylamino groups, ethoxycarbonylamino groups, t-butoxycarbonylamino groups, n-octadecyloxycarbonylamino groups, and N-methylmethoxycarbonylamino groups); aryloxycarbonylamino groups (preferably substituted or unsubstituted aryloxycarbonylamino groups having 7 to 30 carbon atoms, such as phenoxycarbonylamino groups, p-chlorophenoxycarbonylamino groups, and m-n-octyloxyphenoxycarbonylamino groups); sulfamoylamino groups (preferably substituted or unsubstituted sulfamoylamino groups having 0 to 30 carbon atoms, such as sulfamoylamino groups, N,N-dimethylaminosulfonylamino groups, and N-n-octylaminosulfonylamino groups); alkyl and arylsulfonylamino groups (preferably substituted or unsubstituted alkylsulfonylamino groups having 1 to 30 carbon atoms and substituted or unsubstituted arylsulfonylamino groups having 6 to 30 carbon atoms, such as methylsulfonylamino groups, butylsulfonylamino groups, phenylsulfonylamino groups, 2,3,5-trichlorophenylsulfonylamino groups, and p-methylphenylsulfonylamino groups); mercapto groups; alkylthio groups (preferably substituted or unsubstituted alkylthio groups having 1 to 30 carbon atoms, such as methylthio groups, ethylthio groups, and n-hexadecylthio groups); arylthio groups (preferably substituted or unsubstituted arylthio groups having 6 to 30 carbon atoms, such as phenylthio groups, p-chlorophenylthio groups, and m-methoxyphenylthio groups); heterocyclic thio groups (preferably substituted or unsubstituted heterocyclic thio groups having 2 to 30 carbon atoms, such as 2-benzothiazolylthio groups and 1-phenyltetrazole-5-ylthio groups); sulfamoyl groups (preferably substituted or unsubstituted sulfamoyl groups having 0 to 30 carbon atoms, such as N-ethylsulfamoyl groups, N-(3-dodecyloxypropyl) sulfamoyl groups, N,N-dimethylsulfamoyl groups, N-acetylsulfamoyl groups, N-benzoylsulfamoyl groups, N-(N'-phenylcarbamoyl)sulfamoyl groups); sulfo groups; alkyl and arylsulfinyl groups (preferably substituted or unsubstituted alkylsulfinyl groups having 1 to 30 carbon atoms and substituted or unsubstituted arylsulfinyl groups having 6 to 30 carbon atoms, such as methylsulfinyl groups, ethylsulfinyl groups, phenylsulfinyl groups, and p-methylphenylsulfinyl groups); alkyl and arylsulfonyl groups (preferably substituted or unsubstituted alkylsulfonyl groups having 1 to 30 carbon atoms and substituted or unsubstituted arylsulfonyl groups having 6 to 30 carbon atoms, such as methylsulfonyl groups, ethylsulfonyl groups, phenylsulfonyl groups, and p-methylphenylsulfonyl groups); acyl groups (preferably formyl groups, substituted or unsubstituted alkylcarbonyl groups having 2 to 30 carbon atoms, substituted or unsubstituted arylcarbonyl groups having 7 to 30 carbon atoms, and substituted or unsubstituted heterocyclic carbonyl groups having 4 to 30 carbon atoms and bound to carbonyl groups through carbon atoms, such as acetyl groups, pivaloyl groups, 2-chloroacetyl groups, stearoyl groups, benzoyl groups, p-n-octyloxyphenylcarbonyl groups, 2-pyridylcarbonyl groups, and 2-furylcarbonyl groups); aryloxycarbonyl groups (preferably substituted or unsubstituted aryloxycarbonyl groups having 7 to 30

carbon atoms, such as phenoxycarbonyl groups, o-chlorophenoxycarbonyl groups, m-nitrophenoxycarbonyl groups, and p-t-butylphenoxycarbonyl groups); alkoxycarbonyl groups (preferably substituted or unsubstituted alkoxycarbonyl groups having 2 to 30 carbon atoms, such as methoxycarbonyl groups, ethoxycarbonyl groups, t-butoxycarbonyl groups, and n-octadecyloxycarbonyl groups); carbamoyl groups (preferably substituted or unsubstituted carbamoyl groups having 1 to 30 carbon atoms, such as carbamoyl groups, N-methylcarbamoyl groups, N,N-dimethylcarbamoyl groups, NN-di-n-octylearbamoyl groups, and N-(methylsulfonyl)carbamoyl groups); aryl and heterocyclic azo groups (preferably substituted or unsubstituted arylazo groups having 6 to 30 carbon atoms and substituted or unsubstituted heterocyclic azo groups having 3 to 30 carbon atoms, such as phenylazo groups, p-chlorophenylazo groups, and 5-ethylthio-1,3,4-thiadiazole-2-ylazo groups); imido groups (preferably N-succinimide and N-phthalimide); phosphino groups (preferably substituted or unsubstituted phosphino groups having 2 to 30 carbon atoms, such as dimethylphosphino groups, diphenylphosphino groups, and methylphenoxyphosphino groups); phosphinyl groups (preferably substituted or unsubstituted phosphinyl groups having 2 to 30 carbon atoms, such as phosphinyl groups, dioctyloxyphosphinyl groups, and diethoxyphosphinyl groups); phosphinyloxy groups (preferably substituted or unsubstituted phosphinyloxy groups having 2 to 30 carbon atoms, such as diphenoxyphosphinyloxy groups, and dioctyloxyphosphinyloxy groups); phosphinylamino groups (preferably substituted or unsubstituted phosphinylamino groups having 2 to 30 carbon atoms, such as dimethoxyphosphinylamino groups and dimethylaminophosphinylamino groups); and silyl groups (preferably substituted or unsubstituted silyl groups having 3 to 30 carbon atoms, such as trimethylsilyl groups, t-butyldimethylsilyl groups, and phenyldimethylsilyl groups).

In those of the above functional groups that have a hydrogen atom, the hydrogen atom may be replaced with a substituent in the form of one of the above groups. Examples of such functional groups are alkylcarbonylaminosulfonyl groups, arylcarbonylaminosulfonyl groups, alkylsulfonylaminocarbonyl groups, and arylsulfonylaminocarbonyl groups. Examples thereof are methylsulfonylaminocarbonyl groups, p-methylphenylsulfanylaminocarbonyl groups, acetylaminosulfonyl groups, and benzoylaminosulfonyl groups.

From the perspectives of readily obtaining azo metal complexes of extremely good light resistance and solubility, $R^1$ preferably denotes an electron-withdrawing group. Examples of electron-withdrawing groups that are preferably selected as $R^1$ are: substituted or unsubstituted alkyloxycarbonyl groups having 2 to 10 carbon atoms, substituted or unsubstituted aryloxycarbonyl groups having 7 to 10 carbon atoms, substituted or unsubstituted alkylaminocarbonyl groups having 2 to 10 carbon atoms, substituted or unsubstituted arylaminocarbonyl groups having 7 to 10 carbon atoms, substituted or unsubstituted alkylsulfonyl groups having 1 to 10 carbon atoms, substituted or unsubstituted arylsulfonyl groups having 6 to 10 carbon atoms, and cyano groups. Examples of such groups that are more preferably selected are: substituted or unsubstituted alkyloxycarbonyl groups having 2 to 10 carbon atoms, substituted or unsubstituted alkylsulfonyl groups having 1 to 10 carbon atoms, and cyano groups. The selection of a substituted or unsubstituted alkyloxycarbonyl group having 2 to 10 carbon atoms or a cyano group is of greater preference. And a cyano group is of still greater preference.

$R^2$ preferably denotes a hydrogen atom, substituted or unsubstituted alkyl group having 1 to 10 carbon atoms, or substituted or unsubstituted aryl group having 6 to 10 carbon atoms. From the perspective of recording characteristics, a hydrogen atom or substituted or unsubstituted alkyl group having 1 to 10 carbon atoms is preferred, and a hydrogen atom and substituted or unsubstituted alkyl group having 1 to 4 carbon atoms is further preferred. In addition, from the perspective of solubility, substituted or unsubstituted alkyl group having 1 to 4 carbon atoms is particularly preferred.

The azo dye denoted by general formula (1) below is preferable as the azo dye comprising the partial structure denoted by general formula (A) above.

[Chem. 7]

General formula (1)

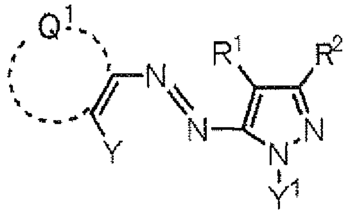

In general formula (1), each of $R^1$, $R^2$, and $Y^1$ is defined as in general formula (A), and the details thereof are as set forth above.

In general formula (1), $Q^1$ denotes an atom group forming a heterocyclic ring or a carbon ring with two adjacent carbon atoms. When $Q^1$ is a heterocyclic ring, the heterocyclic ring formed by $Q^1$ is not specifically limited other than it be formed by carbon atoms and hetero atoms (such as oxygen atoms, sulfur atoms, and nitrogen atoms). Examples are the heterocyclic rings included in the rings denoted by partial structural formulas (E-1) to (E-8) further below, pyrrole rings, furan rings, thiofuran rings, imidazole rings, thiazole rings, isothiazole rings, oxazole rings, isooxazole rings, pyridine rings, pyrazine rings, pyrimidine rings, and pyridazine rings. Of these, pyrazole rings are desirable. These rings may have substituents and may be condensed rings.

A benzene ring is desirable as the carbon ring formed by $Q^1$. The benzene ring may comprise substituents and may be condensed. From the perspective of recording and reproduction characteristics, it desirably does not form a 10-$\pi$-system condensed ring (such as a naphthalene ring or quinoline ring) or a 14-$\pi$-system condensed ring (such as anthracene, phenanthrene, or phenanthroline). For the same reasons, when the carbon ring is a benzene ring, the benzene ring is desirably not substituted with an amino group, hydroxyl group, alkoxy group, or aryloxy group.

From the perspective of enhancing solubility, the above heterocyclic rings and carbon rings desirably comprise substituents. Examples of the substituents are the groups given by way of example for the substituents denoted by $R^1$ and $R^2$.

Y denotes a group comprising a hydrogen atom (a dissociating hydrogen atom) that may dissociate during formation of the azo metal complex dye. This hydrogen atom is one that is readily deprotonated and is capable of dissociating in the course of forming a complex with a metal ion. The azo dye that is denoted by general formula (1) can become an anionic ligand through the dissociation of the dissociating hydrogen atom, and become a divalent anionic ligand through the dissociation of two dissociating hydrogen atoms.

Examples of the group denoted by Y are: hydroxyl groups, amino groups (preferably substituted or unsubstituted alkylamino groups having 1 to 30 carbon atoms and substituted or unsubstituted anilino groups having 6 to 30 carbon atoms, such as amino groups, methylamino groups, dimethylamino groups, anilino groups, N-methylanilino groups, and diphenylamino groups), acylamino groups (preferably formylamino groups, substituted or unsubstituted alkylcarbonylamino groups having 1 to 30 carbon atoms, and substituted or unsubstituted arylcarbonylamino groups having 6 to 30 carbon atoms, such as formylamino groups, acetylamino group, pivaloylamino groups, lauroylamino groups, benzoylamino groups, and 3,4,5-tri-n-octyloxyphenylcarbonylamino groups), aminocarbonylamino groups (preferably substituted or unsubstituted aminocarbonylamino groups having 1 to 30 carbon atoms such as carbamoylamino groups, N, N-dimethylaminocarbonylamino groups, N,N-diethylaminocarbonylamino groups, and morpholinocarbonylamino groups), alkoxycarbonylamino groups (preferably substituted or unsubstituted alkoxycarbonylamino groups having 2 to 30 carbon atoms, such as methoxycarbonylamino groups, ethoxycarbonamino groups, t-butoxycarbonylamino groups, n-octadecyloxycarbonylamino groups, and N-methyhnethoxycarbonylamino groups), aryloxycarbonylamino groups (preferably substituted or unsubstituted aryloxycarbonylamino groups having 7 to 30 carbon atoms, such as phenoxycarbonylamino groups, p-chlorophenoxycarbonylamino groups, and m-n-octyloxyphenoxycarbonylamino groups), sulfamoylamino groups (preferably substituted or unsubstituted sulfamoylamino groups having 0 to 30 carbon atoms, such as sulfamoylamino groups, N,N-dimethylaminosulfonylamino groups, and N-n-octylaminosulfonylamino groups), and alkyl and arylsulfonylamino groups (preferably substituted or unsubstituted alkylsulfonylamino groups having 1 to 30 carbon atoms and substituted or unsubstituted arylsulfonyl amino groups having 6 to 30 carbon atoms, such as methylsulfonylamino groups, butylsulfonylamino groups, phenylsulfonylamino groups, 2,3,5-trichlorophenylsulfonylamino groups, and p-methylphenylsulfonylamino groups).

Y desirably denotes a hydroxyl group, substituted or unsubstituted alkylsulfonylamino group with 1 to 4 carbon atoms, or substituted or unsubstituted arylsulfonylamino group with 3 to 10 carbon atoms; preferably denotes a hydroxyl group or substituted or unsubstituted alkylsulfonylamino group with 1 to 4 carbon atoms; and more preferably, denotes a hydroxyl group.

In addition, the following partial structure in general formula (1):

[Chem. 8]

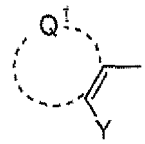

is desirably the partial structure formulas (E-1) to (E-8) below:

[Chem. 9]

(E-1)

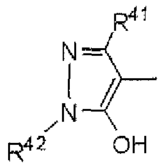

(E-2)

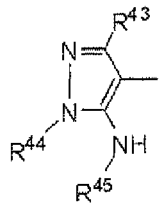

(E-3)

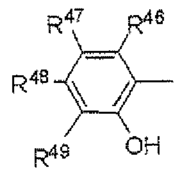

(E-4)

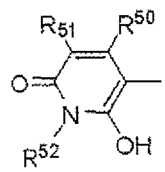

(E-5)

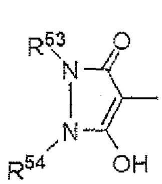

(E-6)

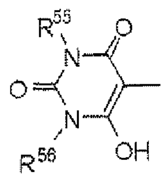

(E-7)

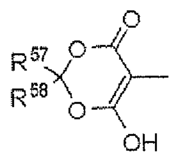

(E-8)

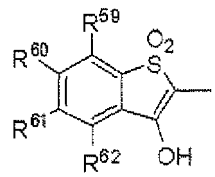

In the above, each of $R^{41}$, $R^{43}$, $R^{46}$ to $R^{49}$, $R^{50}$, $R^{51}$, $R^{57}$, $R^{58}$, and $R^{59}$ to $R^{62}$ independently denotes a hydrogen atom or substituent, it being possible for adjacent substituents to link together to form a ring. When $R^{41}$ to $R^{62}$ denote substituents, the substituents are not specifically limited. Examples are the substituents given by way of example of $R^1$ and $R^2$. However, $R^{46}$ to $R^{49}$ desirably denote hydrogen atoms or substituents other than amino groups (including alkyl-substituted or aryl-substituted amino groups), hydroxyl groups, alkoxy groups, and aryloxy groups. This is for recording and reproduction by irradiation with short-wavelength laser beams.

Each of $R^{42}$, $R^{44}$, $R^{45}$, $R^{52}$, $R^{53}$, $R^{54}$, $R^{55}$, and $R^{56}$ independently denotes a hydrogen atom or a substituent. The substituents are not specifically limited. Examples are alkyl groups (including cycloalkyl groups and bicycloalkyl groups), alkenyl groups (including cycloalkenyl groups and bicycloalkenyl groups), aryl groups, heterocyclic groups, sulfamoyl groups, alkyl and arylsulfinyl groups, alkyl and arylsulfonyl groups, acyl groups, aryloxycarbonyl groups, alkoxycarbonyl groups, and carbamoyl groups.

Among the above partial structures, (E-1) to (E-6) and (E-8) are desirable; (E-1) to (E-3) and (E-8) are preferred; (E-1), (E-3), and (E-8) are of greater preference; (E-1) and (E-3) are of even greater preference; and (E-1) is of still greater preference.

In (E-1), $R^{41}$ desirably denotes an alkyl group (including a cycloalkyl group or bicycloalkyl group), aryl group, heterocyclic group, cyano group, alkoxy group, aryloxy group, heterocyclic oxy group, aryloxycarbonyl group, or alkoxycarbonyl group; preferably denotes an alkyl group, cyano group, alkoxy group, aryloxy group, or heterocyclic oxy group; and more preferably, denotes an alkyl group or alkoxy group.

$R^{42}$ desirably denotes an alkyl group (including a cycloalkyl group or bicycloalkyl group), aryl group, or heterocyclic group; preferably denotes an alkyl group or an aryl group; and more preferably, denotes an aryl group.

In (E-3), $R^{46}$ to $R^{49}$ desirably denote alkyl groups (including cycloalkyl groups and bicycloalkyl groups), aryl groups, heterocyclic groups, alkoxy groups, aryloxy groups, heterocyclic oxy groups, aryloxycarbonyl groups, or alkoxycarbonyl groups; preferably denote alkyl groups, aryloxycarbonyl groups, or alkoxycarbonyl groups; and more preferably, denote alkoxycarbonyl groups.

In the preferred embodiment of the azo dye denoted by general formula (1), the following partial structure:

[Chem. 10]

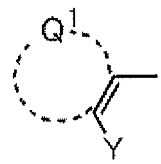

can be the partial structure denoted by general formula (B) below:

[Chem. 11]

General formula (B)

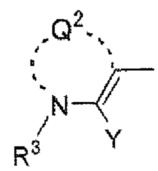

In general formula (B), Y is defined as in general formula (1), and details such as the desirable range are identical thereto,

$R^3$ denotes an aryl group or a heteroaryl group. $R^3$ desirably denotes a substituted or unsubstituted aryl group having 6 to 10 carbon atoms or a substituted or unsubstituted heteroaryl group having 1 to 10 carbon atoms, and preferably denotes a substituted or unsubstituted aryl group having 6 to 10 carbon atom. These may also be condensed rings.

$Q^2$ denotes an atom group forming a nitrogen-containing hetero ring with the adjacent nitrogen atom, the adjacent carbon atom, and a carbon atom bonded to the group denoted by Y. The nitrogen-containing hetero ring formed by $Q^2$ is desirably a five-membered or six-membered ring, preferably a five-membered ring, and more preferably, a pyrazole ring.

The azo dye denoted by general formula (1) with the partial structure (B) is desirably an azo dye denoted by general formula (2).

[Chem. 12]

General formula (2)

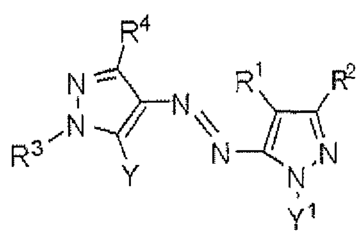

Details of general formula (2) will be described below.

In general formula (2), each of $R^1$, $R^2$, $Y^1$, and Y is defined as in general formula (1) and details regarding desirable ranges and the like are identical thereto.

$R^3$ is defined as in general formula (B) and details regarding desirable ranges and the like are identical thereto.

$R^4$ denotes a hydrogen atom or a substituent. The substituents given by way of example in the description of $R^1$ and $R^2$ are examples of the substituent. $R^4$ desirably denotes a substituent. Examples of desirable substituents denoted by $R^4$ are substituted or unsubstituted alkyl groups having 1 to 10 carbon atoms, substituted or unsubstituted aryl groups having 6 to 10 carbon atoms, substituted or unsubstituted alkoxy groups having 1 to 10 carbon atoms,

substituted or unsubstituted aryloxy groups having 6 to 10 carbon atoms, substituted or unsubstituted alkylamino groups having 1 to 10 carbon atoms, substituted or unsubstituted arylamino groups having 6 to 10 carbon atoms. Examples of preferred substituents are substituted or unsubstituted alkyl groups having 1 to 10 carbon atoms, substituted or unsubstituted alkoxy groups having 1 to 10 carbon atoms, and substituted or unsubstituted alkylamino groups having 1 to 10 carbon atoms. Examples of substituents of greater preference are substituted or unsubstituted alkyl groups having 1 to 10 carbon atoms and substituted or unsubstituted alkoxy groups having 1 to 10 carbon atoms.

In the azo dye denoted by general formula (2), $R^3$ desirably denotes a substituted or unsubstituted aryl group having 6 to 10 carbon atoms. $R^4$ desirably denotes a substituted or unsubstituted alkyl group having 1 to 10 carbon atoms or a substituted or unsubstituted alkoxy group having 1 to 10 carbon atoms. $R^1$ desirably denotes a cyano group. And $R^2$ desirably denotes a tertiary alkyl group having 4 to 10 carbon atoms.

Specific examples of the azo dye denoted by general formula (1) will be given below. However, the present invention is not limited thereto.

[Chem. 13]

(L-1)

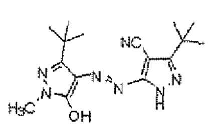

(L-2)

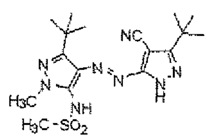

(L-3)

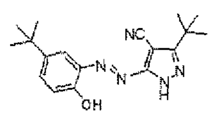

(L-4)

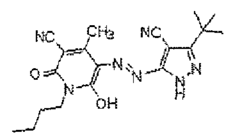

(L-5)

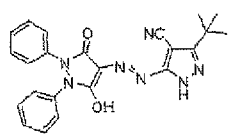

(L-6)

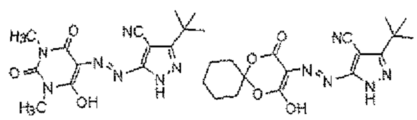

(L-7)

(L-8)

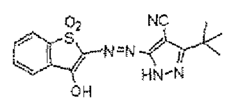

(L-9)

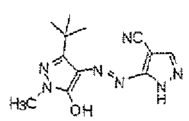

(L-10)

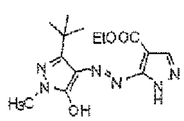

(L-11)

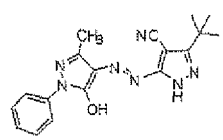

(L-12)

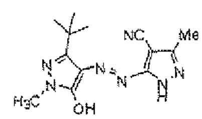

(L-13)

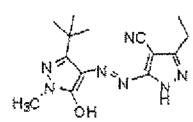

(L-14)

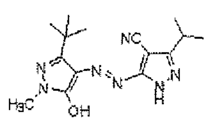

(L-15)

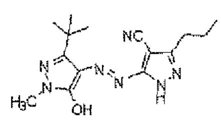

(L-16)

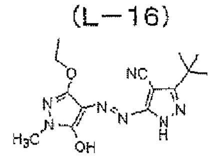

(L-17)

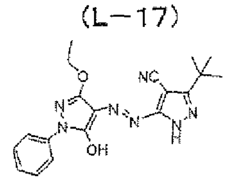

[Chem. 14]

(L-18)
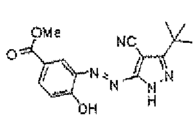
(L-19)
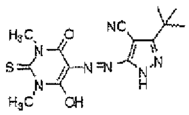
(L-20)
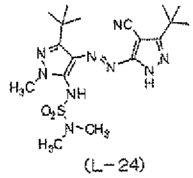
(L-21)
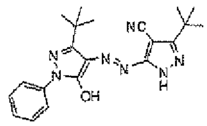

(L-22)
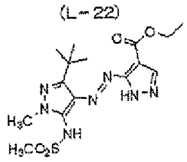
(L-23)
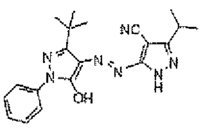
(L-24)
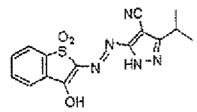
(L-25)
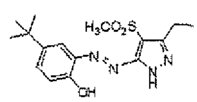
(L-26)
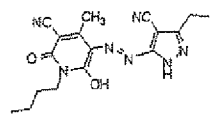

(L-27)
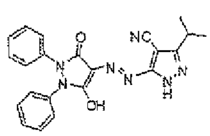
(L-28)
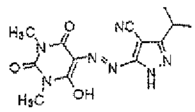
(L-29)
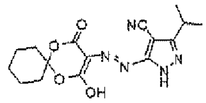
(L-30)
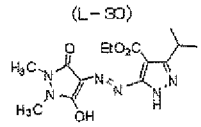

(L-31)
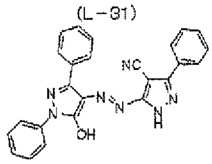
(L-32)
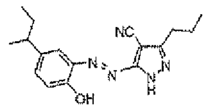
(L-33)
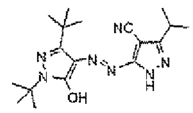

[Chem. 15]

(L-34)
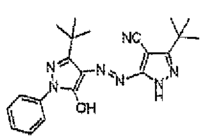
(L-35)
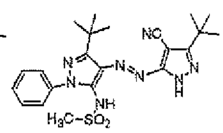
(L-36)
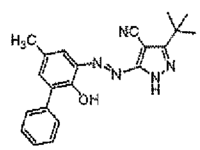
(L-37)
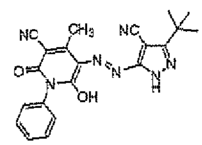

(L-38)
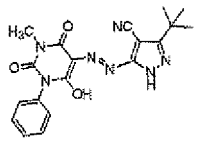
(L-39)
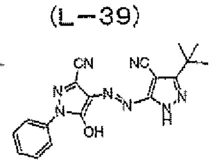
(L-40)
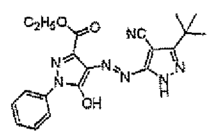

(L-41)
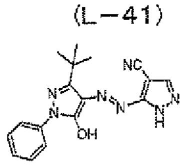
(L-42)
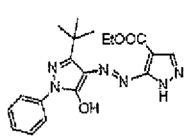
(L-43)
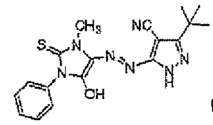
(L-44)
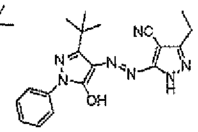

(L-45)
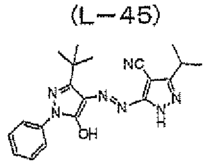
(L-46)
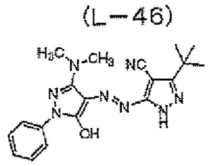
(L-47)
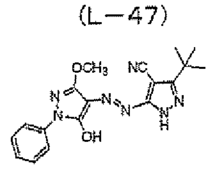

[Chem. 16]

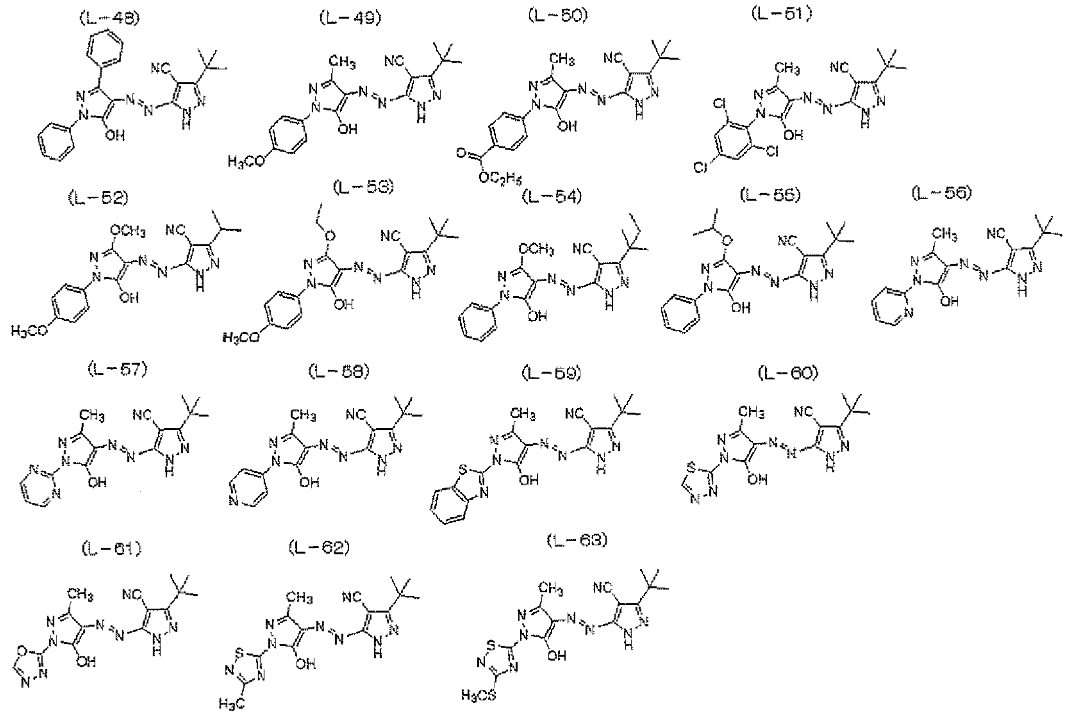

(L-48) (L-49) (L-50) (L-51)

(L-52) (L-53) (L-54) (L-55) (L-56)

(L-57) (L-58) (L-59) (L-60)

(L-61) (L-62) (L-63)

The methods described in Japanese Unexamined Patent Publication (KOKAI) Showa No. 61-36362 and English language family member U.S. Patent No. 4,685,934, and Japanese Unexamined Patent Publication (KOKAI) No. 2006-57076 and English language family member US2008/0199615A1, which are expressly incorporated herein by reference in their entirety, are examples of common methods of synthesizing the azo dye denoted by general formula (1). However, there is no limitation to these methods; other reaction solvents and acids may be employed, and the coupling reaction may be conducted in the presence of a base (such as sodium acetate, pyridine, or sodium hydroxide). Specific examples of methods of synthesizing the azo dye are given below.

[Chem. 17]

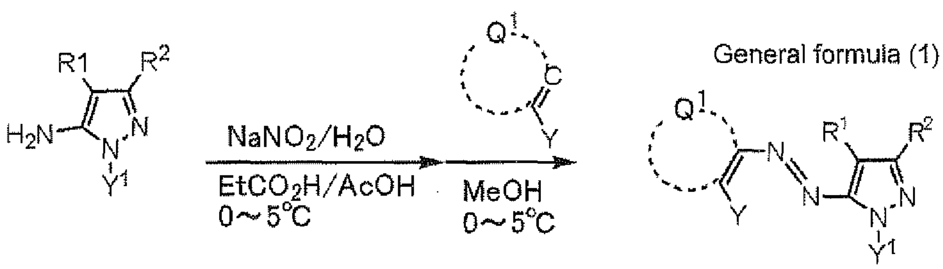


[Chem. 18]

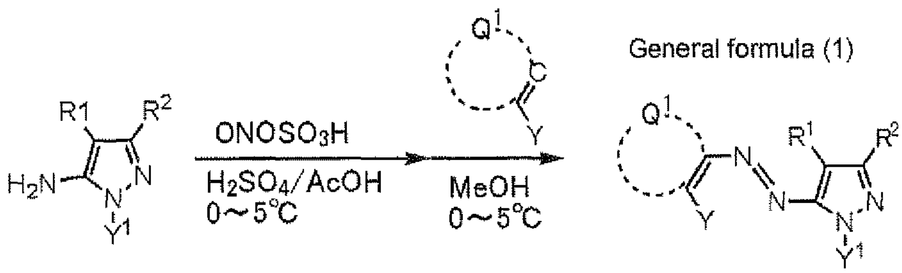


An example of the method of obtaining the azo metal chelate complex dye by reacting an azo dye and a transition metal ion is the method of stirring the azo dye and a metal salt (which includes metal complexes and metal oxide salts) in an organic solvent, water, or a mixed solution of the two. For synthesizing the polynuclear azo metal complex dye, the reaction of an azo dye and a metal ion is desirably conducted in the presence of a base. In the recording layer containing the azo metal complex dye thus obtained, a base (including protonated bases) will normally be contained in the azo metal complex and/or recording layer.

The base is not specifically limited. Ammonia or an organic base is desirable, and an organic base is preferred.

The equivalent quantity of the base is not specifically limited. To stably produce a polynuclear metal complex of high purity at good yield, an equivalent quantity relative to the azo ligands of equal to or higher than 2.00 is desirable, an equivalent quantity of equal to or higher than 2.00 but equal to or lower than 6.00 is preferred, an equivalent quantity of equal to or higher than 2.10 but equal to or lower than 5.50 is of greater preference, and an equivalent quantity of equal to or higher than 2.40 but equal to or lower than 5.00 is of even greater preference.

The equivalent quantity of the metal ions is not specifically limited. To stably produce a polynuclear metal complex of high purity at good yield, an equivalent quantity relative to the azo ligands of equal to or higher than 1.00 is desirable, an equivalent quantity of equal to or higher than 1.00 but equal to or lower than 1.25 is preferred, an equivalent quantity of equal to or higher than 1.10 but equal to or lower than 1.23 is of greater preference, and an equivalent quantity of equal to or higher than 1.12 but equal to or lower than 1.20 is of even greater preference.

An equivalent quantity of the base relative to the azo ligands of equal to or higher than 2.00 and an equivalent quantity of the metal ions relative to the azo ligands of equal to or higher than 1.00 are desirable; an equivalent quantity of the base of equal to or higher than 2.00 but equal to or lower than 6.00 and an equivalent quantity of metal ions of equal to or higher than 1.00 but equal to or lower than 1.25 are preferred; and an equivalent quantity of the base of equal to or higher than 2.10 but equal to or lower than 5.50; an equivalent quantity of the metal ions of equal to or higher than 1.10 but equal to or lower than 1.23 are of even greater preference, and an equivalent quantity of the base of equal to or higher than 2.40 but equal to or lower than 5.00 and an equivalent quantity of the metal ions of equal to or higher than 1.12 but equal to or lower than 1.20 is of even greater preference.

The reaction solvent is not specifically limited. Examples are alcohol solvents, ketone solvents, nitrile solvents, ester solvents, amide solvents, aqueous solvents, or mixed solvents thereof. The reaction solvent is desirably an alcohol solvent; preferably methanol, ethanol, or isopropyl; and more preferably, methanol. The mixing of an alcohol solvent and an aqueous solvent is also desirable.

The quantity of reaction solvent employed is not specifically limited. A mass ratio of one-fold or more but not more than 100-fold the mass of the azo ligand is desirable, a mass ratio of two-fold or more but not more than 50-fold the mass of the azo ligand is preferred; a mass ratio of 2.5-folk or more but not more than 30-fold the mass of the azo ligand is of greater preference, and a mass ratio of three-fold or more but not more than 20-fold the mass of the azo ligand is of even greater preference.

The reaction temperature is not specifically limited. A range of 0 ˚C to 250˚C is desirable, a range of 20˚C to 200˚C is preferred, a range of 40˚C to 150˚C is of greater preference, and a range of 50˚C to 120˚C is of even greater preference.

When conducting identification by MS such as ESI-TOF-MS and denoting the molecular weight of the molecule comprised of six molecules of azo ligands, seven transition metals, and two crosslinking ligands (such as oxygen ions or hydroxide ions) as M, there where will be cases where a nega-peak of M will be detected and cases where a nega-peak of M/2 will be detected for Example Compound (M-11) in Table 1, presented further below, which is an azo metal

complex obtained by reacting an azo dye in the form of Example Compound (L-11) with copper ions in the presence of diisopropylamine. A simple base substance may also be detected. Monodentate ligands (in the base, solvent, or the like) are seldom detected as complexes, but are often detected as fragments.

X-ray structural analysis and elemental analysis can also be used to determine the structure of the complex. X-ray structural analysis of an azo metal complex (M-11) obtained by reacting Example Compound (L-11) and copper ions in the presence of diisopropylamine revealed the following structure. There are also cases where the $O^{2-}$ and $OH^-$ in the crosslinking ligand positioned in the center both become $O^{2-}$ or both become $OH^-$.

[Chem. 19]

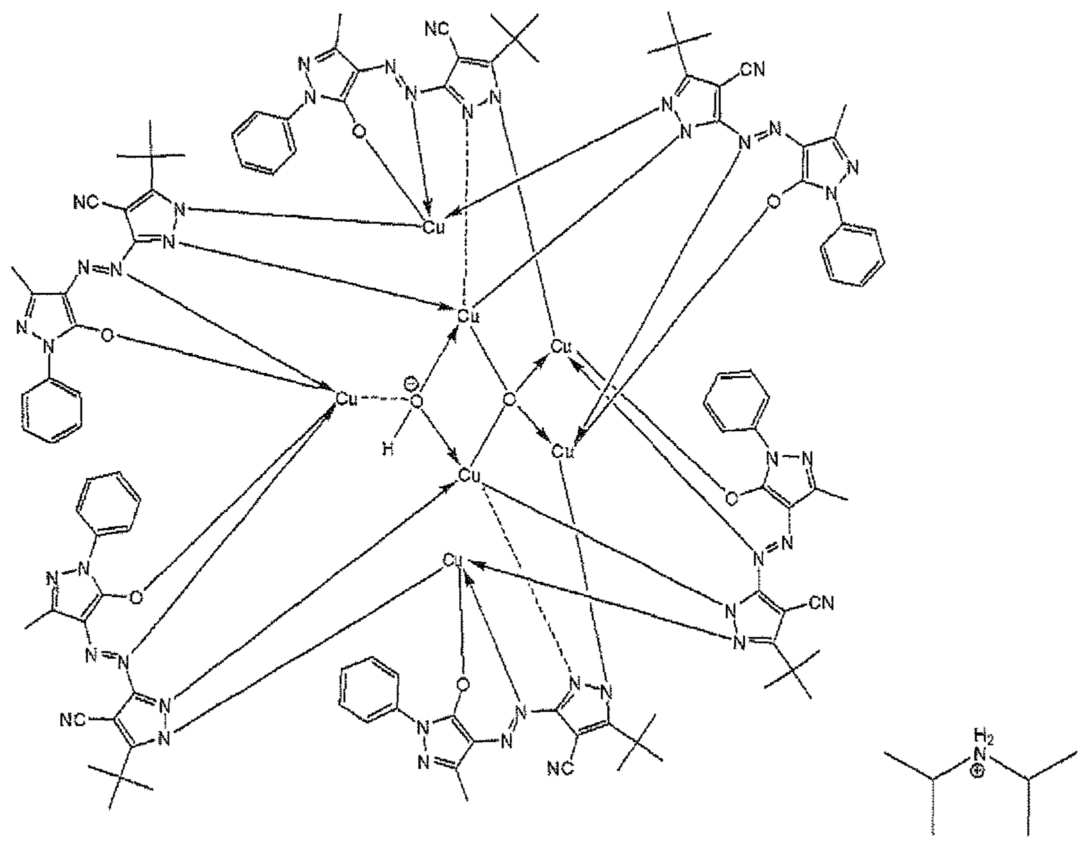

The azo metal complex dye denoted by general formula (G) below is an example of a polynuclear azo metal complex dye in which seven metal ions and six azo dye molecules are contained in each molecule.

[Chem. 20]

General formula (G) $[(M^{2+})_7(L^{2-})_6(O^{2-})_p(OH^-)_q(L')_r]\cdot\{(X^{n+})1/n\}_p$

Details of general formula (G) will be described below.

In general formula (G), $M^{2+}$ denotes a divalent transition metal ion. As set forth above, examples of divalent transition metal ions are $Mn^{2+}$, $Fe^{2+}$, $Co^{2+}$, $Ni^{2+}$, $Cu^{2+}$, $Zn^{2+}$, $Ru^{2+}$, $Pd^{2+}$, and $Pt^{2+}$. $Mn^{2+}$, $Fe^{2+}$, $Co^{2+}$, $Ni^{2+}$, $Cu^{2+}$, and $Zn^{2+}$ are desirable; $Co^{2+}$, $Ni^{2+}$, and $Cu^{2+}$ are preferred; and $Cu^{2+}$ is of greater preference.

Each of p and q denotes an integer falling within a range of 0 to 2, with p + q = 2. p and q can change within the range satisfying p + q = 2 depending on the state in which the compound is present and/or the type of $X^{n+}$.

$X^{n+}$ denotes a cation of valence n, with n denoting an integer falling within the range of 1 to 10. $X^{n+}$ is not specifically limited other than that it be of valence n. It is desirably an organic cation. Examples of organic cations are ammonium ions, amidinium ions, guanidinium ions, pyridinium ions, imidazolium ions, and anilinium ions. These may be substituted or unsubstituted, and two or more substituents may bond together to form a ring.

$X^{n+}$ desirably denotes ammonium ions or amidinium ions. Examples of the ammonium ions include unsubstituted

ammonium, substituted or unsubstituted primary ammonium (for example, n-butanol), substituted or unsubstituted secondary ammonium (for example, dipropylamine, diisopropylamine), substituted or unsubstituted tertiary ammonium (for example, triethylamine), and substituted or unsubstituted quaternary ammonium (for example, etrabutylammonium). The substituted or unsubstituted secondary ammonium and substituted or unsubstituted tertiary ammonium are preferred, with the substituted or unsubstituted secondary ammonium being of greater preference.

n is desirably an integer ranging from 1 to 4, preferably an integer of 1 or 2, and more preferably, 1.

In general formula (G), L' denotes a ligand. In the present invention, the term "ligand" means an atom, or group of atoms, capable of bonding with a metal ion. When plural ligands L' are present, they may be identical or different from each other. Examples of the ligand denoted by L', in addition to the ligands given as preferable examples further below, are the ligands described in "Photochemistry and Photophysics of Coordination Compounds," Springer-Verlag, H. Yersin, 1987, and "organic Metal Compounds -- Foundations and Applications," Shokabo K.K., Akio Yamamoto, 1982, which are expressly incorporated herein by reference in their entirety. Specific examples of ligands will be described below.

The atoms contained in L' that coordinate to metal ions are preferably nitrogen atoms, oxygen atoms, sulfur atoms, phosphorus atoms, and halogen atoms (such as chlorine atom, fluorine atom, bromine atom, and iodine atom); more preferably nitrogen atoms, oxygen atoms, and halogen atoms; more further preferably nitrogen atoms and oxygen atoms; and still more preferably, nitrogen atoms.

When L' is coordinated to a metal ion, L' may be either an anionic ligand or a neutral ligand.

Among the above, there is no limitation for L' coordinating to a metal ion through a nitrogen atom; examples are: nitrogen-containing aromatic heterocyclic ligands (such as pyridine ligands, pyrazine ligands, pyrimidine ligands, pyridazine ligands, triazine ligands, thiazole ligands, oxazole ligands, pyrrole ligands, imidazole ligands, pyrazole ligands, triazole ligands, oxadiazole ligands, thiadiazole ligands, condensed ligands containing the same (such as quinoline ligands, benzooxazole ligands, and benzimidazole ligands), and their tautomers); amine ligands (such as ammonia, methylamine, dimethylamine, diethylamine, dibenzylamine, triethylamine, piperidine, piperazine, morpholine, and arylamine); aniline ligands (such as aniline, N-methylaniline, N,N-dimethylaniline, NN-diethylaniline, diphenylamine, N-acylaniline, and N-alkylsulfonylaniline); imine ligands; nitrile ligands (such as acetonitrile ligands); isonitrile ligands (such as t-butylisonitrile ligands), amide ligands (such as dimethylformamide ligands and dimethylacetamide ligands); amidine ligands (such as DBU and DBN); and guanidine ligands (such as tetramethylguanidine). The ligands may comprise substituents.

There is no limitation for L' coordinating to a metal ion through an oxygen atom; examples are: alcohol ligands (preferably having 1 to 30 carbon atoms, more preferably 1 to 20 carbon atoms, still more preferably 1 to 10 carbon atoms, such as methanol, ethanol, butanol, 2-ethylhexyloxy, and other monovalent anionic ligands from which a proton has been dissociated); aryloxy ligands (preferably having 6 to 30 carbon atoms, more preferably 6 to 20 carbon atoms, still more preferably 6 to 12 carbon atoms, such as phenol, 1-naphthol, 2-naphthol, and other monovalent anionic ligands from which a proton has been dissociated); diketone ligands (such as acetylacetone ligands); silyloxy ligands (preferably having 3 to 40 carbon atoms, more preferably 3 to 30 carbon atoms, still more preferably 3 to 24 carbon atoms, such as trimethylsilyloxy and triphenylsilyl oxy); ether ligands (including cyclic ethers); carboxylic acid ligands; sulfonic acid ligands; aqua ligands; and $O_2$ ligands. These ligands may comprise substituents.

There is no limitation for L' coordinating to a metal ion through a sulfur atom; examples are: alkylthiol ligands (preferably having 1 to 30 carbon atoms, more preferably 1 to 20 carbon atoms, still more preferably 1 to 12 carbon atoms, such as butanethiol and other monovalent anionic ligands from which a proton has been dissociated); arylthiol ligands (preferably having 6 to 30 carbon atoms, more preferably 6 to 20 carbon atoms, still more preferably 6 to 12 carbon atoms, such as thiophenol); and thioether ligands. These ligands may comprise substituents.

There is no limitation for L' coordinating to the metal ion through a phosphorus atom; examples are: alkylphosphine ligands (preferably having 2 to 30 carbon atoms, more preferably 2 to 20 carbon atoms, still more preferably 2 to 10 carbon atoms, such as roethylphosphine, dimethylphosphine, diethylphosphine, and dibenzylphosphine); and arylphosphine ligands (preferably having 3 to 30 carbon atoms, more preferably 4 to 20 carbon atoms, still more preferably 5 to 10 carbon atoms, such as phenylphosphine, diphenylphosphine, and pyridylphosphine). These ligands may comprise substituents,

L' is desirably an organic base, with substituted or unsubstituted amines and substituted or unsubstituted amidines being desirable.

r denotes an integer falling within the range of 0 to 5, desirably an integer falling within the range of 0 to 3, preferably an integer falling within the range of 0 to 2, more preferably 0 or 1, and still more preferably, 0.

In general formula (G), $L^{2-}$ denotes a divalent anion in the form of the azo dye denoted by general formula (1) from which two hydrogen atoms have dissociated. The details of general formula (1) are as set forth above. The azo dye denoted by general formula (1) can become a divalent anion through dissociation of the dissociating hydrogen atom contained in the group denoted by Y and the dissociating hydrogen atom denoted by $Y^1$.

The azo metal complex dye denoted by general formula (G) can be obtained by reacting the azo dye denoted by general formula (1) with the salt of a transition metal. The reaction is desirably conducted in the presence of a base.

The use of an organic base is desirable. When an inorganic base is employed, the metal ions in the base sometimes form an ion pair with an azo ligand. In that case, it is difficult to obtain the desired azo metal complex. Examples of organic bases are primary to tertiary amines (such as triethylamine, diisopropylamine, pyrrolidone, N-methylpyrrolidine, and n-butylamine), amidines (such as DBU (1,8-diazabicyclo[5.4.0]-7-undecene) and DBN (1,5-diazabicyclo[4.3.0]-5-nonene)), guanidines (such as tetramethylguanidine), nitrogen-containing hetero rings (such as pyridine and imidazole), and tetrabutylammonium hydroxide.
Desirable examples of organic bases are substituted and unsubstituted primary to tertiary amines having 1 to 10 carbon atoms and substituted and unsubstituted amidines having 1 to 10 carbon atoms; preferred examples are substituted and unsubstituted secondary amines having 1 to 10 carbon atoms, substituted and unsubstituted tertiary amines having 1 to 10 carbon atoms, and substituted and unsubstituted amidines having 1 to 10 carbon atoms; and examples of greater preference are substituted and unsubstituted secondary amines having 1 to 10 carbon atoms and substituted and unsubstituted amidines having 1 to 10 carbon atoms. Alcohols such as methanol can be employed as the solvent as set forth above. Since the ligand denoted by L' in general formula (G) is derived from a base or solvent, an azo metal complex dye having the desired ligand can be obtained by selecting the base or solvent. The fact that the targeted azo metal complex dye has been obtained can be confirmed by a known method such as ESI-MS, MALDI-MS, ESI-TOF-MS, MALDI-TOF-MS, ESR, X-ray structural analysis, ICP, or elemental analysis. Conducting the reaction in the presence of a base makes it possible to obtain an azo metal complex dye with good recording and reproduction characteristics when irradiated with a short wavelength laser beam, as well as light resistance and reproduction durability.

Specific examples of the azo metal complex dye denoted by general formula (G) will be given below. However, the present invention is not limited thereto.

[Table 1]

| Examples compound | Origin of $L^{2-}$(azo dye employed) | Transition metal ion | $X^{n+}$ | (p,q,r) | L' |
|---|---|---|---|---|---|
| Compound (M-1) | (L-34) | $Cu^{2+}$ | $DBUH^+$ | (1,1,0) | - |
| Compound (M-2) | (L-35) | $Cu^{2+}$ | $DBUH^+$ | (1,1,0) | - |
| Compound (M-3) | (L-36) | $Cu^{2+}$ | $DBUH^+$ | (1,1,0) | - |
| Compound (M-4) | (L-37) | $Cu^{2+}$ | $^iPr_2NH_2^+$ | (1,1,0) | - |
| Compound (M-5) | (L-5) | $Cu^{2+}$ | $DBUH^+$ | (1,1,0) | - |
| Compound (M-6) | (L-38) | $cu^{2+}$ | $DBUH^+$ | (1,1,0) | - |
| Compound (M-7) | (L-39) | $Cu^{2+}$ | $Et_3NH^+$ | (1,1,0) | - |
| Compound (M-8) | (L-40) | $Cu^{2+}$ | $DBUH^+$ | (1,1,0) | - |
| Compound (M-9) | (L-41) | $Cu^{2+}$ | $DBUH^+$ | (1,1,0) | - |
| Compound (M-10) | (L-42) | $Cu^{2+}$ | $DBUH^+$ | (1,1,0) | - |
| Compound (M-11) | (L-11) | $Cu^{2+}$ | $^iPr_2NH_2^+$ | (1,1,0) | - |
| Compound (M-12) | (L-11) | $Cu^{2+}$ | $DBUH^+$ | (1,1,0) | - |
| Compound (M-13) | (L-11) | $Cu^{2+}$ | $DBUH^+$ | (1,1,0) | - |
| Compound (M-14) | (L-11) | $Cu^{2+}$ | $NH_4^+$ | (1,1,0) | - |
| Compound (M-15) | (L-43) | $Cu^{2+}$ | $DBUH^+$ | (1,1,0) | - |
| Compound (M-16) | (L-43) | $Cu^{2+}$ | $^iPr_2NH_2^+$ | (1,1,0) | - |
| Compound (M-17) | (L-47) | $Cu^{2+}$ | $^iPr_2NH_2^+$ | (1,1,0) | - |
| Compound (M-18) | (L-47) | $Cu^{2+}$ | $DBUH^+$ | (1,1,0) | - |
| Compound (M-19) | (L-47) | $Cu^{2+}$ | $Et_3NH^+$ | (1,1,0) | - |
| Compound (M-20) | (L-47) | $Cu^{2+}$ | $DBUH^+$ | (1,1,0) | - |

[Table 2]

| Example compound | Origin of $L^{2-}$(azo dye employed) | Transition metal ion or starting material of the transition metal ion | $X^{n+}$ | (p,q,r) | L' |
|---|---|---|---|---|---|
| Compound (M-21) | (L-17) | $Cu^{2+}$ | $^{i}Pt2-NH_2^+$ | (1,1,0) | - |
| Compounds (M-22) | (L-17) | $Cu^{2+}$ | $DBUH^+$ | (1,1,0) | - |
| Compound (M-23) | (L-17) | $Cu^{2+}$ | $Et_3NH^+$ | (1,1,0) | - |
| Compound (M-24) | (L-17) | $Cu^{2+}$ | $DBUH^+$ | (1,1,0) | - |
| Compound (M-25) | (L-48) | $Cu^{2+}$ | $^{i}Pr_2-NH_2^+$ | (1,1,1) | $NH_3$ |
| Compound (M-26) | (L-49) | $Cu^{2+}$ | $^{i}Pr_2NH_2^+$ | (1,1,0) | - |
| Compound (M-27) | (L-50) | $Cu^{2+}$ | $DBUH^+$ | (1,1,0) | - |
| Compound (M-28) | (L-51) | $Cu^{2+}$ | $^{i}Pr_2NH_2^+$ | (1,1,0) | - |
| Compound (M-29) | (L-52) | $Cu^{2+}$ | $^{i}Pr_2NH_2^+$ | (1,1,0) | - |
| Compound (M-30) | (L-53) | $Cu^{2+}$ | $DBUH^+$ | (1,1,0) | - |
| Compound (M-31) | (L-54) | $Cu^{2+}$ | $DBUH^+$ | (1,1,0) | - |
| Compound (M-32) | (L-55) | $Cu^{2+}$ | $^{i}Pr_2NH_2^+$ | (1,1,0) | - |
| Compound (M-33) | (L-11) | $Co(CH_3COO)_2 \cdot 4H_2O$ | $^{i}Pr_2NH_2^+$ | (1,1,0) | - |
| Compound (M-34) | (L-11) | $Ni(CH_3COO)_2 \cdot 4H_2O$ | $^{i}Pr_2NH_2,^+$ | (1,1,0) | - |
| Compounds (M-35) | (L-11) | $FeCl_2 \cdot 4H_2O$ | $^{i}Pr_2NH_2^+$ | (1,1,0) | - |
| Compound (M-36) | (L-11) | $Zn(CH_3COO)_2$ | $^{i}Pr_2NH_2^+$ | (1,1,0) | - |
| Compound (M-37) | (L-11) | $Co(CH_3COO)_2 \cdot 4H_2O$ | $DBUH^+$ | (1,1,0) | - |
| Compound (M-38) | (L-11) | $Ni(CH_3COO)_2 \cdot 4H_2O$ | $DBUH^+$ | (1,1,0) | - |
| Compound (M-39) | (L-11) | $FeCl_2 \cdot 4H_2O$ | $DBUH^+$ | (1,1,0) | - |
| Compound (M-40) | (L-11) | $Zn(CH_3COO)_2 \cdot 2H_2O$ | $DBUH^+$ | (1,1,0) | - |

In the azo metal complex dye, the valence of the metal ion will sometimes change with differences in metal ions and differences in the environment (solution, solid) in which the azo metal complex dye is present. When the coordination structure changes, the coordination structure obtained can be a pentanuclear complex comprised of five metal ions and four azo dye molecules, a heptanuclear complex comprised of seven metal ions and six azo dye molecules, a decanuclear complex comprised of 10 metal ions and eight azo dye molecules, a dinuclear complex comprised of two metal ions and two azo dye molecules, or the like. Cases in which a mixture of these compounds is present are also conceivable. When the valence of the metal ion changes, the charge and number of the counter salt can also change. Thus, the counter salt of the metal chelate dye of the azo dye and metal ion is not specifically limited other than that it be formed with the ion necessary to neutralize the charge. An example of the ion forming the counter salt is the ion denoted by G in general formula (F) further below. However, this is not a limitation.

An example of a desirable form of a heptanuclear complex is the azo metal complex dye denoted by general formula (G) above. A desirable example of a pentanuclear metal complex is the azo metal complex dye denoted by general formula (F) below, which is comprised of five copper ions and four of the azo dye molecules denoted by general formula (1). In general formula (F), copper ions are bonded to each of the two nitrogen atoms on the pyrazole ring shown in general formula (A) above. These structures are thought to be stabilized by dissociation of the hydrogen atom denoted by $Y^1$.

[Chem. 21]

General formula (F) $[(Cu)_5(L^{2-})_4(L')x] \cdot G_v$

[In formula (F), $L^{2-}$ denotes a divalent anion in which two hydrogen atoms have dissociated from the azo dye denoted by general formula (1), G denotes the ion necessary to neutralize the charge, v denotes an integer falling within a range of 0 to 2, L' denotes a ligand, and x denotes an integer falling within a range of 0 to 6.]

General formula (F) will be described below.

In general formula (F), $L^{2-}$ denotes a divalent anion in which two hydrogen atoms have dissociated from the azo dye denoted in general formula (1). The details of general formula (1) are as set forth above.

In general formula (F), L' denotes a ligand. The ligand denoted by L' is as described for L' in general formula (G) above.

In general formula (F), G denotes an ion necessary to neutralize the charge and v denotes an integer falling within a range of 0 to 2.

G changes based on the valence of the Cu. When all of the Cu is present as divalent cations, the counter anions in the Cu salt, which is a starting material for synthesizing the azo metal complex, function as G. Examples of G are an acetic acid anion, an anion created by dissociating a hydrogen atom from acetyl acetone, halogen ions, sulfuric acid ions, nitric acid ions, and hydroxide ions. Depending on the environment in which it is present, even monovalent Cu can be stable. In that case, G can conceivably be a cation. An example of this cation is that obtained by protonating a base employed during synthesis. An organic base is desirable as the base. Examples of organic bases are primary to tertiary amines having 1 to 30 carbon atoms (such as triethylamine, diisopropylamine, pyrrolidine, N-methylpyrrolidine, and n-butylamine), amidines (such as DBU (1,8-diazabicyclo[5.4.0]-7-undecene) and DBN (1,5-diazabicyclo[4.3.0]-5-nonene)), guanidines (such as tetramethylguanidine), nitrogen-containing hetero rings (such as pyridine and imidazole), and tetrabutylammonium hydroxide. Primary to tertiary amines having 1 to 30 carbon atoms are desirable, primary to tertiary amines having 1 to 20 carbon atoms are preferable, primary to tertiary amines having 1 to 10 carbon atoms are of greater preference, and secondary and tertiary amines having 1 to 10 carbon atoms are of particular preference as organic bases.

When all the Cu is present in divalent form, v becomes 2. When the Cu is present in monovalent form, v becomes an integer falling within a range of 0 to 2.

In general formula (F), x denotes an integer falling within a range of 0 to 6. From the perspective of recording characteristics, x desirable denotes an integer falling within a range of 0 to 4, preferably denotes an integer falling within a range of 0 to 3, more preferably denotes an integer falling within a range of 0 to 2, and still more preferably, is 0 or 1. This is because the smaller x becomes, the greater the content of azo ligands per molecule, and the greater the recording sensitivity that can be anticipated.

In the azo metal complex dye denoted by general formula (F), the azo ligands are present as divalent anions in the manner set forth below. However, there is no limitation to two of the anions on the ligands being localized as indicated below. The case where they are not localized is also included.

[Chem. 22]

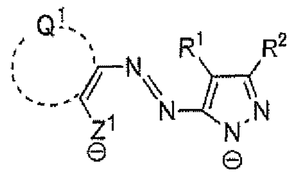

[In the above, $Z^1$ denotes a group consisting of the Y in general formula (1) from which one hydrogen atom has dissociated; and $Q^1$, $R^1$, and $R^2$ are defined as in general formula (1).]

The structure that was elucidated by X-ray structural analysis of the azo metal complex obtained by reacting compound (A-0) -- an analog of the azo metal complex dye denoted by general formula (F) -- with copper ions in the presence of triethylamine will be described here.

When compound (A-0) forms a metal complex with copper ions, the structure of the ligands of compound (A-0) is one in which copper ions are bonded at positions (1) to (3) indicated by the arrows in compound (A-1). When these ligands form a complex with copper ions, the result is a metal chelate in which five copper ions are bonded to four ligands. When the five copper ions are referred to as copper ions 1 to 5, the four ligands are referred to as ligands 1 to 4, positions (1) to (3) above in ligand 1 are referred to as ligand 1(1) to ligand 1(3), and these positions in ligand 2 are referred to as ligands 2(1) to 2(3), a structure has been confirmed in which ligands 1(1) and 2(2) are bonded to copper ion 1, ligands 1(2) and 3(1) are bonded to copper ion 2, ligands 2(1) and 4(1) are bonded to copper ion 3, ligands 3(2) and 4(1) are bonded to copper ion 4, and ligands 1(3), 2(3), 3(3), and 4(3) are bonded to copper ion 5, which is positioned in the center surrounded by copper ions 1 to 4, in the metal chelate.

The coordination structure of the azo metal complex in general formula (F) can also be identical to the above coordination structure. However, the constituent elements within the molecule are not limited to azo dyes and metal ions. Cases in which jointly present anions, cations, solvent molecules, and bases are added are also included.

[Chem. 23]

Compound (A-0)

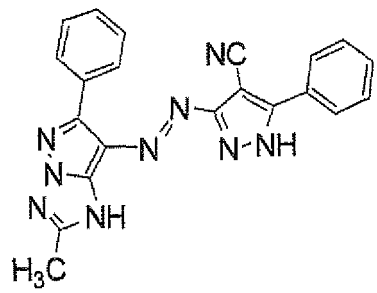

Compound (A-1)

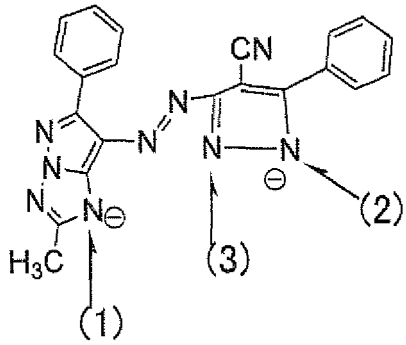

When the molecular weight of the molecule formed by the four azo ligand molecules and the five transition metal molecules is denoted as M when identifying azo metal complexes obtained by reacting compound (A-0) with copper ions in the presence of triethylamine and similarly synthesized azo metal complexes by ESI-TOF-MS, there are cases where it will be detected at a peak of M and cases where it will be detected at a peak of M/2. Monodentate ligands (in the base, solvent, or the like) are seldom detected as complexes, but could conceivably be detected as fragments. The fact that a base or the like is contained as part of a complex can be confirmed by thermal analysis (such as TG/DTA) from the fact that the weight reduction starting temperature of the azo metal complex is higher than the boiling point of the base or solvent.

Additionally, even when the peak of a molecule formed of two azo dye molecules and two transition metal ions is detected by MS, analysis of the Cu content by ICP or the like will sometimes be consistent with a molecule in which 0 to several bases are contained in the four azo dye molecules and the five transition metal ions. There will also be cases in which it is consistent with a molecule in which 0 to several bases are contained in two azo dye molecules and two transition metal ions. When conducting identification by ESI-MS or MALDI-MS, two azo dye molecules and two transition metal ions, and two azo dye molecules and three transition metal ions, are often detected as fragments in azo metal complexes of four azo dye molecules and five transition metal ions. The azo metal complex dye contained in the recording layer of the optical information recording medium of the present invention contains two or more transition metal ions per molecule. Examples of desirable forms are:

(1) the form generating results indicating that two azo dye molecules and two transition metal ions are contained per molecule when analyzed by one or more members selected from the group consisting of ESI-MS, MALDT-MS, and X-ray structural analysis;
(2) the form generating results indicating that four azo dye molecules and five transition metal ions are contained per molecule when analyzed by one or more members selected from the group consisting of ESI-MS, MALDI-MS, and X-ray structural analysis; and
(3) the form generating results indicating that six azo dye molecules and seven transition metal ions are contained per molecule when analyzed by one or more members selected from the group consisting of ESI-MS, MALDI-MS, and X-ray structural analysis.

The azo metal complex dye denoted by general formula (F) is an example of the azo metal complex dye corresponding to (2) above. The azo metal complex dye denoted by general formula (G) is an example of an azo metal complex dye corresponding to (3) above. There are also cases where measurement by various forms of MS and measurement of the Cu content identify a molecule formed of two azo dye molecules and two transition metal ions. The azo metal complex dye denoted by general formula (H) below is desirable as such an azo metal complex dye. The presence of the structure denoted by general formula (H) can be confirmed by X-ray structural analysis or the like.

General formula (H) will be described next. A solid line connecting two atoms denotes a covalent bond and a dotted line denotes a coordination bond in structural formulas in the present invention.

[Chem. 24]

General formula (H)

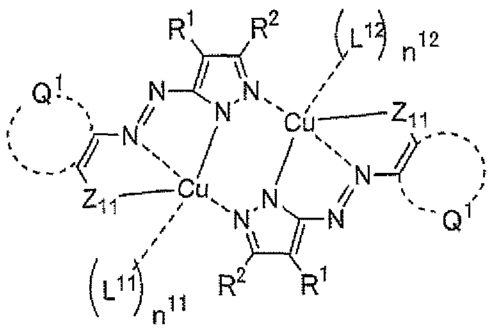

In general formula (H), $Z^{11}$ denotes a group consisting of the following partial structure:

[Chem. 25]

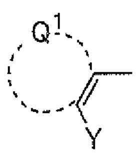

in which a hydrogen atom has dissociated from Y. In the above partial structure, $R^1$ and $R^2$ are each defined as in general formula (1). The details are as set forth above. In general formula (H), the two instances of each of $Q^1$, $Z^{11}$, $R^1$, and $R^2$ may be identical or different.

Each of $L^{11}$ and $L^{12}$ independently denotes a ligand. $L^{11}$ and $L^{12}$ are both defmed identically with L' above, and have the same desirable ranges and the like.

Each of $n^{11}$ and $n^{12}$ independently denotes an integer falling within a range of 0 to 2. When present, multiple instances of $L^{11}$ and $L^{12}$ may be identical or different.

In general formula (H), $R^1$ desirably denotes a cyano group, $R^2$ desirably denotes a substituted or unsubstituted alkyl group with 1 to 4 carbon atoms, the following partial structure:

[Chem. 26]

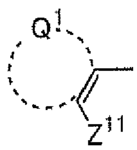

desirably denotes any one from among (E-1) to (E-3) and (E-8) in which a hydrogen atom contained in the Y portion has dissociated, and $L^{11}$ and $L^{12}$ denote organic bases. Preferably, $R^1$ denotes a cyano group, $R^2$ denotes a substituted

or unsubstituted alkyl group with 2 to 4 carbon atoms, the following partial structure:

[Chem. 27]

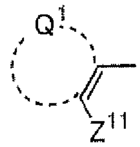

denotes any one from among (E-1), (E-3), and (E-8) in which a hydrogen atom contained in the Y portion has dissociated, and $L^{11}$ and $L^{12}$ denote organic bases. More preferably, $R^1$ denotes a cyano group, $R^2$ denotes a substituted or unsubstituted alkyl group with 2 or 3 carbon atoms, the following partial structure:

[Chem. 28]

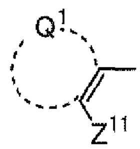

denotes either (E-1) or (E-3) in which a hydrogen atom contained in the Y portion has dissociated, and $L^{11}$ and $^{12}$ denote organic bases. Still more preferably, the above partial structure containing $Q^1$ and $Z^{11}$ denotes any one from among (E-1), (E-3), and (E-8) in which a hydrogen atom contained in the Y portion has dissociated, and even still more preferably, it denotes (E-1) or (E-8) in which a hydrogen atom contained in the Y portion has dissociated.

As a specific example of general formula (H), Compound (M-65) described further below was determined based on the results of X-ray structural analysis to have the following structure. A single crystal was prepared by dissolving (M-65) in DMAc and storing the solution for an extended period in a methanol atmosphere. Although this compound exhibited both a peak corresponding to general formula (F) and a peak consistent with the following structure in ESI-MS, based on the results of X-ray structural analysis, it was successfully identified as the following structure. The single crystal and the powder employed to manufacture the single crystal exhibited matching spectral absorption wavelengths in chloroform.

[Chem. 29]

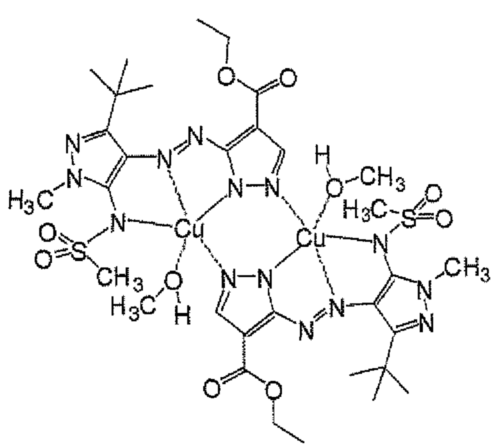

The azo metal complex dye denoted by general formula (F) or general formula (H) can be obtained by reacting

the azo dye denoted by general formula (1) with a Cu salt. The reaction is desirably conducted in the presence of a base. The base employed is desirably an organic base. This is because when an inorganic base is employed, the metal ions in the base form ion pairs with the azo ligands, making it difficult to obtain the desired azo metal complex. The organic bases set forth above are examples of this organic base. An alcohol such as methanol can be employed as the solvent as set forth above. Since the ligand denoted by L' in general formula (F) and the ligands denoted by $L^{11}$ and $L^{12}$ in general formula (H) are derived from the base or the solvent, an azo metal complex dye having the desired ligands can be obtained through the selection of the base and solvent.

Specific examples of the azo metal complex dyes denoted by general formulas (F) and (H) will be given below. However, the present invention is not limited to these specific examples. For the reasons stated above, the compounds indicated in the specific examples below can assume the structure denoted by either one of, or both, general formulas (F) and (H).

[Table 3]

| Example compound | Origin of $L^{2-}$ (azo dye employed) | Starting material of transition metal ion | Base employed |
|---|---|---|---|
| Compound (M-41) | (L-1) | $Cu(CH_3COO)_2 \cdot H_2O$ | $Et_3N$ |
| Compound (M-42) | (L-2) | $Cu(CH_3COO)_2 \cdot H_2O$ | $Et_3N$ |
| Compound (M-43) | (L-3) | $Cu(CH_3COO)_2 \cdot H_2O$ | $Et_3N$ |
| Compound (M-44) | (L-4) | $Cu(CH_3COO)_2 \cdot H_2O$ | $Et_3N$ |
| Compound (M-45) | (L-5) | $CU(CH_3COO)_2 \cdot H_2O$ | $Et_3N$ |
| Compound (M-46) | (L-6) | $Cu(CH_3COO)_2 \cdot H_2O$ | $Et_3N$ |
| Compound (M-47) | (L-7) | $Cu(CH_3COO)_2 \cdot H_2O$ | $Et_3N$ |
| Compound (M-48) | (L-8) | $Cu(CH_3COO)_2 \cdot H_2O$ | DBU |
| Compound (M-49) | (L-9) | $Cu(CH_3COO)_2 \cdot H_2O$ | $Et_3N$ |
| Compound (M-50) | (L-10) | $Cu(CH_3COO)_2 \cdot H_2O$ | DBU |
| Compound (M-51) | (L-11) | $Cu(CH_3COO)_2 \cdot H_2O$ | DBU |
| Compound (M-52) | (L-12) | $Cu(CH_3COO)_2 \cdot H_2O$ | DBU |
| Compound (M-53) | (L-13) | $Cu(CH_3COO)_2 \cdot H_2O$ | DBU |
| Compound (M-54) | (L-14) | $Cu(CH_3COO)_2 \cdot H_2O$ | DBU |
| Compound (M-55) | (L-15) | $Cu(CH_3COO)_2 \cdot H_2O$ | $Et_3N$ |
| Compound (M-56) | (L-16) | $Cu(CH_3COO)_2 \cdot H_2O$ | $iPr_2NH$ |
| Compound (M-57) | (L-17) | $Cu(CH_3COO)_2 \cdot H_2O$ | DBU |
| Compound (M-58) | (L-18) | $Cu(CH_3COO)_2 \cdot H_2O$ | $Et_3N$ |
| Compound (M-59) | (L-20) | $Cu(CH_3COO)_2 \cdot H_2O$ | DBU |
| Compound (M-60) | (L-23) | $Cu(CH_3COO)_2 \cdot H_2O$ | DBU |

[Table 4]

| Example compound | Origin of $L^{2-}$ (azo dye employed) | Starting material of transition metal ion | Base employed |
|---|---|---|---|
| Compound (M-61) | (L-1) | $Cu(CH_3COO)_2 \cdot H_2O$ | DBU |
| Compound (M-62) | (L-1) | $Cu(CH_3COO)_2 \cdot H_2O$ | $^nPr_2NH$ |
| Compound (M-63) | (L-1) | $Cu(CH_3COO)_2 \cdot H_2O$ | Pyrrolidine |
| Compound (M-64) | (L-1) | $CuSO_4 \cdot 5H_2O$ | $Et_3N$ |

(continued)

| Example compound | Origin of $L^{2-}$ (azo dye employed) | Starting material of transition metal ion | Base employed |
|---|---|---|---|
| Compound (M-65) | (L-1) | $CuCl_2 \cdot 2H_2O$ | $Et_3N$ |
| Compound (M-66) | (L-9) | $Cu(CH_3COO)_2 \cdot H_2O$ | DBU |
| Compound (M-67) | (L-11) | $Cu(CH_3COO)_2 \cdot H_2O$ | $^iPr_2NH$ |
| Compound (M-68) | (L-14) | $Cu(CH_3COO)_2 \cdot H_2O$ | $Et_3N$ |
| Compound (M-69) | (L-14) | $Cu(CH_3COO)_2 \cdot H_2O$ | $^iPr_2NH$ |
| Compound (M-70) | (L-14) | $Cu(CH_3COO)_2 \cdot H_2O$ | Pyrrolidine |
| Compound (M-71) | (L-15) | $Cu(CH_3COO)_2 \cdot H_2O$ | DBU |
| Compound (M-72) | (L-15) | $Cu(CH_3COO)_2 \cdot H_2O$ | $^iPr_2NH$ |
| Compound (M-73) | (L-15) | $Cu(CH_3COO)_2 \cdot H_2O$ | Pyrrolidine |
| Compound (M-74) | (L-17) | $Cu(CH_3COO)_2 \cdot H_2O$ | DBU |
| Compound (M-75) | (L-22) | $Cu(CH_3COO)_2 \cdot$ | DBU |
| Compound (M-76) | (L-23) | $Cu(CH_3COO)_2 \cdot H_2O$ | $Et_3N$ |
| Compound (M-77) | (L-24) | $Cu(CH_3COO)_2 \cdot H_2O$ | DBN |
| Compound (M-78) | (L-31) | $Cu(CH_3COO)_2 \cdot H_2O$ | DBU |
| Compound (M-79) | (L-32) | $Cu(CH_3COO)_2 \cdot H_2O$ | $Et_3N$ |
| Compound (M-80) | (L-33) | $Cu(CH_3COO)_2 \cdot H_2O$ | $Et_3N$ |

Furthermore, the azo dye denoted by general formula (3) below is an example of the azo dye having the partial structure (A).

[Chem. 30]

General formula (3)

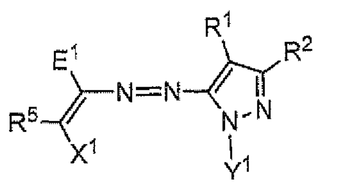

In general formula (3), $R^1$, $R^2$, and $Y^1$ are defined as in general formula (A) and the details of their desirable ranges and the like are identical thereto.

In general formula (3), $R^5$ denotes a substituent. As a substituent, it is not specifically limited; examples are alkyl groups (including cycloalkyl and bicycloalkyl groups), alkenyl groups (including cycloalkenyl groups and bicycloalkenyl groups), alkynyl group, aryl groups, heterocyclic groups, hydroxyl groups, alkoxy groups, aryloxy groups, silyloxy groups, heterocyclic oxy groups, acyloxy groups, acyl groups, aryloxycarbonyl groups, alkoxycarbonyl groups, carbamoyl groups, amino groups (including anilino groups), acylamino groups, mercapto groups, alkylthio groups, arylthio groups, and heterocyclic thio groups.

More particularly, $R^5$ denotes an alkyl group [linear, branched, or cyclic substituted or unsubstituted alkyl group in the form of an alkyl group (desirably an alkyl group having 1 to 30 carbon atoms, such as a methyl group, ethyl group, n-propyl group, isopropyl group, t-butyl group, n-octyl group, eicosyl groups, 2-chloroethyl group, 2-cyanoethyl group, 2-ethylhexyl group, or trifluoromethyl group), cycloalkyl group (desirably a substituted or unsubstituted cycloalkyl group having 3 to 30 carbon atoms, such as a cyclohexyl group, cyclopentyl group, or 4-n-dodecylcyclohexyl group), bicycloalkyl group (desirably a substituted or unsubstituted bicycloalkyl group having 5 to 30 carbon atoms, that is, a monovalent group generated by removing a hydrogen atom from a bicycloalkane having 5 to 30 carbon atoms, such as bicydo[1.1.2] heptane-2-yl group or bicyclo[2.2.2]octane-3-yl group), and further including those with numerous ring structures, including a tricyclo structure; the alkyl groups in the substituents set forth below (such as the alkyl group in an alkylthio

group) also denote alkyl groups consistent with this concept]; an alkenyl group [linear, branched, or cyclic substituted or unsubstituted alkenyl group in the form of an alkenyl group (desirably a substituted or unsubstituted alkenyl group having 2 to 30 carbon atoms, such as a vinyl group, allyl group, prenyl group, geranyl group, or oleyl group), cycloalkenyl group (desirably a substituted or unsubstituted cycloalkenyl group having 3 to 30 carbon atoms, that is, a monovalent group generated by removing a hydrogen atom from a cycloalkene having 3 to 30 carbon atoms, such as 2-cyclopentene-1-yl and 2-cyclohexene-1-yl), bicycloalkenyl group (substituted or unsubstituted bicyloalkenyl group, desirably a substituted or unsubstituted bicycloalkenyl group having 5 to 30 carbon atoms, that is, a monovalent group generated by removing a hydrogen atom from a bicycloalkene having a double bond, such as a bicyclo[2.2.1]hepto-2-ene-1-yl group or a bicyclo[2.2.2]octo-2-ene-4-yl group)]; alkynyl group (desirably a substituted or unsubstituted alkynyl group having 2 to 30 carbon atoms, such as an ethynyl group, propargyl group, trimethylsilylethynyl group, or aryl group (desirably a substituted or unsubstituted aryl group having 6 to 30 carbon atoms, such as a phenyl group, p-tolyl group, naphthyl group, m-chlorophenyl group, o-hexadecanoylaminophenyl group), heterocyclic group (desirably a monovalent group generated by removing a hydrogen atom from a five or six-membered substituted or unsubstituted aromatic or nonaromatic heterocyclic compound, preferably a five or six-membered aromatic heterocyclic group having 3 to 30 carbon atoms, such as a 2-furyl group, 2-thienyl group, 2-pyrimidinyl group, or 2-benzothiazolyl group); hydroxyl group; alkoxy group (desirably a substituted or unsubstituted alkoxy group having 1 to 30 carbon atoms, such as a methoxy group, ethoxy group, isopropoxy group, t-butoxy group, n-octyloxy group, or 2-methoxyethoxy group); aryloxy group (desirably a substituted or unsubstituted aryloxy group having 6 to 30 carbon atoms, such as a phenoxy group, 2-methylphenoxy group, 4-t-butylphenoxy group, 3-nitrophenoxy group, or 2-tetradecanoylaminophenoxy group); silyloxy group (desirably a silyloxy group having 3 to 20 carbon atoms, such as a trimethylsilyloxy group or t-butyldimethylsilyloxy group), heterocyclic oxy group (desirably a substituted or unsubstituted heterocyclic oxy group with 2 to 30 carbon atoms, 1-phenyltetrazol-5-oxy group, or 2-tetrahydropyranyloxy group); acyloxy group (desirably a formyloxy group, substituted or unsubstituted alkylcarbonyloxy group with 2 to 30 carbon atoms, or substituted or unsubstituted arylcarbonyloxy group with 6 to 30 carbon atoms, such as a formyloxy group, acetyloxy group, pivaloyloxy group, stearoyloxy group, benzoyloxy group, or p-methoxyphenylcarbonyloxy group); aryloxycarbonyl group (desirably a substituted or unsubstituted aryloxycarbonyl group having 7 to 30 carbon atoms, such as a phenoxycarbonyl group, o-chlorophenoxycarbonyl group, m-nitrophenoxycarbonyl group, or p-t-butylphenoxycarbonyl group); alkoxycarbonyl group (desirably a substituted or unsubstituted alkoxycarbonyl group having 2 to 30 carbon atoms, such as a methoxycarbonyl group, ethoxycarbonyl group, t-butoxycarbonyl group, or n-octadecyloxycarbonyl group); carbamoyl group (desirably a substituted or unsubstituted carbamoyl group having 1 to 30 carbon atoms, such as a carbamoyl group, N-methylcarbamoyl group, N,N-dimethylcarbamoyl group, N,N-di-n-octylcarbamoyl group, or N-(methylsulfonyl)carbamoyl group); amino group (desirably an amino group, substituted or unsubstituted alkylamino group having 1 to 30 carbon atoms, substituted or unsubstituted anilino group having 6 to 30 carbon atoms, such as an amino group, methylamino group, dimethylamino group, anilino group, N-methylanilino group, or diphenylamino group); acylamino group (desirably a formylamino group, substituted or unsubstituted alkylcarbonylamino group having 1 to 30 carbon atoms, or substituted or unsubstituted arylcarbonylamino group having 6 to 30 carbon atoms, such as a formylamino group, acetylamino group, pivaloylamino group, lauroylamino group, benzoylamino group, or 3,4,5-tri-n-octyloxyphenylcarbonylamino group); mercapto group; alkylthio group (desirably a substituted or unsubstituted alkylthio group having 1 to 30 carbon atoms, such as a methylthio group, ethylthio group, or n-hexadecylthio group); arylthio group (desirably a substituted or unsubstituted arylthio group having 6 to 30 carbon atoms, such as a phenylthio group, p-chlorophenylthio group, or m-methoxyphenylthio group); heterocyclic thio group (desirably a substituted or unsubstituted heterocyclic thio group having 2 to 30 carbon atoms, such as a 2-benzothiazolylthio group, or 1-phenyltetrazol-5-ylthio group); or the like.

In those of the above functional groups that comprise a hydrogen atom, the hydrogen atom can be removed and one of the above groups present in its place.

The above $R^5$ desirably denotes a methyl group, ethyl group, normal propyl group, isopropyl group, normal butyl group, isobutyl group, sec-butyl group, tert-butyl group, benzyl group, 4-cyclobenzyl group, 2,4-dichlorobenzyl group, phenyl group, 2-methylphenyl group, 3-methylphenyl group, 4-methylphenyl group, 4-chorophenyl group, 2-methoxyphenyl group, 3-methoxyphenyl group, 4-methoxyphenyl group, oxazole ring group, thiazole ring group, imidazole ring group, pyrazole ring group, triazole ring group, isooxazole ring group, furan ring group, or thiophene ring group; preferably denotes an isopropyl group, tert-butyl group, benzyl group, phenyl group, 4-methylphenyl group, 4-chlorophenyl group, 2-methoxyphenyl group, thiazole ring group, imidazole ring group, pyrazole ring group, triazole ring group, furan ring group, or thiophene ring group; more preferably denotes a tert-butyl group, phenyl group, 4-chlorophenyl group, or 2-methoxyphenyl group; and optimally denotes a tert-butyl group or a phenyl group.

In general formula (3), $X^1$ denotes a group represented by $OR^8$, $SR^8$, or $NR^9R^{10}$; desirably denotes a group represented by $OR^8$ or $NR^9R^{10}$; and preferably denotes a group represented by $OR^8$.

Each of $R^8$ and $R^9$ independently denotes a hydrogen atom (dissociating hydrogen atom) that may dissociate during formation of the azo metal complex dye. The azo dye denoted by general formula (3) can become a monovalent anionic ligand through the dissociation of a dissociating hydrogen atom, and can become a divalent anionic ligand

through the dissociation of two hydrogen atoms.

$R^{10}$ denotes a hydrogen atom or a substituent. The substituent denoted by $R^{10}$ is not specifically limited. Examples are the substituents given by way of example in the description of $R^5$ in general formula (3). $R^{10}$ desirably denotes a methyl group, ethyl group, normal propyl group, isopropyl group, normal butyl group, isobutyl group, sec-butyl group, tert-butyl group, benzyl group, 4-chlorobenzyl group, 2,4-dichlrobenzyl group, phenyl group, 2-methylphenyl group, 3-methylphenyl group, 4-methylphenyl group, 4-chlorophenyl group, 2-methoxyphenyl group, 3-methoxyphenyl group, 4-methoxyphenyl group, oxazole ring group, thiazole ring group, imidazole ring group, pyrazole ring group, triazole ring group, isooxazole ring group, furan ring group, or thiophene ring group; preferably denotes an isopropyl group, tert-butyl group, benzyl group, phenyl group, 4-methylphenyl group, 4-chlorophenyl group, 2-methoxyphenyl group, thiazole ring group, imidazole ring group, pyrazole ring group, triazole ring group, furan ring group, or thiophene ring group; and more preferably, denotes a tert-butyl group, phenyl group, 4-chlorophenyl group, or 2-methoxyphenyl group.

$E^1$ denotes a cyano group, partial structural formula (I) below, or partial structural formula (J) below. $E^1$ desirably denotes a cyano group or partial structural formula (I) below, and preferably denotes a cyano group.

[Chem. 31]

Partial structural formula (I)

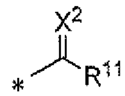

In partial structural formula (I), $R^{11}$ denotes a substituent; $X^2$ denotes an oxygen atom, sulfur atom, or the group denoted by N-$R^{12}$, where $R^{12}$ denotes a substituent; and * denotes a carbon atom or a bond position.

The substituent denoted by $R^{11}$ is not specifically limited. Examples are the substituents given by way of example for the substituent denoted by $R^5$. $R^{11}$ desirably denotes a methyl group, ethyl group, normal propyl group, isopropyl group, normal butyl group, isobutyl group, sec-butyl group, tert-butyl group, benzyl group, 4-chlorobenzyl group, 2,4-dichlorobenzyl group, phenyl group, 2-methylphenyl group, 3-methylphenyl group, 4-methylphenyl group, 4-chlorophenyl group, 2-methoxyphenyl group, 3-methoxyphenyl group, 4-methoxyphenyl group, oxazole ring group, thiazole ring group, imidazole ring group, pyrazole ring group, triazole ring group, isooxazole ring group, furan ring group, thiophene ring group, trifluoromethyl group, ethoxycarbonyl group, or phenoxycarbonyl group; preferably denotes an isopropyl group, tert-butyl group, benzyl group, phenyl group, 4-methylphenyl group, 4-chlorophenyl group, 2-methoxyphenyl group, thiazole ring group, imidazole ring group, pyrazole ring group, triazole ring group, furan ring group, thiophene ring group, trifluoromethyl group, ethoxycarbonyl group, or phenoxycarbonyl group; and more preferably, denotes a tert-butyl group, phenyl group, 4-chlorophenyl group, 2-methoxyphenyl group, trifluoromethyl group, or ethoxycarbonyl group.

In partial structural formula (I), $X^2$ denotes an oxygen atom, sulfur atom, or a group represented by N-$R^{12}$. $X^2$ desirably denotes an oxygen atom or a group represented by N-$R^{12}$, and preferably denotes an oxygen atom.

$R^{12}$ denotes a substituent. The substituent denoted by $R^{12}$ is not specifically limited. Examples are the substituents given by way of example in the description of $R^{10}$, and the desirable scope is identical to that of $R^{12}$.

[Chem. 32]

Partial structural formula (J)

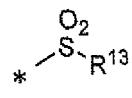

In partial structural formula (J), $R^{13}$ denotes a substituent and * denotes a carbon atom or a bond position.

The substituent denoted by $R^{13}$ is not specifically limited. Examples are the substituents given by way of example for $R^5$, and the desirable scope is identical to that of $R^5$.

In the azo dye denoted by general formula (3), $X^1$ desirably denotes a group represented by $OR^8$. Preferably, $X^1$ denotes a group represented by $OR^8$ and $E^1$ denotes a cyano group or partial structural formula (I). More preferably, $X^1$ denotes a group represented by $OR^8$ and $E^1$ denotes a cyano group. That is, the azo dye denoted by general formula (3) is desirably the azo dye denoted by general formula (4) below.

[Chem. 33]

General formula (4)

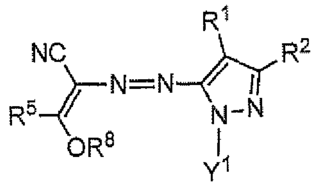

In general formula (4), $R^5$ denotes a substituent; each of $R^1$ and $R^2$ independently denotes a hydrogen atom or a substituent; and each of $R^8$ and $Y^1$ independently denotes a hydrogen atom that can dissociate during formation of the azo metal complex dye.

In general formula (4), $R^1$, $R^2$, $R^5$, $R^8$, and $Y^1$ are defined identically with $R^1$, $R^2$, $R^5$, $R^8$ and $Y^1$ in general formula (3) respectively, and details such as their desirable scopes are identical thereto.

Specific examples of azo dyes denoted by general formulas (3) and/or (4) are given below. However, the present invention is not limited thereto.

[Table 5]

| | Corresponding general formula | Structure of azo dye |
|---|---|---|
| (L-64) | General formula (3)<br>General formula (4) | 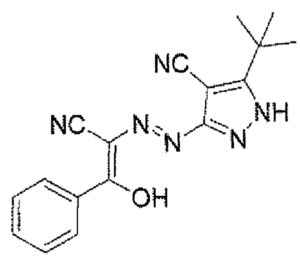 |
| (L-65) | General formula (3)<br>General formula (4) | 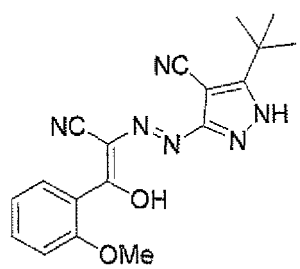 |
| (L-66) | General formula (3)<br>General formula (4) | 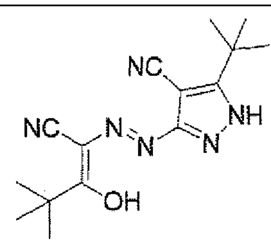 |
| (L-67) | General formula (3)<br>General formula (4) | 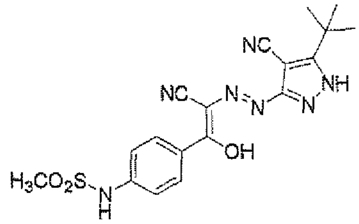 |

(continued)

| | Corresponding general formula | Structure of azo dye |
|---|---|---|
| (L-68) | General formula (3)<br>General formula (4) | 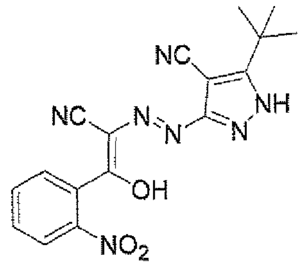 |
| (L-69) | General formula (3)<br>General formula (4) | 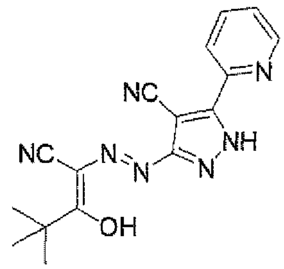 |
| (L-70) | General formula (3)<br>General formula (4) | 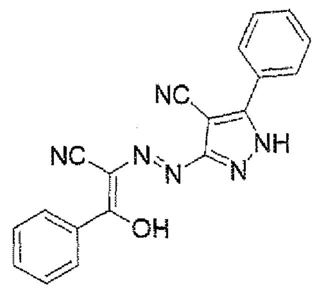 |
| (L-71) | General formula (3)<br>General formula (4) | 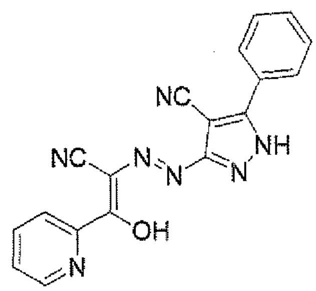 |
| (L-72) | General formula (3) | 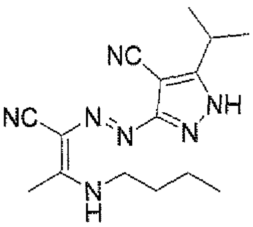 |
| (L-73) | General formula (3) | 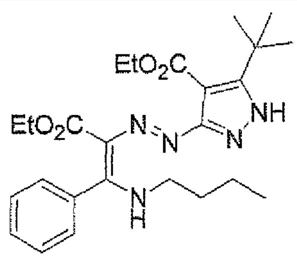 |

(continued)

| | Corresponding general formula | Structure of azo dye |
|---|---|---|
| (L-74) | General formula (3)<br>General formula (4) | 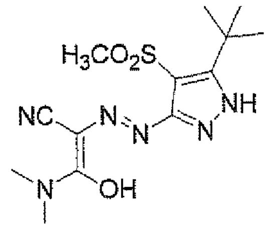 |
| (L-75) | General formula (3) | 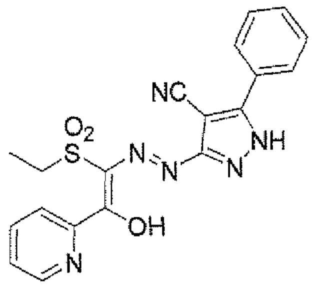 |
| (L-76) | General formula (3) | 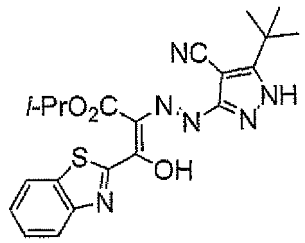 |
| (L-77) | General formula (3)<br>General formula (4) | 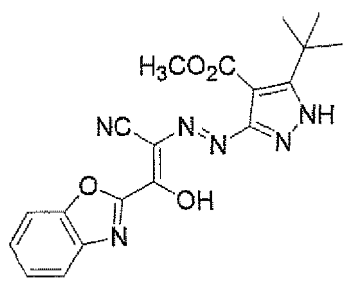 |
| (L-78) | General formula (3) | 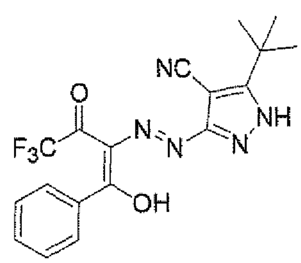 |
| (L-79) | General formula (3) | 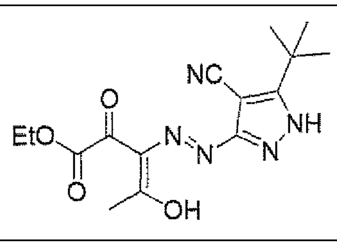 |

The methods described in Japanese Unexamined Patent Publication (KOKAI) Showa No. 61-36362 and English

language family member U.S. Patent No. 4,685,934, and Japanese Unexamined Patent Publication (KOKAI) No. 2006-57076 and English language family member US2008/019615A1, which are expressly incorporated herein by reference in their entirety, are examples of common methods of synthesizing the azo dye denoted by general formula (3) and/or (4). However, there is no limitation to these methods; other reaction solvents and acids may be employed, and the coupling reaction may be conducted in the presence of a base (such as sodium acetate, pyridine, or sodium hydroxide). Specific examples of methods of synthesizing the azo dye are given below.

[Chem. 34]

General formula (3)

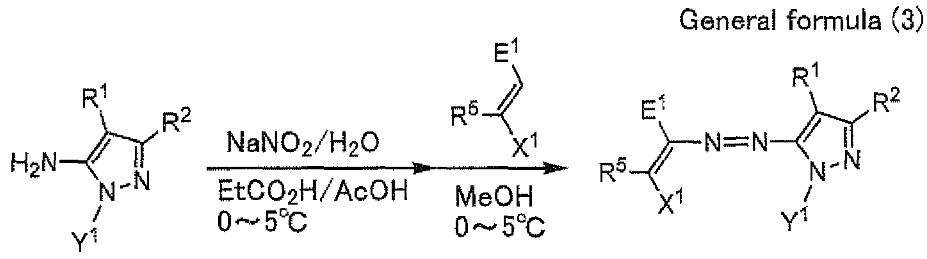


The azo metal complex dye, a complex of metal ions and the azo dye denoted by general formula (3), can be obtained by reacting metal ions with the azo dye denoted by general formula (3). As set forth above, the coordination structure and valence of the metal ions in the azo metal complex dye will differ with the environment in which it is present (solution, powder state, or the like). Coordination structures that can be assumed by the polynuclear azo metal complex dye containing the azo dye denoted by general formula (3) include a pentanuclear complex formed of five metal ions and four azo dye compounds, or a dinuclear complex formed of two metal ions and two azo dye molecules. Mixtures of the two are also conceivable. A change in the valence of the metal ion can result in a change in the charge and number of counter salts, so the counter salt of the metal chelate dye comprised of the azo dye and metal ions is not specifically limited and need only form a counter salt with the ions necessary for neutralizing the charge. Examples of the ion forming the counter salt are acetic acid anions, anions generated by dissociating a hydrogen atom from acetylacetone, halogen ions, sulfuric acid ions, nitric acid ions, and hydroxide ions. Monovalent Cu is also stable depending on the environment, in which case the counter salt may become a cation. Examples of the cation are those generated by protonating the base employed during synthesis. An organic base is desirable as the base. Examples of organic bases are primary to tertiary amines with 1 to 30 carbon atoms (such as triethylamine, diisopropylamine, pyrrolidine, N-methylpyrrolidine, and n-butylamine), amidines (such as DBU (1,8-diazabicyclo[5.4.0]-7-undecene) and DBN (1,5-diazabicyclo[4.3.0]-5-nonene)), guanidines (such as tetramethylguanidine), nitrogen-containing hetero rings (such as pyridine and imidazole), and tetrabutylammonium hydroxide. The organic base is desirably in the form of a primary to tertiary amine with 1 to 30 carbon atoms, preferably in the form of a primary to tertiary amine with 1 to 20 carbon atoms, more preferably in the form of a primary to tertiary amine with 1 to 10 carbon atoms, and still more preferably, a secondary or tertiary amine with 1 to 10 carbon atoms. However, it is not limited thereto.

An example of a general method for the polynuclear azo metal complex dye containing the azo dye denoted by general formula (3) is stirring the azo dye and a metal salt (including metal complexes and metal oxide salts) in an organic solvent, water, or a mixture of the two. A base can be added as needed. However, there is no limitation on the type of metal salt, the type of base, the type of organic solvent or mixture thereof, the reaction temperature, or the like. The type of base is not specifically limited. The reaction is desirably conducted in the presence of a base in the present invention.

The azo metal complex dye denoted by general formula (5) below is desirable as the polynuclear azo metal complex dye obtained by reacting transition metal ions with the azo dye denoted by general formula (3). The azo metal complex dye denoted by general formula (5) is formed of two copper ions and two molecules of the azo dye denoted by general formula (3). In general formula (5), transition metal ions are bonded to the nitrogen atom on the pyrazole ring and the oxygen atom. This structure is thought to be stabilized by dissociation of the hydrogen atom denoted by $Y^1$.

[Chem. 35]

General formula (5)

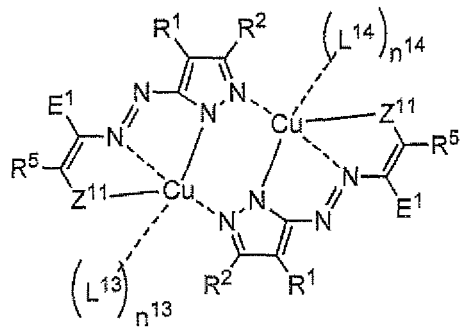

[In general formula (5), $Z^{11}$ denotes a group generated by dissociation of a single hydrogen atom from $X^{11}$ in partial structural formula (K) below; $E^1$, $R^1$, $R^2$, and $R^5$ are defined identically with $E^1$, $R^1$, $R^2$, and $R^5$ in general formula (3), respectively, it being possible for the two instances of each of $E^1$, $Z^{11}$, $R^1$, $R^2$, and $R^5$ in general formula (5) to be identical or different; each of $L^{13}$ and $L^{14}$ independently denotes a ligand; and each of $n^{13}$ and $n^{14}$ denotes an integer ranging from 0 to 2. When $n^{13}$ denotes 2, the two instances of $L^{13}$ that are present may be identical or different, and when $n^{14}$ denotes 2, the two instances of $L^{14}$ that are present may be identical or different.]

[Chem. 36]

Partial structural formula (K)

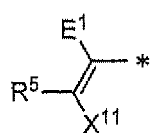

[In partial structural formula (K), $X^{11}$ denotes a group containing a hydrogen atom and an oxygen atom, sulfur atom, or nitrogen atom; $R^5$ and $E^1$ are defined identically with $R^5$ and $E^1$ above, respectively; and * denotes the bond position with a nitrogen atom.]

In general formula (5), each of $L^{13}$ and $L^{14}$ independently denotes a ligand. Details regarding the ligands denoted by $L^{13}$ and $L^{14}$ are as set forth for the ligand denoted by L' in general formula (G) above.

Each of $n^{13}$ and $n^{14}$ independently denotes an integer ranging from 0 to 2. When $n^{13}$ denotes 2, the two instances of $L^{13}$ that are present may be identical or different, and when $n^{14}$ denotes 2, the two instances of $L^{14}$ that are present may be identical or different.

$E^1$, $R^1$, $R^2$, and $R^5$ are defined identically with $E^1$, $R^1$, $R^2$, and $R^5$ in general formula (3), respectively; the details, desirable ranges, and the like are also identical thereto.

In general formula (5), $Z^{11}$ denotes a group generated by dissociation of a single hydrogen atom from $X^{11}$ in partial structural formula (K) above. $X^{11}$ in partial structure formula (K) denotes a group containing a hydrogen atom and an oxygen atom, sulfur atom, or nitrogen atom. The hydrogen atom contained in $X^{11}$ is a dissociating hydrogen atom that dissociates during the formation of the azo metal complex denoted by general formula (5). In partial structural formula (K), $R^5$ and $E^1$ are identically defined with $R^5$ and $E^1$ above, respectively, and * denotes the bond position a nitrogen atom.

Examples of the group denoted by $X^{11}$ are a hydroxyl group; amino group (desirably a substituted or unsubstituted alkylamino group having 1 to 30 carbon atoms or a substituted or unsubstituted anilino group having 6 to 30 carbon atoms, such as an amino group, methylamino group, dimethylamino group, anilino group, N-methylanilino group, or diphenylamino group); acylamino group (desirably a formylamino group, substituted or unsubstituted alkylcarbonylamino group with 1 to 30 carbon atoms, or substituted or unsubstituted arylcarbonylamino group with 6 to 30 carbon atoms, such as a formylamino group, acetylamino group, pivaloylamino group, lauroylamino group, benzoylamino group, or 3,4,5-tri-n-octyloxyphenylcarbonylamino group); aminocarbonylamino group (desirably a substituted or unsubstituted aminocarbonylamino group with 1 to 30 carbon atoms, such as a carbamoylamino group, N,N-dimethylaminocarbonylamino group, N,N-diethylaminocarbonylamino group, or morpholinocarbonylamino group); alkoxycarbonylamino group (desirably a substituted or unsubstituted alkoxycarbonylamino group with 2 to 30 carbon atoms, such as a methoxycarbonylamino group, ethoxycarbonylamino group, t-butoxycarbonylamino group, n-octadecyloxycarbonylamino group, or N-methylmethoxycarbonylamino group); aryloxycarbonylamino group (desirably a substituted or unsubstituted aryloxycarbonylamino group with 7 to 30 carbon atoms, such as a phenoxycarbonylamino group, p-chlorophenoxycarbonylamino group, or m-n-octyloxyphenoxycarbonylamino group); sulfamoylamino group (desirably a substituted or unsubstituted sulfamoylamino group with 0 to 30 carbon atoms, such as a sulfamoylamino group, N,N-dimethylaminosulfonylamino group, or N-n-octylaminosulfonylamino group); or alkyl and arylsulfonylamino group (desirably a substituted or unsubstituted alkylsulfonylamino group with 1 to 30 carbon atoms or substituted or unsubstituted arylsulfonylamino group with 6 to 30 carbon atoms, such as a methylsulfonylamino group, butylsulfonylamino group, phenylsulfonylamino group, 2,3,5-trichlorophenylsulfonylamino group, or p-methylphenylsulfonylamino group).

The group denoted by $X^{11}$ is desirably a hydroxyl group, substituted or unsubstituted sulfamoylamino group with 0 to 4 carbon atoms, substituted or unsubstituted alkylsulfonylamino group with 1 to 4 carbon atoms, or substituted or unsubstituted arylsulfonylamino group with 3 to 10 carbon atoms; preferably a hydroxyl group, substituted or unsubstituted sulfamoylamino group with 0 to 4 carbon atoms, or substituted or unsubstituted alkylsulfonylamino group with 1 to 4 carbon atoms; and more preferably, a hydroxyl group.

In the azo metal complex dye denoted by general formula (5), the azo ligands are present in the form of divalent anions such as those indicated by general formula (6) below. However, there is no limitation that the two anions on the ligands be localized as indicated below; the case where they are not localized is also included.

[Chem. 37]

General formula (6)

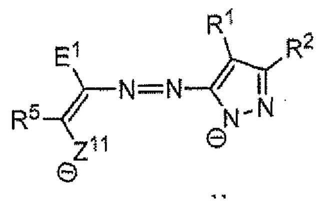

[In the above, $Z^{11}$ denotes a group generated by removing a hydrogen atom from $X^{11}$ in the partial structural formula (K) below; and $E^1$, $R^1$, $R^2$, and $R^5$ are identically defined with $E^1$, $R^1$, $R^2$, and $R^5$ above, respectively.]

Specific examples of the azo metal complex dye denoted by general formula (5) are given below. However, the present invention is not limited thereto.

[Table 6]

| Example compound | Azo dye | Starting material of metal ion | Base in employed in the reaction |
|---|---|---|---|
| Compound (A-1) | (L-64) | $Cu(CH_3COO)_2 \cdot H_2O$ | $Et_3N$ |
| Compound (A-2) | (L-64) | $Cu(CH_3COO)_2 \cdot H_2O$ | DBU |
| Compound (A-3) | (L-65) | $Cu(CH_3COO)_2 \cdot H_2O$ | $^iPr_2NH$ |
| Compound (A-4) | (L-65) | $Cu(CH_3COO)_2 \cdot H_2O$ | $Et_3N$ |
| Compound (A-5) | (L-65) | $Cu(CH_3COO)_2 \cdot H_2O$ | DBU |
| Compound (A-6) | (L-66) | $Cu(CH_3COO)_2 \cdot H_2O$ | $^iPr_2NH$ |
| Compound (A-7) | (L-66) | $Cu(CH_3COO)_2 \cdot H_2O$ | $Et_3N$ |
| Compound (A-8) | (L-67) | $Cu(CH_3COO)_2 \cdot H_2O$ | DBU |
| Compound (A-9) | (L-68) | $Cu(CH_3COO)_2 \cdot H_2O$ | $Et_3N$ |
| Compound (A-10) | (L-69) | $Cu(CH_3COO)_2 \cdot H_2O$ | $Et_3N$ |
| Compound (A-11) | (L-70) | $Cu(CH_3COO)_2 \cdot H_2O$ | DBU |
| Compound (A-12) | (L-71) | $Cu(CH_3COO)_2 \cdot H_2O$ | DBU |
| Compound (A-13) | (L-72) | $Cu(CH_3COO)_2 \cdot H_2O$ | $Et_3N$ |

(continued)

| Example compound | Azo dye | Starting material of metal ion | Base in employed in the reaction |
|---|---|---|---|
| Compound (A-14) | (L-73) | $Cu(CH_3COO)_2 \cdot H_2O$ | DBU |
| Compound (A-15) | (L-74) | $Cu(CH_3COO)_2 \cdot H_2O$ | $Et_3N$ |
| Compound (A-16) | (L-75) | $Cu(CH_3COO)_2 \cdot H_2O$ | DBU |
| Compound (A-17) | (L-76) | $Cu(CH_3COO)_2 \cdot H_2O$ | $Et_3N$ |
| Compound (A-18) | (L-77) | $Cu(CH_3COO)_2 \cdot H_2O$ | $^iPr_2NH$ |
| Compound (A-19) | (L-78) | $Cu(CH_3COO)_2 \cdot H_2O$ | $^iPr_2NH$ |
| Compound (A-20) | (L-79) | $Cu(CH_3COO)_2 \cdot H_2O$ | $^iPr_2NH$ |
| Compound (A-21) | (L-64) | $CuSO_4 \cdot 5H_2O$ | $Et_3N$ |
| Compound (A-22) | (L-64) | $CuCl_2 \cdot 2H_2O$ | $Et_3N$ |
| Compound (A-23) | (L-64) | $Cu(CH_3COO)_2 \cdot H_2O$ | Pyrrolidine |
| Compound (A-24) | (L-64) | $Cu(CH3COO)_2.H_2O$ | $^nPr_2NH$ |
| Compound (A-25) | (L-64) | $CuSO_4 \cdot 5H_2O$ | Pyrrolidine |
| Compound (A-26) | (L-64) | $CuCl_2 \cdot 2H_2O$ | DBU |

Complexes in which the combination of the azo dye, the starting material of the metal ion, and base employed in the reaction is identical to the compound described in the above specific examples, which adopt coordination structures other than that of general formula (5), are also specific examples of the polynuclear azo metal complex dye, comprising the ligand denoted by general formula (3), that is contained in the recording layer of the optical information recording medium of the present invention.

Cationic dye

The optical information recording medium of the present invention contains a cationic dye in addition to the polynuclear azo metal complex dye. The cationic dye in the present invention is a compound containing a cationic dye moiety that includes forms in which the cationic dye forms a salt with a counter anion. The fact that the cationic dye can exhibit a sensitizing effect on the polynuclear azo metal complex dye, thereby further increasing the sensitivity of the recording layer containing the polynuclear azo metal complex dye, was discovered as a result of investigation conducted by the present inventors. As indicated in Examples further below, the cationic dye can enhance sensitivity without compromising the good light resistance and solvent stability of the polynuclear azo metal complex dye, making it suitable as a photosensitizer.
The cationic dye will be described in greater detail below.

Any dye with a cationic dye moiety can serve as the cationic dye. From the perspective of the sensitizing effect, the presence of strong absorption in the recording wavelength region is desirable, and the presence of a maximum absorption wavelength in the recording wavelength region is preferred. From the perspective of the sensitizing effect in optical information recording media corresponding to short wavelength laser beams, such as BDs, a cyanine dye is desirably employed as the cationic dye, and the use of a cyanine dye with a maximum absorption wavelength in the wavelength region of 385 nm to 425 nm is preferred. In this context, the maximum absorption wavelength refers to the maximum absorption wavelength as measured in an alcohol solvent with 1 to 3 carbon atoms, such as methanol. From the perspective of the sensitizing effect, the use of a cationic dye having stronger absorption than the polynuclear azo metal complex dye employed in combination is desirable. This is because the cationic dye emits heat as it absorbs the recording beam, this heat thermally decomposes the polynuclear azo metal complex dye, which is thought to result in enhanced recording sensitivity. In addition to the above characteristics, the cationic dye employed in the recording layer is desirably selected to have good solvent solubility and film-forming properties, and a thermal decomposition temperature that is about the same as that of the polynuclear azo metal complex dye with which it is employed. The thermal decomposition temperatures of the polynuclear azo metal complex dye and cationic dye are desirably equal to or greater than 150˚C but equal to or lower than 500˚C, preferably equal to or greater than 200˚C but equal to or lower than 400˚C, and more preferably, equal to or greater than 250˚C but equal to or lower than 350˚C. In the present invention, the term "thermal decomposition temperature" means the temperature at which the mass reduction rate reaches 20 percent in TG/TDA measurement. In this case, the TG/TDA measurement is conducted at a rate of temperature increase of

10˚C/min. over a range of 30˚C to 550˚C under a $N_2$ flow (flow rate 200 mL/min.). The measuring device employed is an EXSTAR6000 made by Seiko Instruments Inc.

From the above perspectives, examples of cationic dyes that are desirably employed in combination with the polynuclear azo metal complex dye are cationic dyes having the cationic dye moiety denoted by any of general formulas (C) to (E) below. General formulas (C) to (E) will be sequentially described. In general formulas (C) and (D),"......" denotes a single bond or a double bond.

General formula (C)

[Chem. 38]

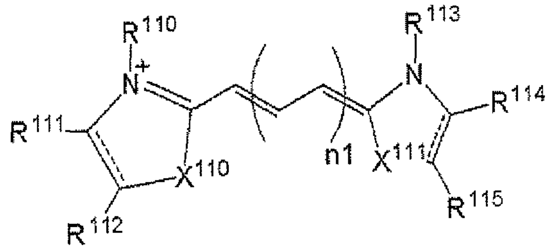

In general formula. (C), each of $X^{110}$ and $X^{111}$ independently denotes a carbon atom, oxygen atom, nitrogen atom, or sulfur atom. From the perspective of the sensitizing effect on the polynuclear azo metal complex dye, $X^{110}$ and $X^{111}$ desirably denote sulfur atoms or oxygen atoms.

Each of $R^{110}$, $R^{111}$, $R^{112}$, $R^{113}$, $R^{114}$, and $R^{115}$ independently denotes a hydrogen atom or a substituent. In general formula (C), when "......" denotes a single bond, the compound denoted by general formula (C) has the following structure. In the structure, the two instances of each of $R^{111}$, $R^{112}$, $R^{113}$, $R^{114}$, and $W^{115}$ that are present may be identical or different. The same is true of the compound denoted by general formula (D).

[Chem. 39]

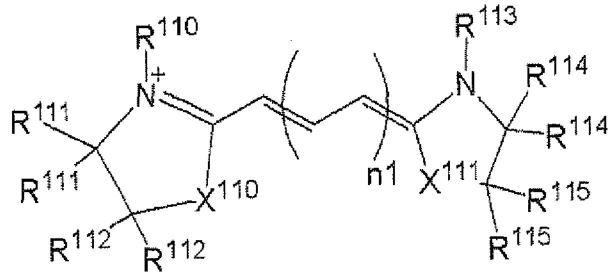

Examples of the substituents are the groups given by way of example for the substituents denoted by $R^1$ and $R^2$ in general formula (A). The above substituents are desirably substituted or unsubstituted alkyl groups having 1 to 10 carbon atoms and substituted or unsubstituted aryl groups having 6 to 10 carbon atoms, preferably substituted or unsubstituted alkyl groups having 1 to 10 carbon atoms, and more preferably, substituted or unsubstituted alkyl groups having 1 to 4 carbon atoms. Examples of substituents substituted onto these various groups are the groups given by way of example for the substituents denoted by $R^1$ and $R^2$ in general formula (A). From the perspective of enhanced solubility, $R^{111}$ and $R^{113}$ are desirably substituted.

$R^{111}$ and $R^{112}$, and $R^{114}$, and $R^{115}$, may bond together to form a ring structure. When $R^{111}$ and $R^{112}$, and $R^{114}$ and $R^{115}$ are bonded together to form a ring structure, ".......''desirably denotes a double bond, and is desirably part of an aromatic ring. When part of an aromatic ring, the aromatic ring is desirably a substituted or unsubstituted benzene ring.

When $R^{111}$ and $R^{112}$, and $R^{114}$ and $R^{115}$, bond together to form a ring structure, the following condensed rings

are examples of a condensed ring formed with $R^{111}$, $R^{112}$ and a nitrogen-containing five-membered ring on which $R^{111}$ and $R^{112}$ substitute and those of a condensed ring formed with $R^{114}$, $R^{115}$ and a nitrogen-containing five-membered ring on which $R^{114}$ and $R^{115}$ substitute.

[Chem. 40]

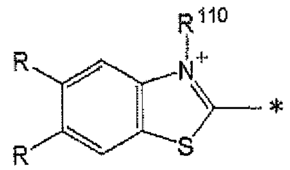
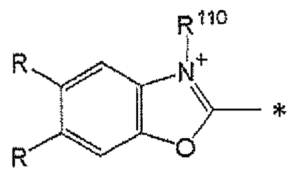
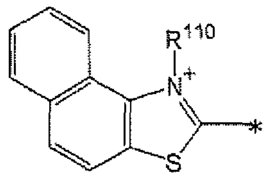
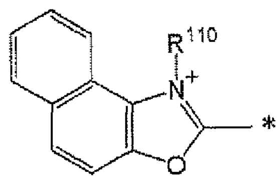
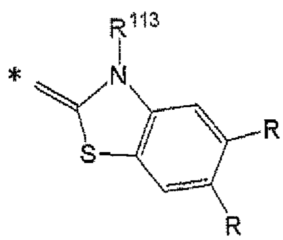
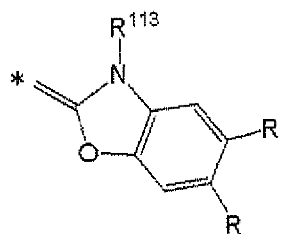
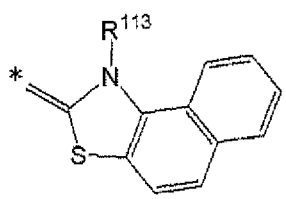
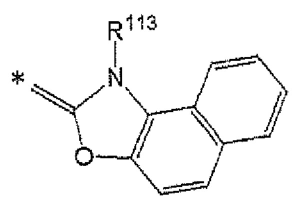

[In the above formulas, R denotes a hydrogen atom or a substituent (such as an alkyl group or halogen atom). The plural instances of R that are present may be identical to or different. "*" denotes a bond position with a carbon atom.]

In general formula (C), n1 denotes an integer of equal to or greater than 0. From the perspective of the absorption wavelength, n1 preferably denotes 0 or 1.

<u>General formula (D)</u>

[Chem. 41]

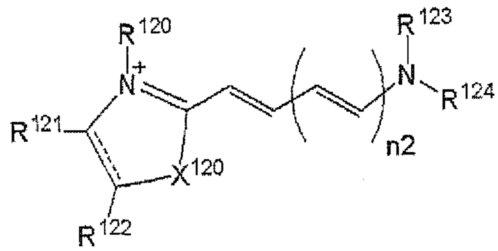

In general formula (D), $X^{120}$ denotes a carbon atom, oxygen atom, nitrogen atom, or sulfur atom. From the perspective of the sensitivity-enhancing effect on polynuclear the azo metal complex dye, a sulfur atom or an oxygen atom is desirable.

In general formula (D), each of $R^{120}$, $R^{121}$, and $R^{122}$ independently denotes a hydrogen atom or a substituent. The details of substituents denoted by $R^{120}$, $R^{121}$, and $R^{122}$ are identical to those for the substituents denoted by $R^{110}$, $R^{111}$, and $R^{112}$, respectively, in general formula (C).

$R^{121}$ and $R^{122}$ can join together to form a ring structure. The details of the ring structure when $R^{121}$ and $R^{122}$ joint together to form a ring structure are as set forth above for the ring structure formed by $R^{111}$ and $R^{112}$ in general formula (C),

In general formula (D), each of $R^{121}$ and $R^{124}$ independently denotes a substituent, and can join together to form a ring structure. Examples of the substituents denoted by $R^{123}$ and $R^{124}$ are the groups given by way of example for the substituents denoted by $R^1$ and $R^2$ in general formula (A). Substituted or unsubstituted alkyl groups having 1 to 10 carbon atoms and substituted or unsubstituted aryl groups having 6 to 10 carbon atoms are desirable as these substituents. It is also possible for a ring containing any from among carbon, nitrogen, oxygen, and sulfur atoms to be formed in the $R^{123}$-N-$R^{124}$ moiety. The substituents denoted by $R^{121}$ and $R^{124}$ are preferably substituted or unsubstituted alkyl groups having 1 to 10 carbon atoms, or form a substituted or unsubstituted five to seven-membered ring comprised of carbon and nitrogen atoms or a substituted or unsubstituted five to seven-membered ring comprised of carbon, nitrogen, and sulfur atoms in the $R^{123}$-N-$R^{124}$ moiety. More preferably, they form a substituted or unsubstituted five or six-membered ring comprised of carbon and nitrogen atoms, or a substituted or unsubstituted five or six-membered ring comprised of carbon, nitrogen, and sulfur atoms. Still more preferably, they form a substituted or unsubstituted six-membered ring comprised of carbon and nitrogen atoms or a substituted or unsubstituted six-membered ring comprised of carbon, nitrogen, and sulfur atoms. Examples of the substituents on the various above groups or rings are the groups given by way of example for the substituents denoted by $R^1$ and $R^2$ in general formula (A).

In general formula (D), n2 denotes an integer of equal to or greater than 0. From the perspective of the absorption wavelength, n2 desirably denotes 0.

In general formula (D), the ring structure formed in the $R^{123}$-N-$R^{124}$ moiety can comprise the following partial structure as a substituent. In the following partial structure, $R^{120}$ to $R^{122}$, $X^{120}$, and n2 are each defined as above; * denotes a bond position with the ring structure formed in the $R^{123}$-N-$R^{124}$ poiety. When the partial structure indicated below is incorporated, the cationic dye moiety denoted by general formula (D) comprises two instances each of $R^{120}$ to $R^{122}$, $X^{120}$, and n2, which may be identical or different. When the two instances of $R^{120}$ to $R^{122}$, $X^{120}$, and n2 that are present are identical, the cationic dye moiety denoted by general formula (D) has identical partial structures sandwiching the ring structure formed in the $R^{123}$ -N-$R^{124}$ poiety.

[Chem. 42]

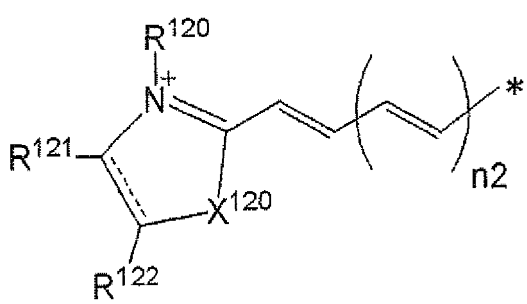

General formula (E)

[Chem. 43]

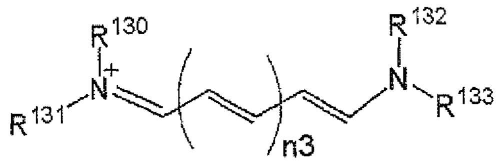

In general formula (E), each of $R^{130}$, $R^{131}$, $R^{132}$, and $R^{133}$ independently denotes a substituent, it being possible for $R^{130}$ and $R^{131}$, $R^{132}$ and $R^{133}$ to join together to form a ring structure. The details of the substituents denoted by $R^{130}$, $R^{131}$, $R^{132}$, and $R^{133}$ are identical to those for the substituents denoted by $R^{123}$ and $R^{124}$ in general formula (D),

In general formula (E), n3 denotes an integer of equal to or grater than 0. From the perspective of the absorption wavelength, n3 desirably denotes 1.

From the perspective of the absorption wavelength, the cationic dye moieties denoted by general formulas (C) to (E) are desirably monovalent or divalent cations.

The cationic dye moieties denoted by general formulas (C) to (E) are normally present in the form of a salt with a counter anion in a quantity that neutralizes the charge in the molecule. The counter anion need only neutralize the charge in the molecule, is an anion in the form of a single atom or a group of atoms, and can be contained as a substituent in the cationic dye. From the perspective of absorption wavelength, the counter anion is desirably in the form of a halogenated ion, p-toluenesulfonic acid ion, hypochlorous acid ion, perchloric acid ion, sulfonic acid ion, carboxylic acid ion, hexafluorophosphoric acid ion, or tetrafluoroboric acid ion; preferably in the form of a chloride ion, bromide ion, iodide ion, p-toluenesulfonic acid ion, hypochlorous acid ion, perchloric acid ion, sulfonic acid ion, carboxylic acid ion, hexafluorophosphoric acid ion, or tetrafluoroboric acid ion; and more preferably, in the form of a chloride ion, bromide ion, iodide ion, p-toluenesulfonic acid ion, perchloric acid ion, carboxylic acid ion, hexafluorophosphoric acid ion, or tetrafluoroboric acid ion.

Cationic dyes having the cationic dye moieties denoted by general formulas (C) to (E) can be synthesized by known methods and are available as commercial products. For example, synthesis methods are described in detail in "The Chemistry of Synthetic Dynes" (Academic Press, K. Venkataraman, published in 1971) and their references, which are expressly incorporated herein by reference in their entirety. Reference can also be made to WO01/44374, which is expressly incorporated herein by reference in its entirety, and the like.

Specific examples of the cationic dye suitable for use in the present invention will be given below. However, the present invention is not limited to the following specific examples.

[Chem. 44]

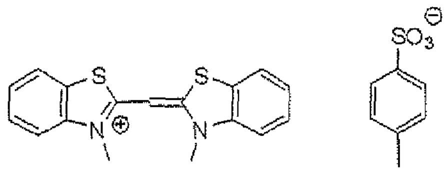

C－1

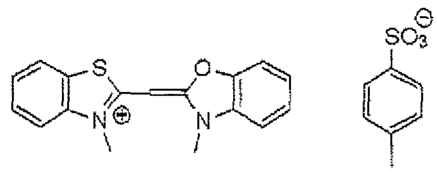

C－2

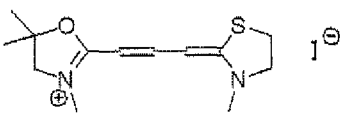

C－3

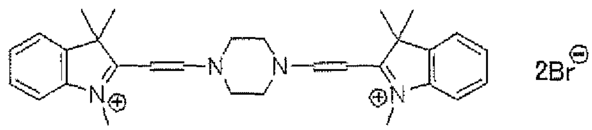

C－4

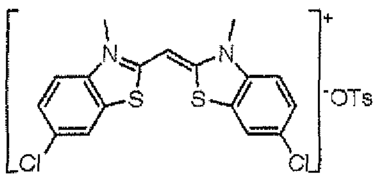

C-5

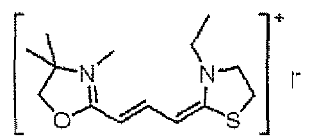

C-6

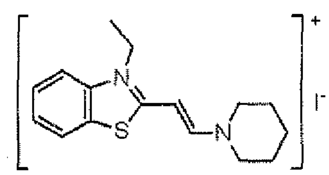

C-7

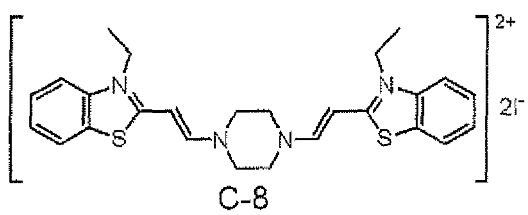

C-8

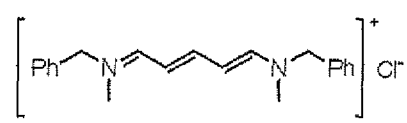

C-9

The optical information recording medium of the present invention comprises a polynuclear azo metal complex dye and a cationic dye in the recording layer. A single polynuclear azo metal complex dye and a single cationic dye, or two or more different types of each, may be contained in the recording layer. The blending ratio of the polynuclear azo metal complex dye and cationic dye in the recording layer, based on mass, is desirably polynuclear azo metal complex dye:cationic dye = 95:5 to 50:50. When this mass ratio is equal to or greater than 95:5, the cationic dye can effectively produce its sensitizing effect. At equal to or less than 50:50, good light resistance and solution stability can be maintained in the recording layer by the polynuclear azo metal complex dye. This mass ratio is preferably 95:5 to 80:20 and more preferably, 95:5 to 90:10. Further, the content of the polynuclear metal complex in the recording layer falls, for example, within a range of 50 to 95 mass percent, desirably within a range of 70 to 95 mass percent, more preferably within a range of 80 to 95 mass percent, and optimally, within a range of 90 to 95 mass percent, of the total mass of the recording layer.

It suffices for the optical information recording medium of the present invention to comprise at least one recording layer containing the polynuclear metal complex dye and cationic dye, It can comprise two or more recording layers. It can also comprise a recording layer in addition to the recording layer containing the polynuclear azo metal complex dye and the cationic dye. When recording dyes in the form of other dyes are employed in combination in the recording layer containing the polynuclear azo metal complex dye, the proportion of the polynuclear azo metal complex dye to the total dye component is desirably 70 to 100 mass percent, preferably 90 to 95 mass percent.

When employing dyes other than the above azo metal complex dye as dye components in the present invention, these dyes preferably have absorption in the short wavelength region of equal to or shorter than 440 nm, for example. Such dyes are not specifically limited; examples are azo dyes, azo metal complex dyes, phthalocyanine dyes, oxonol dyes, cyanine dyes, and squarylium dyes.

The recording layer containing the polynuclear azo metal complex dye and cationic dye in the optical information recording medium of the present invention is a layer permitting the recording of information by irradiation with a laser beam. The phrase "permitting the recording of information by irradiation with a laser beam" means that the optical characteristics of portions of the recording layer that are irradiated with a laser beam change. The change in optical characteristics is thought to occur when a laser beam is directed onto the recording layer and the irradiated portions absorb the beam, causing the temperature to rise locally and producing a physical or chemical change (such as generating a pit). Here, the presence of a cationic dye with high sensitivity to the irradiated laser beam can cause efficient light absorption and photothermal conversion, promoting the decomposition of the azo metal polynuclear complex, which is the recording dye. As a result, the recording sensitivity is thought to increase. Reading (reproduction) of the information that has been recorded on the recording layer is accomplished, for example, by radiating a laser beam of the same wavelength as the laser beam used in recording to detect differences in the optical characteristics, such as the reflectance, of the parts of the recording layer in which the optical characteristics have changed (recorded portions) and parts where they have not been changed (unrecorded portions). The polynuclear azo metal complex dye absorbs laser beams of equal to or lower than 440 nm, for example. The optical information recording medium of the present invention, with a recording layer containing a metal complex compound with absorbance in the short-wavelength range in this manner, is suitable as a high-capacity optical disk that can be recorded by short-wavelength lasers, such as an optical disk of the Blu-ray format employing a 405 nm blue laser. The method of recording information on the optical information recording medium of the present invention will be described further below.

The optical information recording medium of the present invention is comprised of at least a recording layer containing a polynuclear azo metal complex dye and a cationic dye on a support, and may further comprise a light reflective layer, a protective layer, and the like in addition to the above-described recording layer.

Any of the various materials conventionally employed as support materials for optical information recording media may be selected for use as the support employed in the present invention. A transparent disk-shaped support is preferably employed as the support.

Specific examples are glass, polycarbonate, acrylic resins such as polymethyl methacrylate, vinyl chloride resins such as polyvinyl chloride and vinyl chloride copolymers, epoxy resins, amorphous polyolefins, polyesters, and metals such as aluminum. They may be employed in combination as desired.

Of the above materials, thermoplastic resins such as amorphous polyolefins and polycarbonates are preferable, and polycarbonates are particularly preferable, from the perspectives of resistance to humidity, dimensional stability, low cost, and the like. When employing these resins, the support can be manufactured by injection molding.

The thickness of the support generally falls within a range of 0.7 to 2 mm, preferably a range of 0.9 to 1.6 mm, and more preferably, within a range of 1.0 to 1.3 mm.

To enhance smoothness and increase adhesive strength, an undercoating layer can be formed on the surface of the support on the side on which the light reflective layer, described further below, is positioned.

Tracking guide grooves or irregularities (pregrooves) denoting information such as address signals are formed on the surface of the support on which the recording layer is formed. The track pitch of these pregrooves desirably fall within a range of 50 to 500 nm. When the track pitch is equal to or greater than 50 nm, not only is it possible to correctly form the pregrooves, but the generation of crosstalk can be avoided. At equal to or less than 500 nm, high-density recording is possible. A support on which a narrower track pitch than that employed in CD-Rs and DVD-Rs is formed to achieve a higher recording density is employed in the optical information recording medium of the present invention. The preferable range of the track pitch will be described in detail further below.

An optical information recording medium (referred to as "Embodiment (1)" hereinafter) sequentially comprising, from the support side, a support 0.7 to 2 mm in thickness, a dye-containing recordable recording layer, and a cover layer 0.01 to 0.5 mm in thickness is an example of a preferable embodiment of the optical information recording medium of the present invention.

In Embodiment (1), it is preferable for the pregrooves formed on the support to be 50 to 500 nm in the track pitch, 25 to 250 nm in the groove width, and 5 to 150 nm in the groove depth.

Optical information recording medium of Embodiment (1) will be described in detail below. However, the present invention is not limited to Embodiment (1).

[Optical information recording medium of Embodiment (1)]

The optical information recording medium of Embodiment (1) comprises at least a support, a recordable recording layer, and a cover layer. The optical information recording medium of Embodiment (1) is suitable as a Blu-ray type recording medium. In the Blu-ray system, information is recorded and reproduced by irradiation of a laser beam from the cover layer side, and a light reflective layer is normally provided between the support and the recording layer. Fig. 1 shows an example of an optical information recording medium of Embodiment (1). The first optical information recording medium 10A shown in Fig. 1 is comprised of first light reflective layer 18, first recordable layer 14, barrier layer

20, first bonding layer or first adhesive layer 22, and cover layer 16, in that order on first support 12
These materials constituting these components will be sequentially described below.

Support

On the support of Embodiment (1) are formed pregrooves (guide grooves) having a shape such that the track pitch, groove width (half width), groove depth, and wobble amplitude all fall within the ranges given below. The pregrooves are provided to achieve a recording density greater than that of CD-Rs and DVD-Rs. For example, the optical information recording medium of the present invention is suited to use as a medium for blue-violet lasers.
The track pitch of the pregrooves ranges from 50 to 500 nm. When the track pitch is equal to or greater than 50 nm, not only is it possible to correctly form the pregrooves, but the generation of crosstalk can be avoided, At equal to or less than 500 nm, high-density recording is possible. The rack pitch of the pregrooves is preferably ranges from 100 nm to 420 nm, more preferably from 200 nm to 370 nm, and further preferably from 260 nm to 330 nm.
The groove width (half width) of the pregrooves ranges from 25 to 250 nm, preferably from 50 to 240 nm, more preferably from 80 to 230 nm, and further preferably from 100 to 220 nm. A pregroove width of equal to or higher than 25 nm can permit adequate transfer of the grooves during molding and can inhibit a rise in the error rate during recording. A groove width of equal to or lower than 250 nm can also permit adequate transfer of grooves during molding and can avoid crosstalk due to the widening of bits formed during recording.
The groove depth of the pregrooves ranges from 5 to 150 nm. Pregrooves that are equal to or greater 5 nm in depth can permit an adequate degree of recording modulation, and a depth of equal to or less than 150 nm can permit the achieving of high reflectance. The groove depth of the pregrooves preferably ranges from 10 to 85 nm, more preferably from 20 to 80 nm, and further preferably from 28 to 75 nm.
The upper limit of the groove tilt angle of the pregrooves is preferably equal to or less than 80˚, more preferably equal to or less than 75˚, further preferably equal to or less than 70˚, and still more preferably, equal to or less than 65˚. The lower limit is preferably equal to or greater than 20˚, more preferably equal to or greater than 30˚, and still more preferably, equal to or greater than 40˚.
When the groove tilt angle of the pregrooves is equal to or greater than 20˚, an adequate tracking error signal amplitude can be achieved, and at equal to or less than 80˚, shaping properties are good.

Recordable recording layer

The recordable recording layer of Embodiment (1) can be formed by preparing a coating liquid by dissolving the dye in a suitable solvent with or without the use of a binder or the like, coating this coating liquid on the support or on a light reflective layer, described further below, to form a coating, and then drying the coating. The recordable recording layer may comprise a single layer or multiple layers. When the structure is multilayer, the step of coating the coating liquid may be conducted multiple times.
The concentration of dye in the coating liquid generally ranges from 0.01 to 15 mass percent, preferably ranges from 0.1 to 10 mass percent, more preferably ranges from 0.5 to 5 mass percent, and still more preferably, ranges from 0.5 to 3 mass percent.
Examples of the solvent employed in preparing the coating liquid are: esters such as butyl acetate, ethyl lactate, and Cellosolve acetate; ketones such as methyl ethyl ketone, cyclohexanone, and methyl isobutyl ketone; chlorinated hydrocarbons such as dichloromethane, 1,2-dichloroethane, and chloroform; amides such as dimethylformamide; hydrocarbons such as methylcyclohexane; ethers such as tetrahydrofuran, ethyl ether, and dioxane; alcohols such as ethanol, n-propanol, isopropanol, and n-butanol diacetone alcohol; fluorine solvents such as 2,2,3,3-tetrafluoro-1-propanol and glycol ethers such as ethylene glycol monomethylether, ethylene glycol monoethylether, and propylene glycol monomethylether.
The solvents may be employed singly or in combinations of two or more in consideration of the solubility of the dyes employed. Binders, oxidation inhibitors, UV absorbing agents, plasticizers, lubricants, and various other additives may be added to the coating liquid as needed.
Examples of coating methods are spraying, spincoating, dipping, roll coating, blade coating, doctor roll coating, and screen printing.
During coating, the temperature of the coating liquid preferably falls within a range of 23 to 50˚C, more preferably within a range of 24 to 40˚C, and further preferably, within a range of 25 to 40˚C.
The thickness of the recordable recording layer on lands (protrusions on the support) is preferably equal to or less than 300 nm, more preferably equal to or less than 250 nm, further preferably equal to or less than 200 nm, and still more preferably, equal to or less than 180 nm. The lower limit is preferably equal to or greater than 1 nm, more preferably equal to or greater than 3 nm, further preferably equal to or greater than 5 nm, and still more preferably, equal to or greater than 7 nm.

The thickness of the recordable recording layer on grooves (indentation in the support) is preferably equal to or less than 400 nm, more preferably equal to or less than 300 nm, and further preferably, equal to or less than 250 nm. The lower limit is preferably equal to or greater than 10 nm, more preferably equal to or greater than 20 nm, and further preferably, equal to or greater than 25 nm.
The ratio of the thickness of the recordable recording layer on lands to the thickness of the recordable recording layer on grooves (thickness on lands/thickness on grooves) is preferably equal to or greater than 1.0, more preferably equal to or greater than 0.13, further preferably equal to or greater than 0.15, and still more preferably, equal to or greater than 0.17. The upper limit is preferably less than 1, more preferably equal to or less than 0.9, further preferably equal to or less than 0.85. and still more preferably, equal to or less than 0.8.

Various antifading agents may be incorporated into the recordable recording layer to enhance the resistance to light of the recordable recording layer. Singlet oxygen quenchers are normally employed as the antifading agent. The single oxygen quencher can also be employed in the present invention to further enhance the resistance to light. Singlet oxygen quenchers that are described in known publications such as patent specifications may be employed.
Specific examples are described in Japanese Unexamined Patent Publication (KOKAI) Showa Nos. 58-175693,59-81194,60-18387, 60-19586,60-19587,60-35054, 60-36190, 60-36191, 60-44554, 60-44555, 60-44389, 60-44390, 60-54892, 60-47069, and 63-209995; Japanese Unexamined Patent Publication (KOKAI) Heisei No. 4-25492; Japanese Examined Patent Publication (KOKOKU) Heisei Nos. 1-38680 and 6-26028; German Patent No. 350399; and the Journal of the Japanese Chemical Society, October Issue, 1992, p. 1141, which are expressly incorporated herein by reference in their entirety.
The quantity of antifading agent in the form of the above singlet oxygen quencher or the like normally falls within a range of 0.1 to 50 mass percent, preferably falls within a range of 0.5 to 45 mass percent, more preferably falls within a range of 3 to 40 mass percent, and still more preferably, falls within a range of 5 to 25 mass percent, of the quantity of dye.

Cover layer

The cover layer in Embodiment (1) is normally adhered through a bonding agent or adhesive onto the above-described recordable recording layer or onto a barrier layer such as that shown in Fig. 1.
The cover layer is not specifically limited, other than that it be a film of transparent material. Polycarbonate, an acrylic resin such as polymethyl methacrylate; a vinyl chloride resin such as polyvinyl chloride or a vinyl chloride copolymer; an epoxy resin; amorphous polyolefin; polyester; or cellulose triacetate is preferably employed. Of these, the use of polycarbonate or cellulose triacetate is more preferable.
The term "transparent" means having a transmittance of equal to or greater than 80 percent for the beam used in recording and reproducing.

The cover layer may further contain various additives so long as they do not compromise the effect of the present invention. For example, UV-absorbing agents may be incorporated to cut light with the wavelength of equal to or shorter than 400 nm and/or dyes may be incorporated to cut light with the wavelength of equal to or longer than 500 nm.
As for the physical surface properties of the cover layer, both the two-dimensional roughness parameter and three-dimensional roughness parameter are preferably equal to or less than 5 nm.
From the perspective of the degree of convergence of the beam employed in recording and reproducing, the birefringence of the cover layer is preferably equal to or lower than 10 nm.

The thickness of the cover layer can be suitably determined based on the NA or wavelength of the laser beam irradiated in recording and reproducing. In the present invention, the thickness preferably falls within a range of 0.01 to 0.5 mm, more preferably a range of 0.05 to 0.12 mm.
The total thickness of the cover layer and bonding or adhesive layer is preferably 0.09 to 0.11 mm, more preferably 0.095 to 0.105 mm.
A protective layer (hard coating layer 44 in the embodiment shown in Fig. 1) may be provided on the incident light surface of the cover layer during manufacturing of the optical information recording medium to prevent scratching of the incident light surface.

To bond the cover layer and the recordable recording layer or barrier layer, a bonding layer or an adhesive layer may be provided between the two layers.
A UV-curable resin, EB-curable resin, thermosetting resin, or the like is preferably employed as the bond in the bonding layer.
When employing a UV-curable resin as the bond, the UV-curable resin may be employed as is, or dissolved in a suitable solvent such as methyl ethyl ketone or ethyl acetate to prepare a coating liquid, which is then coated on the surface of the barrier layer with a dispenser. To prevent warping of the optical information recording medium that has been manufactured, a UV-curable resin having a low curing shrinkage rate is preferably employed in the bonding layer. Examples of such UV-curable resins are SD-640 and the like, made by Dainippon Ink and Chemicals, Inc.

The method of forming the bonding layer is not specifically limited. It is desirable to coat a prescribed quantity

of bond on the surface of the barrier layer or the recordable layer (the bonded surface), dispose a cover layer thereover, uniformly spread the bond between the bonded surface and the cover layer by spin-coating or the like, and then cure the bond.

The thickness of the bonding layer preferably falls within a range of 0.1 to 100 micrometers, more preferably a range of 0.5 to 50 micrometers, and further preferably, 1 to 30 micrometers.

Examples of the adhesive employed in the adhesive layer are acrylic, rubber, and silicone adhesives. From the perspectives of transparency and durability, acrylic adhesives are preferable. Preferable acrylic adhesive is an acrylic adhesive comprising a main component in the form of 2-ethylhexyl acrylate, n-butyl acrylate, or the like copolymerized with a short-chain alkyl acrylate or methacrylate, such as methyl acrylate, ethyl acrylate, or methyl methacrylate to increase the cohesive force, and the component capable of becoming a crosslinking point with a crosslinking agent, such as acrylic acid, methacrylic acid, an acrylamide derivative, maleic acid, hydroxylethyl acrylate, or glycidyl acrylate. The type and blending ratio of the main component, short-chain component, and component for the addition of a crosslinking point can be suitably adjusted to vary the glass transition temperature (Tg) and crosslinking density. The glass transition temperature (Tg) preferably equal to or less than 0˚C, more preferably equal to or less than -15 ˚C, and further preferably, equal to or less than -25 ˚C.

The glass transition temperature (Tg) can be measured by differential scanning calorimetry (DSC) with a DSC6200R made by Seiko Instruments, Inc.

The method described in Japanese Unexamined Patent Publication (KOKAI) No. 2003-21.7177, Japanese Unexamined Patent Publication (KOKAI) No. 2003-203387, Japanese Unexamined Patent Publication (KOKAI) Heisei No. 9-147418, which are expressly incorporated herein by reference in their entirety, or the like can be used to prepare the adhesive.

The method of forming the adhesive layer is not specifically limited. A prescribed quantity of adhesive can be uniformly coated on the surface of the barrier layer or recordable recording layer (the adhered surface), a cover layer can be disposed thereover, and the adhesive can be cured. Alternatively, a prescribed quantity of adhesive can be uniformly coated on one side of the cover layer to form a coating of adhesive, this coating can be adhered to the adhered surface, and then the adhesive can be cured.

Further, a commercial adhesive film on which an adhesive layer has been disposed in advance can be employed as the cover layer.

The thickness of the adhesive layer preferably falls within a range of 0.1 to 100 micrometers, more preferably a range of 0.5 to 50 micrometers, and further preferably, a range of 1 to 30 micrometers.

The cover layer can also be formed by spin-coating UV-curable resin.

<u>Other layers</u>

The optical information recording medium of Embodiment (1) may optionally comprise other layers in addition to the above-described essential layers so long as the effect of the present invention is not compromised. Examples of such optional layers are a label layer having a desired image that is formed on the back of the support (the reverse unformed side from the side on which the recordable recording layer is formed), a light reflective layer positioned between the support and the recordable recording layer (described in detail further below), a barrier layer positioned between the recordable recording layer and the cover layer (described in detail further below), and a boundary layer positioned between the above light reflective layer and the recordable recording layer. The "label layer" may be formed from UV-curing resin, thermosetting resin, or heat-drying resin.

Each of the above-described essential layers and optional layers may have a single-layer or multilayer structure.

To increase reflectance for the laser beam and impart functions that enhance recording and reproducing characteristics to the optical information recording medium of Embodiment (1), a light reflective layer is preferably formed between the support and the recordable recording layer.

The reflective layer can be formed, for example, by vacuum vapor depositing, by sputtering, or by ion plating a light reflective substance with high reflectance for the laser beam on the support. The thickness of the light reflective layer can normally range from 10 to 300 nm, preferably ranges from 30 to 200 nm.

The reflectance is preferably equal to or greater than 70 percent.

Examples of light reflective substances of high reflectance are: metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi; and stainless steel. These light reflective substances may be employed singly, in combinations of two or more, or as alloys. Of these, the preferable substances are: Cr, Ni, Pt, Cu, Ag, Au, Al, and stainless steel; the more preferable substances are: Au, Ag, Al, and their alloys; and the substances of greatest preference are: Au, Ag, and their alloys.

Barrier layer (intermediate layer)

In the optical information recording medium of Embodiment (1), as shown in Fig. 1, it is preferable to form a barrier layer between the recordable recording layer and the cover layer.
The barrier layer can be provided to enhance the storage properties of the recordable recording layer, enhance adhesion between the recordable recording layer and cover layer, adjust the reflectance, adjust thermal conductivity, and the like. The material employed in the barrier layer is a material that passes the beam employed in recording and reproducing; it is not specifically limited beyond being able to perform this function. For example, it is generally desirable to employ a material with low permeability to gas and moisture. A material that is also a dielectric is preferred.
Specifically, materials in the form of nitrides, oxides, carbides, and sulfides of Zn, Si, Ti, Te, Sn, Mo, Ge, Nb, Ta and the like are preferable. $MoO_2$, $GeO_2$, TeO, $SiO_2$, $TiO_2$, ZuO, $SnO_2$, ZnO-$Ga_2O_3$, $Nb_2O_5$, and $Ta_2O_5$ are preferable and $SnO_2$, ZnO-$Ga_2O_3$, $SiO_2$, $Nb_2O_5$, and $Ta_2O_5$ are more preferable.
The barrier layer can be formed by vacuum film-forming methods such as vacuum vapor deposition, DC sputtering, RF sputtering, and ion plating. Of these, sputtering is preferred.
The thickness of the barrier layer preferably falls within a range of 1 to 200 nm, more preferably within a range of 2 to 100 nm, and further preferably, within a range of 3 to 50 nm.

Method of recording information

The present invention further relates to a method of recording information on the recording layer comprised in the optical information recording medium of the present invention by irradiation of a laser beam having a wavelength of equal to or shorter than 440 nm onto the optical information recording medium.
By way of example, information is recorded on the above-described preferred optical information recording medium of Embodiment (1) in the following manner.
First, while rotating an optical information recording medium at a certain linear speed (such as 0.5 to 10 m/s) or a certain angular speed, a laser beam for recording, such as a semiconductor laser beam, is directed from the protective layer side. Irradiation by this laser beam changes the optical properties of the portions that are irradiated, thereby recording information. In the embodiment shown in Fig. 1, recording laser beam 46 such as a semiconductor laser beam is directed from cover layer 16 side through first object lens 42 (having a numerical aperture NA of 0.85, for example). Irradiation by laser beam 46 causes recordable recording layer 14 to absorb laser beam 46, resulting in a local rise in temperature. This is thought to produce a physical or chemical change (such as generating pits), thereby altering the optical characteristics and recording information.
In the method of recording information of the present invention, information is recorded by irradiation of a laser beam having a wavelength of equal to or shorter than 440 nm. A semiconductor laser beam having an oscillation wavelength falling within a range of equal to or shorter than 440 nm is suitable for use as a recording beam. A blue-violet semiconductor laser beam having an oscillation wavelength falling within a range of 390 to 415 nm and a blue-violet SHG laser beam having a core oscillation wavelength of 425 nm obtained by halving the wavelength of an infrared semiconductor laser beam having a core oscillation wavelength of 850 nm with an optical waveguide device are examples of preferable light sources. In particular, a blue-violet semiconductor laser beam having an oscillation wavelength of 390 to 415 nm is preferably employed from the perspective of recording density. As described above, the optical information recording medium of Embodiment (1) has the reflective layer between the support and the recordable recording layer, and a laser beam is irradiated onto the recording layer from the cover layer side, that is, the surface side opposite from the surface facing the reflective layer.
The information that is thus recorded can be reproduced by directing the semiconductor laser beam from the support side or protective layer side while rotating the optical information recording medium at the same constant linear speed as in the recording, and detecting the reflected beam.

Photosensitizer

he present invention further relates to a photosensitizer comprising a cationic dye moiety denoted by any of general formulas (C) to (E) above. In the present invention, the term "photosensitizer" refers to a substance that increases the sensitivity of a substance to light. As set forth above, the photosensitizer of the present invention is suitable as a photosensitizer for polynuclear azo metal complex dyes. The details of the photosensitizer of the present invention and of the polynuclear azo metal complex dye employed in combination are as set forth above. The irradiating light that is employed is desirably short wavelength light that is employed as the recording beam on optical information recording media corresponding to short-wavelength laser beams, such as BDs. The irradiating light is as described for the information recording method of the present invention above.
The photosensitizer of the present invention is suitable for optical recording applications. In addition to optical

recording applications, it can also be employed in various applications in which short wavelength beams are utilized, such as in photopolymerization reactions.

EXAMPLES

The present invention will be described more specifically below based on examples. However, the present invention is not limited to the examples.

1. Synthesis example of polynuclear metal complex dye (general formula (G))

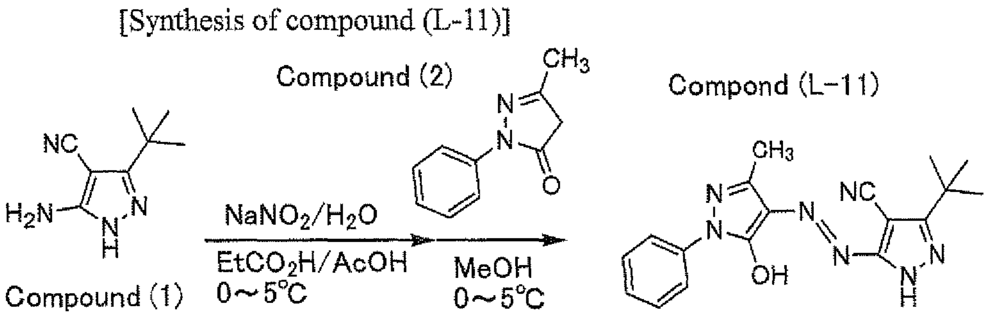


Into a three-liter three-necked flask were poured 100 g of compound (1), 120 mL of acetic acid, and 180 mL of propionic acid, and 185 mL of hydrochloric acid (35 to 37 percent) was gradually added dropwise with ice cooling. The mixture was cooled to -5 to 5˚C in an ice bath, 80 mL of an aqueous solution in which 42 g of $NaNO_2$ was dissolved was gradually added dropwise, and the mixture was stirred for 30 minutes at 0 to 5˚C. The acidic solution was gradually added to 500 mL, of a methanol solution of 106 g of compound (2) maintained at 0 to 5˚C in an ice bath, and the mixture was stirred for one hour at 0 to 10˚C. The mixture was returned to room temperature. The precipitate was filtered out, washed with 250 mL of methanol, and then washed with 600 mL of distilled water. The solid obtained was dispersed in ethanol and stirred for one hour at 60˚C. The crystals were filtered out, washed with methanol, and dried, yielding 140 g of compound (L-11). The compound was identified by 300 MHz $^1$H-NMR.

$^1$H-NMR(DMSO-d6) [ppm];δ13.33(1H,br),7.88(2H,d),7.47(2H,t),7.25(1 H,t),2.26(3H,s), 1.42(9H,s)

(L-34) to (L-42), (L-43) to (L-45), and (L-47) to (L52) were synthesized by the same method used to synthesize compound (L-11) above. Various azo dyes that can be employed in the present invention can be identically synthesized. The compounds were identified by 300 MHz $^1$H-NMR.

Specific examples of methods of synthesizing the azo metal complex dye denoted by Example Compound (M-11) will be described next. However, the present invention is not limited to these methods.

[Synthesis of (M-11)]

To a three-liter, three-necked flasks were charged 120 g of compound (L-11) and 1,200 mL of methanol, and 193 mL of diisopropylamine was added while stirring. Upon complete dissolution, 82.3 g of copper acetate monohydrate was added while stirring, and the mixture was reacted for two hours at 60-65˚C. The product was returned to room temperature. The precipitate was filtered out, washed with methanol, and dried, yielding 117 g of compound (M-9). The compound was identified by measurement of the Cu content by ICP-OES, and by ESI-TOF-MS and X-ray structural analysis,

ESI-TOF-MS: m/z = 2556 (nega), 1279 (nega)

ICP-OES: Cu content = 168 ± 4 g/kg.

The product was confirmed by X-ray structural analysis to be a polynuclear copper complex comprised of six azo dye molecules and seven copper ions. The ESI-TOF-MS results were consistent with the following structure.

[Chem. 46]

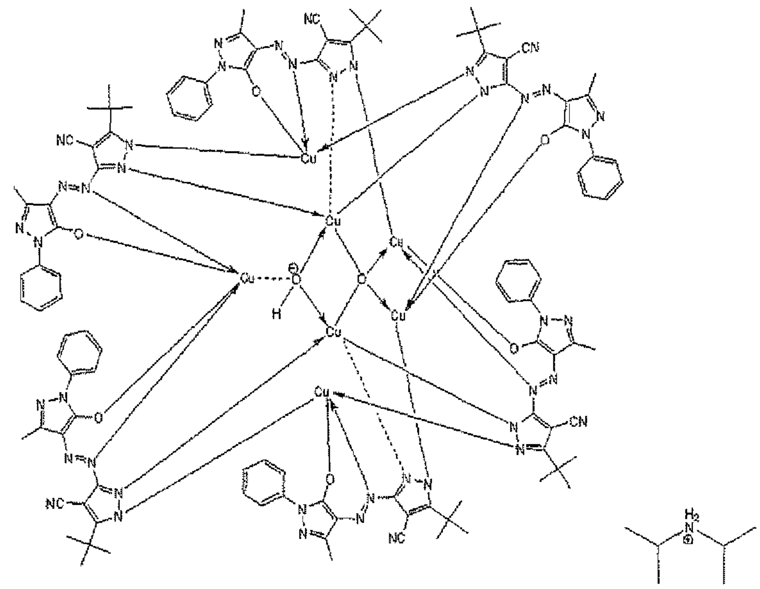

(M-1), (M-12) to (M-14), (M-21), (M-22), (M-24) to (M-26), (M-28), and (M-30) were synthesized by the same manufacturing method as (M-11) (but at different reaction scales) while varying the starting materials and equivalence ratios. The compounds were identified by ESI-TOF-MS. Confirmation was also possible by ICP-OES, X-ray structural analysis, and the like.

[Synthesis of (M-3)]

To a 100 mL, three-neclced flasks were charged 0.50 g of compound (L-36) and 10 mL of methanol, and 1.0 mL of diisopropylamine was added dropwise while stirring. Upon complete dissolution, 0.33 g or copper (II) acetate monohydrate was added with stirring, and the mixture was reacted for two hours at 60 to 65°C. The product was returned to room temperature. The precipitate was filtered out, washed with methanol, and dried, yielding 0.57 g of compound (M-3).
Various azo metal complex dyes that can be used in the optical information recording medium of the present invention can be synthesized by the same method as that used to synthesize the above-described compounds, The compound can be identified by MALDI-TOF-MS, ESI-TOF-MS, ICP-OES, X-ray structural analysis, or the like. A measurement method based on ICP-OES is described below.

<<Measurement by ICP-OES (ICP optical emission spectrometry)>>

A 0.05 g sample was collected, 3 mL of nitric acid was added, and microwave ashing was conducted. Water was added to the product to the total volume of 100 mL, and the Cu was quantified by the absolute calibration curve method by ICP-OES (1000-IV made by Shimadzu Corporation).
2. Synthesis example of polynuclear azo metal complex dye (general formula (F))
[Synthesis of compound (L-13)]

[Chem. 47]

Compound (4)

Compound (L-13)

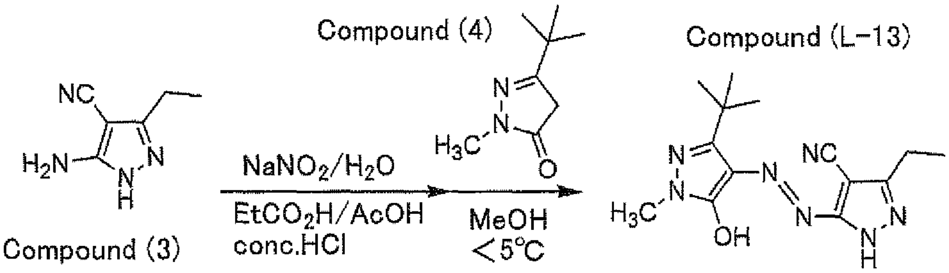


Compound (3)

Into a 100 mL, three-necked flask were poured 1.0 g of compound (3), 2 mL of acetic acid, and 4 mL of propionic acid, after which 2.23 g of hydrochloric acid (35 to 37 percent) was gradually added dropwise with ice cooling. The mixture was cooled to 0 to 5˚C in an ice bath. To this was gradually added dropwise an aqueous solution in which 0.52 g of $NaNO_2$ was dissolved, and the mixture was stirred for one hour at 0 to 5˚C. The acidic solution was gradually added to 15 mL of a methanol solution containing 1.13 g of compound (4) maintained at 0 to 5˚C in an ice bath and stirred for one hour. The mixture was returned to room temperature, stirred for two hours, and then cooled in an ice bath. The precipitate was filtered out and washed with minimal quantities of methanol and distilled water. The solid obtained was dried, yielding 1.13 g of compound (L-13). The compound was identified by 300 MHz $^1$H-NMR.
$^1$H-NMR(DMSO-d6)[ppm];δ 13.44(1H,s),3.30(3H,s),2.80-2.74(2H,q),1.33(9H,s),1.29-1. 25(9H,t)

(L-1) to (L-18), (L-20) to (L-31), and (L-33) were synthesized by the same method as that used to synthesize above-described compound (L-13). Various azo dyes that can be employed in the present invention can be similarly synthesized. The compounds were identified by 300 MHz $^1$H-NMR. Some of the NMR spectral data are given below.

(L-1)$^1$H-NMR(DMSO-d6)[ppm];δ13.70(1H,br), 13.31(1H,s),3.33(3H,s), 1.41 (9H,s),1.33 (9H,s)
(L-3)$^1$H-NMR(DMSO-d6)[ppm];δ13.93(1H,s),10,20(1Hs),7.63-7.57(2H,m),7,06(1H,d) ,1.45(9H,s),1.30(9H,s)
(L-4)$^1$H-NMR(DMSC-d6)[ppm];δ14.68(1H,br),13.53(1H,s),8.32(3H,s),3.82(2H,t),1.53 (2H,tt),1.31(2H,tq),0.90(3H,t)
(L-5)$^1$H-NMR(DMSO-d6)[ppm];δ13.43(1H,br),13.20(1H,br),7.40-7.36(8H,m),7,24-7.2 1(2H,m),1.41(9H,s)
(L-6)$^1$H-NMR(DMSO-d6)[ppm];814.20(1H,s),13.40(1H,s),3.22(3H,s),3.20(3H,s),1.42 (9H,s)
(L-8)$^1$H-NMR(DMSO-d6)[ppm];δ13.42(1H,br),8.30-7.60(4H,br),1.40(9H,s)
(L-10)$^1$H-NMR(DMSO-d6)[ppm];δ13.78(1H,s),13.30(1H,s),8.38(1H,s),4.3 1(q),3.34(3H ,s),1.36-1.31(12H,m)

Specific examples of methods of synthesizing the azo metal complex dye denoted by Example Compound (M-53) are described below. However, the present invention is not limited to these methods.

[Synthesis of (M-53)]

To a 50 mL eggplant-shaped flask were charged 0.7 g of compound (L-13) and 7 mL of ethanol. A 1 mL quantity of DBU was added dropwise while stirring. A 380 mg quantity of copper acetate monohydrate was added while stirring and the mixture was refluxed with heating for three hours. The mixture was returned to room temperature and 30 mL of distilled water was added to generate a precipitate. The precipitate was filtered out, washed with distilled water, and dried, yielding 0.74 g of compound (M-53). The compound was identified by Cu-content measurement by ICP-OES and ESI-TOF-MS.
ESI-TOF-MS:m/z=1515(nega)
The peaks of a complex comprised of eight azo dye molecules and 10 copper ions were detected in the ESI-TOF-MS results.
ICP-OES: Cu content=163 ± 4g/kg
ICP-OES revealed a greater Cu content than for a complex comprised of two azo dye molecules and two copper ions.

(M-48), (M-51), (M-58), (M-60), (M-61), (M-66), (M-74), (M-75), and (M-78) were synthesized under the same conditions as (M-53).

(M-61): (ICP-OES) 140 ± 5 g/kg
The results of ICP-OES were consistent with a structure comprised of a complex of two azo dye molecules and two copper ions containing one DBU.
(M-75):(ESI-MS)m/z=949(nega), 920(posi), 915(nega)
ESI-MS of (M-75) revealed both the peaks of a complex comprised of four azo dye molecules and five copper ions, and the peaks of a complex comprised of two azo dye molecules and two copper ions.
X-ray structural diffraction revealed (M-75) to be a complex comprised of two azo dye molecules and two copper ions.

[Synthesis of (M-41)]

To a 50 mL eggplant-shaped flask were charged 0.7 g of compound (L-1) and 10 mL of methanol, after which 1.5 mL of triethylamine, was added dropwise while stirring. A 430 mg quantity of copper acetate monohydrate was added while stirring and the mixture was refluxed with heating for three hours. The mixture was returned to room temperature. The precipitate obtained was filtered out, washed with methanol, and dried, yielding 0.44 g of compound (M-41). The compound was identified by measuring the Cu content by ESI-TOF-MS, MALDI-MS, and ICP-OES.
ESI-TOF-MS: m/z = 1627 (nega)
Based on the ESI-TOF-MS results, a complex comprised of four azo dye molecules and five copper ions was detected that had general formula (F): $[(Cu)_5(L^2)4(L')x]\cdot G_v$. Since m/z = 102 (posi) was detected by MALDI-MS, $G_v$ was found to be $(Et_3NH^+)$.
ICP-OES Cu content = 172 g/kg
The ICP-OES results corresponded to a structure $[(Cu)_5(L^{2-})_4]^{2-}\cdot(Et_3NH^+)_2$ in the form of a complex consisting of four

azo dye molecules and five copper ions containing two triethylamine molecules.

(M-42) to (M-46), (M-49), (M-55), and (M-68) were synthesized under the same conditions as (M-41).

(M-49):(ESI-MS)m/z=699(nega), 699(posi), 670(nega)

(M-56) was synthesized by replacing (L-1) with (L-16) and replacing triethylamine with diisopropylamine in the synthesis of (M-41) and conducting a similar reaction.

(M-67) was synthesized by replacing (L-1) with (L-11) and replacing triethylamine with diisopropylamine in the synthesis of (M-41) and conducting a similar reaction.

(M-69) was synthesized by replacing (L-1) with (L-14) and replacing triethylamine with diisopropylamine in the synthesis of (M-41) and conducting a similar reaction.

(M-77) was synthesized by replacing (L-1) with (L-24) and replacing triethylamine with DBN in the synthesis of (M-41) and conducting a similar reaction.

Various azo metal complex dyes that can be used in the present invention can be synthesized by the same methods as those used to synthesize the above-described compounds. Identification of the compounds can be confirmed by ESI-TOF-MS, X-ray structural analysis, and the like.

3. Synthesis example of polynuclear azo metal complex dye (general formula (5))

[Synthesis of compound (L-64)]

[Chem. 48]

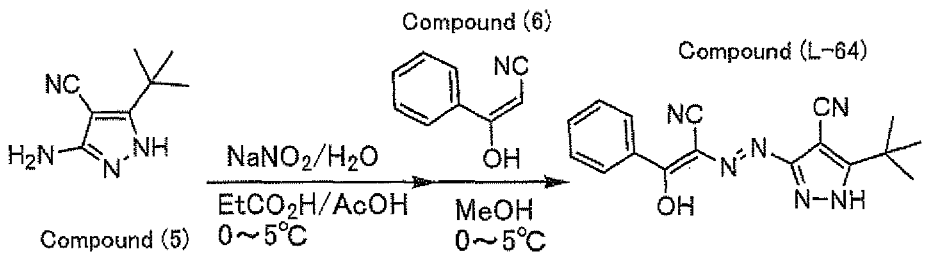


Into a 100 mL, three-necked flask were pored 4.00 g of compound (5), 5 mL of acetic acid, and 8 mL of propionic acid, and 6.25 mL of concentrated hydrochloric acid (35 to 37 mass percent) was gradually added dropwise with ice cooling. The mixture was cooled to 0 to 5˚C in an ice bath, a solution in which 1.85 g of $NaNO_2$ was dissolved in 6 mL of water was gradually added dropwise, and the mixture was stirred for one hour at 0 to 5˚C. This acidic solution was gradually added dropwise to a solution obtained by admixing 3.48 g of compound (6) maintained at 0 to 5˚C in an ice bath to 50 mL of methanol and the mixture was stirred for one hour. The mixture was returned to room temperature and stirred for one hour, and 100 mL of water was added to induce precipitation. The precipitate was filtered out and washed with water. The solid obtained was recrystallized with methanol and dried, yielding 6.15 g of compound (L-64). The compound was identified by 400 MHz $^1$H-NMR.

$^1$H-NMR($CDCl_3$)[ppm] ; δ11.59(1H,s),8.05-8.12(2H,m),7.45-7.69(3H,m),1.48(9H,s)

(L-65), (L-66), and (L-70) were synthesized by the same method as that used to synthesize above described compound (L-64), Various azo dyes described in the present invention can be similarly synthesized.

Specific examples of methods of synthesizing azo metal complexes will be given below. However, the present invention is not limited to these methods.

[Synthesis of (A-1)]

[Chem. 49]

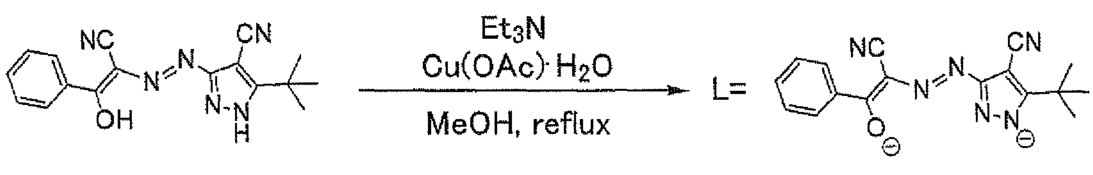


[Cu2(L)2]

To a 50 mL eggplant-shaped flask were charged 0.7 g of compound (L-64) and 9.8 mL of methanol, after which 1.54 mL of $Et_3N$ was added dropwise while stirring. The mixture was stirred for 10 minutes, 0.49 g of $Cu(OAc)_2 \cdot H_2O$ was added, and the mixture was refluxed with heating for three hours. The mixture was returned to room temperature

and 20 mL of water was added to induce precipitation. The precipitate was filtered out and washed with water, yielding 0.72 g of compound (A-1). The compound was identified by MALDI-MS. A number of complexes comprised of azo dye (Example Compound (L-64)) and numbers of copper ions greater than or equal to the number of molecules of azo dye were detected.
m/z = 762.2(nega) [Cu:L = 2:2]
825.2(nega) [Cu:L = 3:2]

[Synthesis of (A-7)]

With the exception that the azo dye was changed to Example Compound (L-66), Example Compound (A-7) was synthesized in the same manner as above-described Example Compound (A-1). The compound was identified by MALDI-MS. A number of complexes comprised of azo dye (Example Compound (L-3)) and numbers of copper ions greater than or equal to the number of molecules of azo dye were detected.
m/z = 722.3(nega) [Cu:L = 2:2]
785.3(nega) [Cu:L = 3:2]
1148.4(mega) [Cu:L = 4:3]

(A-2) to (A-6), (A-11), and (A-27) to (A-32) were synthesized by the same methods as those used to synthesize above-described compounds (A-1) and (A-7). Various azo metal complex dyes described in the present invention can be similarly synthesized.

[Reference Examples 1 to 28]

<<Preparation of optical information recording medium>>

(Preparation of support)

An injection molded support comprised of polycarbonate resin and having a thickness of 1.1 mm, an outer diameter of 120 mm, an inner diameter of 15 mm, and spiral pregrooves (with a track pitch of 320 nm, a groove width (at concave portion) of 170 nm, a groove depth of 37 nm, a groove tilt angle of 52˚, and a wobble amplitude of 20 nm) was prepared. Mastering of the stamper employed during injection-molding was conducted by laser beam (351 nm) cutting.

(Formation of light reflective layer)

An ANC (Ag: 98.1at%, Nd: 0.7 at%, Cu: 0.9 at%) light reflective layer 60 nm in thickness was formed on the support as a vacuum-formed film layer by DC sputtering in an Ar atmosphere using a Cube manufactured by Unaxis Corp. The thickness of the light reflective film was adjusted by means of the duration of sputtering.

(Formation of recordable recording layer)

1 g of each of Example compounds shown in Tables 3 and 4 was separately added to and dissolved in 100 mL of 2,2,3,3-tetrafluoropropanol and dye-containing coating liquids were prepared as Reference Examples 1 to 33. The dye-containing coating liquids that had been prepared were then coated on a first light reflective layer by spin coating while varying the rotational speed from 500 to 2,200 rpm under conditions of 23˚C and 50 percent RH to form a first recordable recording layer.

After forming the recordable recording layer, annealing was conducted in a clean oven. In the annealing process, the supports were supported while creating a gap with spacers in the vertical stack pole and maintained for 1 hour at 80˚C.

(Formation of barrier layer)

Subsequently, a Cube made by Unaxis Corp. was employed to form by DC sputtering in an argon atmosphere a barrier layer comprised of $Nb_2O_5$ having a thickness of 10 nm on the recordable recording layer.

(Adhesion of a cover layer)

A cover layer in the form of a polycarbonate film (Teijin Pureace, 80 micrometers in thickness) measuring 15 mm in inner diameter, 120 mm in outer diameter, and having an adhesive layer (with a glass transition temperature of -52˚C) on one side was provided so that the combined thickness of the adhesive layer and the polycarbonate film was

100 micrometers.
After placing the cover layer on the barrier layer through the adhesive layer, a member was placed against the cover layer and pressure was applied, bonding the cover layer and barrier layer. This process yielded optical information recording media of Reference Examples 1 to 33 having a light reflective layer, a recordable recording layer, a barrier layer, an adhesive layer, and a cover layer in this order on a support.

<Measurement of the film thickness of the dye layer>

Cross-sections of the optical information recording media obtained were viewed by SEM and the thickness of the dye layer respectively at the groove concave portion and the groove convex portion were read. The groove concave portion of the dye layer was +0 to 10 nm in depth, and the groove convex portion of the dye layer was about 10 to 30 nm.

[Comparative Examples 1 to 7]

<<Preparation of optical information recording medium>>

With the exception that comparative compounds (A) to (G) were employed in place of Example compound as dyes in the recordable recording layer, the optical information recording media of Comparative Examples 1 to 7 were prepared by the same method as in Examples.

[Chem. 50]
Comparative compound (A): compound described in Japanese Unexamined Patent Publication (KOKAI) No. 2001-158862

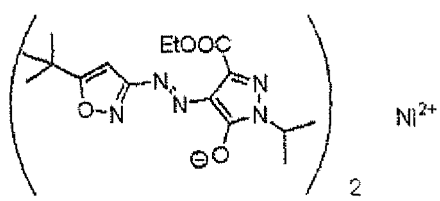

[Chem. 51]
Comparative compound (B): compound described in Japanese Unexamined Patent Publication (KOKAI) No. 2001-158862

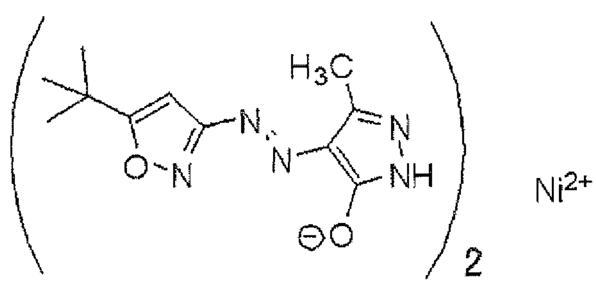

[Chem. 52]
Comparative compound (C): compound within the scope described in Japanese Unexamined Patent Publication (KOKAI) No. 2006-142789

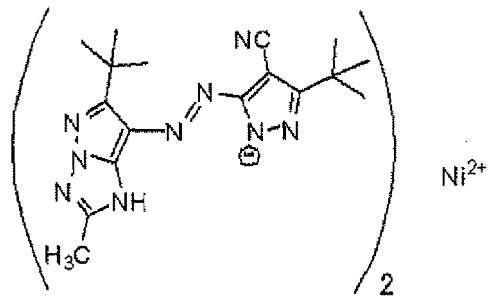

[Chem. 53]

Comparative compound (D): compound described in Japanese Unexamined Patent Publication (KOKAI) No. 2006-306070

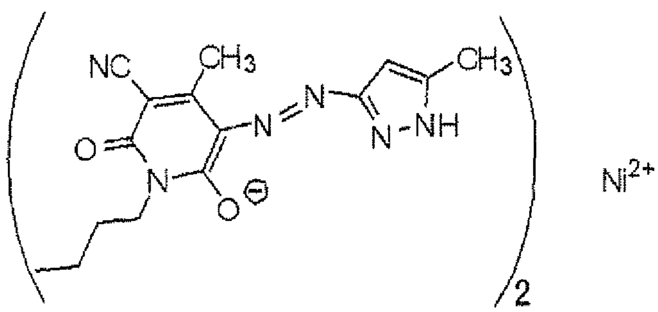

[Chem. 54]

Comparative compound (E): compound described in Japanese Unexamined Patent Publication (KOKAI) No. 2000-168237

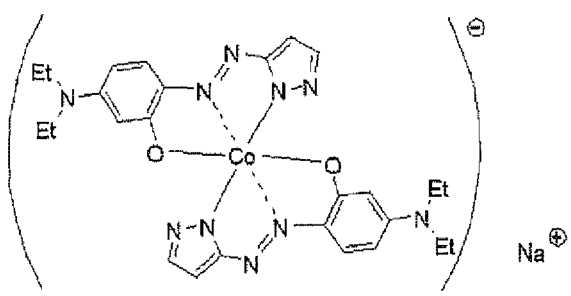

[Chem. 55]

Comparative compound (F): compound described in Japanese Unexamined Patent Publication (KOKAI) No. 2006-306070

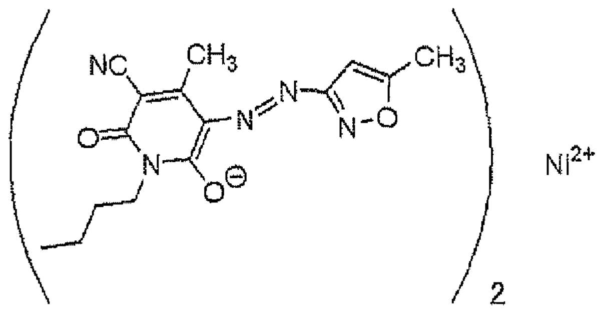

[Chem. 56]

Comparative compound (G): compound described in Japanese Unexamined Patent Publication (KOKAI) No. 2007-45147

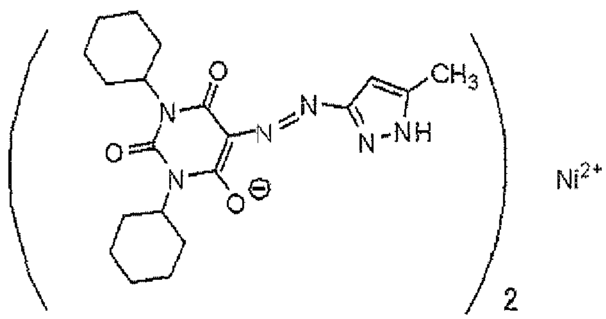

<Evaluation of the optical information recording medium>

(1) Jitter evaluation

A (1.7) RLL-NRZI modulated mark-length modulated signal (17 PP) was recorded at a clock frequency of 66 MHz and a linear speed of 4.92 m/s by irradiation from the cover layer side with a recording and reproduction evaluation device (made by Pulstec Industrial Co., Ltd.: DDU 1000) comprising a 405 nm laser and NA 0.85 pick-ups on the optical information recording medium that had been prepared in Reference Examples 1 to 28 and Comparative Examples 1 to 7. Jitter measurement was conducted by passing the recorded signal through a limit equalizer and employing a time interval analyzer (TA520 made by Yokogawa Electric Corporation).

(2) Evaluation of the light resistance of the dye film

Dye-containing coating liquids identical to Reference Examples 1 to 28 and Comparative Examples 1 to 7 were prepared and applied at an ordinary temperature under a nitrogen atmosphere to glass sheets 1.1 mm in thickness by spincoating while varying the rotational speed from 500 to 1,000 rpm. Subsequently, the glass sheets were maintained for 24 hours at an ordinary temperature. A merry-go-round shaped light resistance tester (Cell Tester III, made by Eagle Engineering, Inc., with WG320 filter made by Schott) was then used to conduct a light resistance test. The absorption spectra of the dye film immediately prior to the light resistance test and 48 hours after the light resistance test were measured with a UV-1600PC (made by Shimadzu Corp.). The change in absorbance at the maximum absorption wavelength was read.

[Table 7]

| | Azo metal complex dye | Light resistance of dye film(Note 1) | Recording and reproduction characteristics (Note 2) |
|---|---|---|---|
| Reference Example 1 | (M-1) | ◎ | ◎ |

(continued)

| | Azo metal complex dye | Light resistance of dye film(Note 1) | Recording and reproduction characteristics (Note 2) |
|---|---|---|---|
| Reference Example 2 | (M-11) | ◎ | ◎ |
| Reference Example 3 | (M-12) | ◎ | ◎ |
| Reference Example 4 | (M-13) | ◎ | ◎ |
| Reference Example 5 | (M-14) | ◎ | ◎ |
| Reference Example 6 | (M-21) | ◎ | ◎ |
| Reference Example 7 | (M-22) | ◎ | ◎ |
| Reference Example 8 | (M-24) | ◎ | ◎ |
| Reference Example 9 | (M-25) | ◎ | ◎ |
| Reference Example 10 | (M-26) | ◎ | ◎ |
| Reference Example 11 | (M-28) | ◎ | ◎ |
| Reference Example 12 | (M-30) | ◎ | ◎ |
| Reference Example 13 | (M-41) | ◎ | ◎ |
| Reference Example 14 | (M-42) | ○ | ○ |
| Reference Example 15 | (M-43) | ◎ | ◎ |
| Reference Example 16 | (M-44) | ○ | ○ |
| Reference Example 17 | (M-45) | ○ | ○ |
| Reference Example 18 | (M-46) | ○ | ○ |
| Reference Example 19 | (M-48) | ○ | ○ |
| Reference Example 20 | (M-53) | ◎ | ◎ |
| Reference Example 21 | (M-55) | ◎ | ◎ |
| Reference Example 22 | (M-56) | ◎ | ◎ |
| Reference Example 23 | (M-61) | ◎ | ◎ |
| Reference Example 24 | (M-66) | ◎ | ◎ |
| Reference Example 25 | (M-67) | ◎ | ◎ |
| Reference Example 26 | (M-68) | ◎ | ◎ |
| Reference Example 27 | (M-74) | ◎ | ◎ |
| Reference Example 28 | (M-75) | ◎ | ○ |
| Comparative Example 1 | Compound (A) | Δ | × |
| Comparative Example 2 | Compound (B) | × | ×(Note 3) |
| Comparative Example 3 | Compound (C) | Δ | × |
| Comparative Example 4 | Compound (D) | (Undissolved) | ×(Note 3) |
| Comparative Example 5 | Compound (E) | Δ | × |
| Comparative Example 6 | Compound (F) | × | ○ |
| Comparative Example 7 | Compound (G) | Δ | × |

(Note 1) After 48 hours of irradiation by Xe lamp, a dye remaining rate at absorption λmax of equal to or greater than 90 percent was denoted by ◎, equal to or greater than 85 percent but less than 90 percent by ○, equal to or greater than 75 percent but less than 85 percent by Δ, and less than 75 percent by X.

(Note 2) A jitter of less than 7 percent was denoted by ◎, equal to or greater than 7 percent but less than 8

percent by ○, and equal to or greater than 8 percent by X.

(Note 3) Due to poor solubility and the inability to form an adequate recording layer, recording or measurement was precluded.

As shown in Table 7, the polynuclear azo metal complex dyes achieved both recording and reproduction characteristics and light resistance in contrast to Comparative Examples 1 to 7, in which conventional azo metal complexes were employed, and were found to have suitable characteristics as dyes for use in Blu-ray discs.

The polynuclear azo metal complex dyes employed in Reference Examples exhibited good solubility in coating solvents and good film stability. In Reference Examples 1 to 28, recording and reproduction of the optical information recording medium was possible following irradiation with Xe for 55 hours, confirming that the polynuclear azo metal complex dyes employed had good light resistance even in optical information recording media. The optical information recording media prepared in Reference Examples 1 and 13 were stored for 168 hours at high temperature and high humidity following recording, but almost no jitter change was observed. Thus, storage stability at high temperature and high humidity was found to be good. Comparative Compounds (A) to (D) and (F) exhibited large changes in absorption spectra and poor compound stability when stored in coating solutions (at 25˚C or 60˚C). By contrast, Example Compounds (M-42), (M-48), (M-51), (M-53), (M-55), (M-56), (M-61), (M-66), (M-67), (M-69), (M-74), and (M-75) exhibited almost no change in absorption spectra under the same conditions, and were thus found to have good stability.

For (M-41) and (M-55), when dye films prepared in the same manner as for light resistance evaluation were stored for 24 hours at 60˚C and 90 percent RH, almost no change in absorption was observed, revealing good stability at high temperature and high humidity.

When a powder of Example Compound (M-11) was stored for three months in air at 60˚C, no change in physical properties was observed, revealing extremely good thermal stability.

4. Synthesis and identification of cationic dyes

Example Compounds C-1 to C-8 were synthesized according to the methods set forth in The Chemistry of Synthetic Dyes (Academic Press, by K. Venkataraman, published in 1971) and the methods described in the references therein. Example Compounds set forth below were identified by $^1$H-NMR and their maximum absorption wavelengths $\lambda_{max}$ and molar extinction coefficients ε at the maximum absorption wavelength $\lambda_{max}$ were measured. The results are given below. The maximum absorption wavelength and ε were measured by the following methods.

Approximately 1 mg of each of Example Compounds was dissolved in methanol, the volume was adjusted to 100 mL, UV-visible absorption spectra were measured with a UV-3100PC (made by Shimadzu), and the maximum absorption wavelength and absorbance were obtained. The molar extinction coefficient ε at the maximum absorption wavelength was calculated by the Beer-Lambert law.

[Example Compound C-1]

$^1$H-NMR(DMSO-d6)[ppm];δ8.24 (d, 2H), 7.88 (d, 2H), 7.70 (t, 2H), 7.46-7.51 (m, 4H), 7.10 (d, 2H), 6.72 (s, 1H), 4.03 (s, 6H), 2.28 (s, 3H).
$\lambda_{max}$ = 427 nm, ε = 121000 (MeOH)

[Example Compound C-2]

$^1$H-NMR(DMSO-d6)[ppm];δ8.01 (d, 1H), 7.82 (d, 2H), 7.70 (d, 1H), 7.64 (t, 1H), 7.53 (t, 1H), 7.50-7.45 (m, 4H), 7.10 (d, 2H), 6.27 (s, 1H), 3.99 (s, 3H), 3.83 (s, 3H), 2,26 (s, 3H).
$\lambda_{max}$ = 400 nm, ε = 82700 (MeOH)

[Example Compound C-3]

$^1$H-NMR(DMSO-d6)[ppm];δ7.52 (t, 1H), 5.81 (d, 1H), 5.48 (d, 1H), 4.46 (s, 2H), 4.04 (t, 2H), 3.38 (t, 2H), 3.13 (s, 3H), 2.98 (s, 3H), 1.34 (s, 6H).
$\lambda_{max}$ = 418 nm, ε = 109000 (MeOH)

[Example Compound C-5]

$^1$H-NMR(DMSO-d6)[ppm];δ8.24 (d, 2H), 8.10 (s, 2H), 7.58 (d, 2H), 7.46 (d, 2 H), 7.09 (d, 2H), 6.73 (s, 1H), 4.00 (s, 6H), 2.28 (s, 3H).
$\lambda_{max}$ = 404 nm, ε = 88300 (MeOH)

[Example Compound C-6]

$\lambda_{max}$ = 418 nm, $\varepsilon$ = 109400 (MeOH)

[Example Compound C-7]

$^1$H-NMR(DMSO-d6)[ppm];δ8.16 (d, 1H), 8.02 (d, 1H), 7.74 (d, 1H), 7.57 (t, 1H), 7.40 (t, 1H), 6.13 (d, 1H), 4.42 (q, 2H), 3.72 (br, 4H), 1.68 (br, 6H), 1.27 (t, 3H).
$\lambda_{max}$ = 387 nm, $\varepsilon$= 56700 (MeOH)

[Example Compound C-8]

$^1$H-NMR(DMSO-d6)[ppm];δ8.32 (d, 2H), 8.10 (d, 2H), 7.83 (d, 2H), 7.62 (t, 2H), 7.49 (t, 2H), 6.23 (d, 2H), 4.51 (q, 4H), 4.05-3.95 (br, 8H), 1.32 (t, 6H). $\lambda_{max}$ = 406 nm, $\varepsilon$= 145000 (MeOH)

[Examples 1 to 11]

Formation of dye film and evaluation of physical properties

(1) Measurement of extinction coefficient k

For Examples 1 to 11 and Comparative Examples 1 and 2, the polynuclear metal complex dyes and cationic dyes indicated in Table 8 were mixed at the polynuclear metal complex dye:cationic dye ratios (mass ratios) indicated in Table 8, and dye-containing coating liquids were prepared by dissolution in 10-fold volumes (mL) of 2,2,3,3-tetrafluoropropanol relative to the combined amount (g) of the polynuclear metal complex dye and cationic dye mixtures. A 1 mL quantity of each of the dye-containing coating liquids that had been prepared was coated in a nitrogen atmosphere at an ambient temperature while varying the rotational speed from 500 to 1,000 rpm by spin-coating on a glass sheet 1.1 mm in thickness to prepare dye films. Extinction coefficient k was measured by spectral ellipsometry.

(2) Evaluation of light resistance

For Examples 1 to 11 and Comparative Examples 1 and 2, dye films prepared by the same method as in (1) above were stored for 24 hours at an ambient temperature and then tested for light resistance with a merry-go-round type light resistance tester (Cell Tester III, made by Eagle Engineering, Inc., with WG320 filter made by Schott). A UV-1600 PC (made by Shimadzu Corporation) was employed to measure the absorption spectra of the dye films and read the change in absorbance at the wavelength of maximum absorption of the dye film just prior to light resistance testing and 48 hours after light resistance testing.

(3) Evaluation of solution stability

For Examples 1 to 7 and 9 to 11 and Comparative Examples 1 and 2, the polynuclear metal complex dyes and cationic dyes indicated in Table 8 were mixed at the polynuclear metal complex dye:cationic dye ratios (mass ratios) indicated in Table 8 and added to and dissolved in 2,2,3,3-tetrafluoropropanol to adjust concentrations with absorbances of 0.9 to 1.1. The absorption spectra of the solutions were measured immediately after solution preparation and following 48 hours of storage at 60˚C, and the remaining rate was obtained from the change in absorbance.

(4) Evaluation of recording characteristics

For Examples 1 to 11, with the exceptions that the metal complex dyes indicated in Table 8 were employed and the cationic dyes were employed in the proportions indicated in Table 8, optical information recording media were prepared by the same method as in Reference Examples. For Comparative Examples 1 and 2, with the exception that the metal complex dyes indicated in Table 8 were employed, optical information recording media were prepared by the same methods as in Reference Examples. (1.7) RLL-NRZI modulated mark-length modulated signal (17 PP) was recorded at a clock frequency of 66 MHz and a linear speed of 4.92 m/s by irradiation from the cover layer side with a recording and reproduction evaluation device (made by Pulstec Industrial Co., Ltd.: DDU 1000) comprising a 405 nm laser and NA 0.85 pick-ups on the optical information recording medium that had been prepared. The change in the 2T recording C/N was measured for the output of the recording beam and the recording characteristics were evaluated based on the output at which the 2T recording C/N reached a maximum.

[Table 8]

| | Polynuclear azo metal complex dye | Cationic dye | Blending ratio | k @405mn | Solution stability | Light resistance | Recording characteristics(Note 4) |
|---|---|---|---|---|---|---|---|
| Example 1 | M-11 | Example Compound C-1 | 90:10 | 0.44 | 100% | 93% | ○ |
| Example 2 | M-11 | Example Compound C-1 | 80:20 | 0.49 | 100% | 86% | ○ |
| Example 3 | M-11 | Example Compound C-1 | 50:50 | 0.49 | 100% | <80% | Δ |
| Example 4 | M-11 | Example Compound C-2 | 95:5 | 0.46 | 100% | 90% | ○ |
| Example 5 | M-11 | Example Compound C-2 | 90:10 | 0.49 | 100% | 88% | ○ |
| Example 6 | M-11 | Example Compound C-2 | 80:20 | 0.54 | 100% | 86% | ○ |
| Example 7 | M-11 | Example Compound C-3 | 95:5 | 0.46 | 100% | 86% | ○ |
| Example 8 | M-11 | Example Compound C-3 | 90:10 | 0.49 | 100% | 83% | ○ |
| Example 9 | M-11 | Example Compound C-4 | 95:5 | 0.46 | 89% | 97% | ○ |
| Example 10 | M-11 | Example Compound C-4 | 90:10 | 0.49 | 86% | 90% | ○ |
| Example 11 | M-11 | Example Compound C-4 | 80:20 | 0.52 | 82% | 87% | ○ |
| Comparative Example 1 | M-11 | - | 100:0 | 0.40 | 100% | 91% | ○ |
| Comparative Example 2 | Comparative Compound F | - | 100:0 | 0.48 | 0% (Decomposition) | <80% | Δ |
| Comparative Example 3 | - | Example Compound C-1 | 0:100 | Film formation was impossible. | - | - | - |

(continued)

| | Polynuclear azo metal complex dye | Cationic dye | Blending ratio | k @405mn | Solution stability | Light resistance | Recording characteristics(Note 4) |
|---|---|---|---|---|---|---|---|
| Comparative Example 4 | - | Example Compound C-1 | 0:100 | Film formation was impossible. | - | - | - |
| Comparative Example 5 | - | Example Compound C-3 | 0:100 | Film formation was impossible | - | | - |
| Comparative Example 6 | - | Example Compound C-4 | 0:100 | Film formation was impossible. | - | - | - |

(Note 4) An output at which the 2T recording C/N was maximum of equal to or higher than 38dB was denoted by ○, equal to or higher than 35 dB but less than 38 dB by Δ, and less than 35 dB by X.

The extinction coefficient k indicated in Table 8 will be described.
Extinction coefficient k is an intrinsic parameter of a material that depends on the wavelength λ of light. It is defined by the following equation using the complex index of refraction N, the refractive index n, and an imaginary number unit i.

$$N \fallingdotseq n - ik$$

In the above equation, k satisfies the following relation with absorption coefficient α and light wavelength λ;

$$\alpha = 4\pi k/\lambda$$

That is, the absorption coefficient α of a material at a given wavelength is proportional to k. Accordingly, increasing k increases the absorbance, causing light to be efficiently absorbed. Optical recording exploits decomposition of the dye when the recording layer dye is excited by light absorption, with light being converted to heat. Accordingly, achieving efficient light absorption promotes the decomposition process, and can be anticipated to increase recording sensitivity. High sensitivity permits high-speed recording, and is a topic that must be effective addressed in the next generation of optical recording media. One method of achieving this is to employ a material with a high k in the optical recording dye layer. However, it is difficult to increase k while maintaining the performance that the dye must satisfy, such as suitability to coating, thermal decomposition characteristics, recording characteristics, storage properties, and light resistance. A process of trial and error is required for structural optimization.
As indicated in Reference Examples, the polynuclear azo metal complex dye has various good characteristics as a recording dye in optical information recording media corresponding to short-wavelength laser beams. As a result of extensive research into improving k, and thus the recording sensitivity, the present inventors discovered the technique of adding a sensitizer to an azo metal polynuclear complex dye with good recording performance. As shown in Table 8, the addition of equal to or more than 5 percent of a cationic dye as a mass ratio relative to the polynuclear azo metal complex dye increased the k value by 10 to 22 percent.
A comparison of Examples 1 to 11 and Comparative Example 1 in Table 8 confirms that the addition of Example Compounds C-1 to C-4 increased extinction coefficient k without compromising the good recording characteristics of the polynuclear azo metal complex dye.
Further, in the above evaluation of recording characteristics, a comparison of recording sensitivity based on recording power (the lower this power, the greater the recording sensitivity) at the output at which the 2T recording C/N reached a maximum revealed that Examples 1 to 4 achieved an increase in recording sensitivity of 10 to 20 percent over Comparative Example 1. Based on these results, it was determined that the higher the k of a dye film, the greater the sensitivity. This was because the cationic dye that was added functioned as a photosensitizer, increasing the efficiency of light absorption and photothermal conversion, thereby promoting decomposition of the recording dye. Utilizing this effect, it was possible to readily increase the sensitivity of the dye film. Since the sensitizing effect derived from the cation moiety of the cationic dye, even when a cationic dye having the same cation moiety as the cationic dye employed in the Examples and a different counter anion (such as a chloride ion, bromide ion, iodide ion, p-toluene sulfonic acid ion, perchloric acid ion, carboxylic acid ion, hexafluorophosphoric acid ion, or tetrafluoroboric acid ion) was employed, it is thought that it would be possible to achieve about the same sensitizing effect as in the results shown in Table 8. Adequately high solution solubility and/or light resistance approximately equivalent to those in Comparative Example 1 were achieved in the Examples. Thus, the cationic dye was found to function as a sensitizer without compromising the good characteristics of the polynuclear azo metal complex.
The metal complex dye employed in Comparative Example 2 had good recording sensitivity but a poor solution storage property and light resistance. It was thus unsuitable as a recording dye for optical information recording media. In Comparative Examples 3 to 5, attempts were made to evaluate the physical properties of the cationic dyes alone, but they were unsuited to film formation.
Based on the above, the joint presence of a polynuclear azo metal complex with a cationic dye was found to be preferable in terms of film forming properties, light resistance, recording sensitivity, and recording and reproduction characteristics.

Industrial applicability

The optical information recording medium of the present invention is suitable for use as an optical information recording medium corresponding to short wavelength lasers such as a Blu-ray Disc.

BRIEF DESCRIPTION OF THE DRAWINGS

[Fig. 1] Fig. 1 is a schematic sectional view showing an example of the optical information recording medium of the present invention.

EXPLANATIONS OF SYMBOLS

| | |
|---|---|
| 10A | First optical information recording medium |
| 12 | First support |
| 14 | First recordable recording layer |
| 16 | Cover layer |
| 18 | First light reflective layer |
| 20 | Barrier layer |
| 22 | First bonding layer or first adhesive layer |
| 38 | Land |
| 40 | Groove |
| 42 | First objective lens |
| 44 | Hard coat layer |
| 46 | Laser beam |

**Claims**

1. An optical information recording medium comprising a recording layer, wherein the recording layer comprises a cationic dye and a polynuclear azo metal complex dye comprising an azo dye and a metal ion.

2. The optical information recording medium according to claim 1, wherein the azo dye is an azo dye comprising a partial structure denoted by general formula (A) below:

[Chem. 1]

General formula (A)

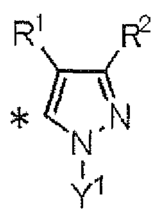

wherein, in general formula (A), $R^1$ and $R^2$ each independently denote a hydrogen atom or a substituent, $Y^1$ denotes a hydrogen atom that may dissociate during formation of the azo metal complex dye, and * denotes a binding position with -N=N- group.

3. The optical information recording medium according to claim 2, wherein the azo dye is an azo dye denoted by general formula (1) below:

[Chem. 2]

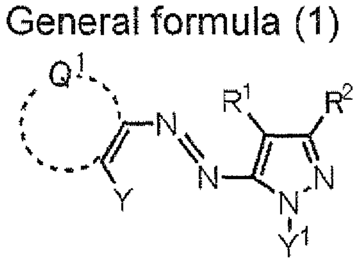

wherein, in general formula (1), $Q^1$ denotes an atom group forming a heterocyclic ring or a carbon ring with two adjacent carbon atoms, Y denotes a group comprising a hydrogen atom that may dissociate during formation of the azo metal complex dye, and $R^1$, $R^2$, and $Y^1$ are defined respectively as in general formula (A).

**4.** The optical information recording medium according to claim 3, wherein $Q^1$ in general formula (1) denotes an atom group forming a pyrazol ring with two adjacent carbon atoms.

**5.** The optical information recording medium according to any of claims 1 to 4, wherein a cationic dye moiety contained in the cationic dye is denoted by any of general formulas (C) to (E) below:

[Chem. 3]

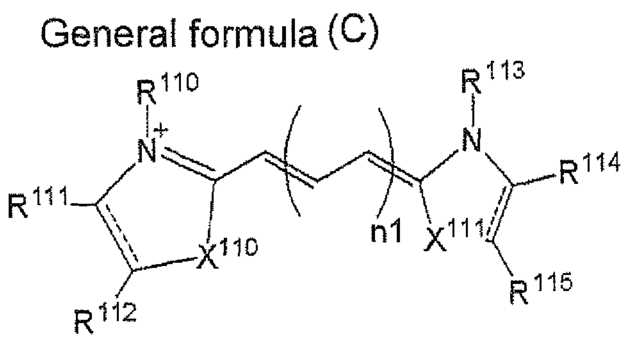

wherein, in general formula (C), each of $R^{110}$, $R^{111}$, $R^{112}$, $R^{113}$, $R^{114}$, and $R^{115}$ independently denotes a hydrogen atom or a substituent, $R^{111}$ and $R^{112}$ may bond together to form a ring structure, $R^{114}$ and $R^{115}$ may bond together to form a ring structure, each of $X^{110}$ and $X^{111}$ independently denotes a carbon atom, oxygen atom, nitrogen atom, or sulfur atom, and n1 denotes an integer of equal to or greater than 0:

[Chem. 4]

General formula (D)

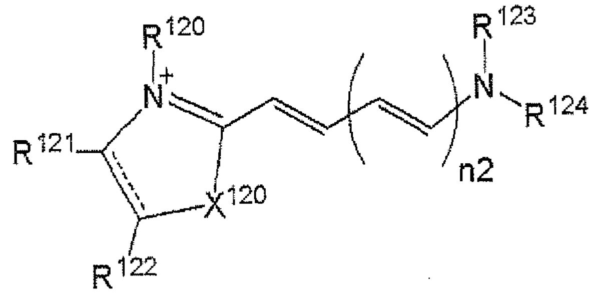

wherein, in general formula (D), each of $R^{120}$, $R^{121}$, and $R^{122}$ independently denotes a hydrogen atom or a substituent, $R^{121}$ and $R^{122}$ may bond together to form a ring structure, each of $R^{123}$ and $R^{124}$ independently denotes a substituent and may bond together to form a ring structure, $X^{120}$ independently denotes a carbon atom, oxygen atom, nitrogen atom, or sulfur atom, and n2 denotes an integer of equal to or greater than 0:

[Chem. 5]

General formula (E)

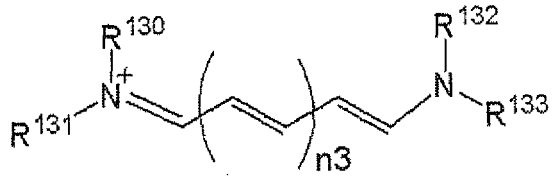

wherein, in general formula (E), each of $R^{130}$, $R^{131}$, $R^{132}$, and $R^{133}$ independently denotes a substituent, $R^{130}$ and $R^{131}$ may bond together to form a ring structure, $R^{132}$ and $R^{133}$ may bond together to form a ring structure, and n3 denotes an integer of equal to or greater than 0.

**6.** The optical information recording medium according to any of claims 1 to 5, wherein the cationic dye has a maximum absorption wavelength at a wavelength range of 385 to 425 nm.

**7.** The optical information recording medium according to any of claims 1 to 6, wherein the recording layer comprises the polynuclear azo metal complex dye and the cationic dye at a mass ratio of 95:5 to 50:50.

**8.** The optical information recording medium according to any of claims 1 to 7, wherein the metal ion containing the polynuclear azo metal complex dye is a copper ion.

**9.** The optical information recording medium according to any of claims 1 to 8, which comprises the recording layer on a surface of a support, and the surface has pregrooves with a track pitch ranging from 50 to 500 mm.

**10.** The optical information recording medium according to any of claims 1 to 9, which is employed for recording information by irradiation of a laser beam having a wavelength of equal to or shorter than 440 nm.

**11.** A method of recording information comprising:

recording information on the recording layer comprised in the optical recording medium according to any of claims 1 to 10, and
conducting the recording by irradiation of a laser beam having a wavelength of equal to or shorter than 440 nm onto the optical information recording medium.

**12.** A photosensitizer comprising a cationic dye moiety denoted by any of general formulas (C) to (E) below:

[Chem. 6]

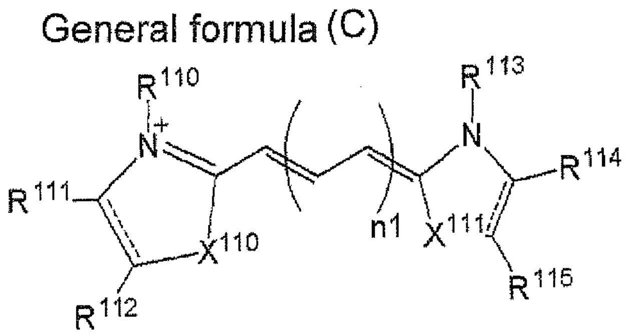

wherein, in general formula (C), each of $R^{110}$, $R^{111}$, $R^{112}$, $R^{113}$, $R^{114}$, and $R^{115}$ independently denotes a hydrogen atom or a substituent, $R^{111}$ and $R^{112}$ may bond together to form a ring structure, $R^{114}$ and $R^{115}$ may bond together to form a ring structure, each or $X^{110}$ and $X^{111}$ independently denotes a carbon atom, oxygen atom, nitrogen atom, or sulfur atom, and n1 denotes an integer of equal to or greater than 0:

[Chem. 7]

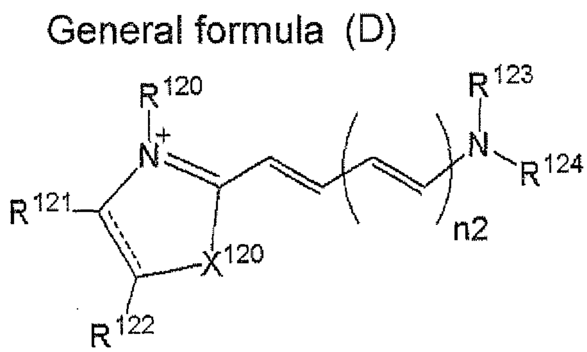

wherein, in general formula (D), each of $R^{120}$, $R^{121}$, and $R^{122}$ independently denotes a hydrogen atom or a substituent, $R^{121}$ and $R^{122}$ may bond together to form a ring structure, each of $R^{123}$ and $R^{124}$ independently denotes a substituent and may bond together to form a ring structure, $X^{120}$ independently denotes a carbon atom, oxygen atom, nitrogen atom, or sulfur atom, and n2 denotes an integer of equal to or greater than 0:

[Chem. 8]

General formula (E)

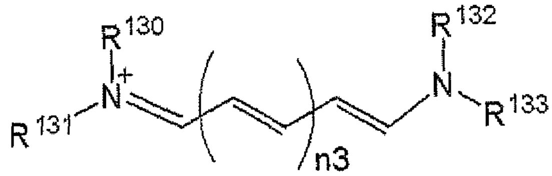

wherein, in general formula (E), each of $R^{130}$, $R^{131}$, $R^{132}$, and $R^{133}$ independently denotes a substituent, $R^{130}$ and $R^{131}$ may bond together to form a ring structure, $R^{132}$ and $R^{133}$ may bond, together to form a ring structure, and n3 denotes an integer of equal to or greater than 0.

**13.** The photosensitizer according to claim 12, which is employed together with a polynuclear azo metal complex dye comprising an azo dye and a metal ion.

**14.** The photosensitizer according to claim 13, wherein the azo dye comprises a partial structure denoted by general formula (A) below:

[Chem. 9]

General formula (A)

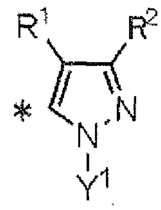

wherein, in general formula (A), $R^1$ and $R^2$ each independently denote a hydrogen atom or a substituent, $Y^1$ denotes a hydrogen atom that may dissociate during formation of the azo metal complex dye, and * denotes a binding position with -N=N- group.

**15.** The photosensitizer according to claim 14, wherein the azo dye is an azo dye denoted by general formula (1) below:

[Chem. 10]

General formula (1)

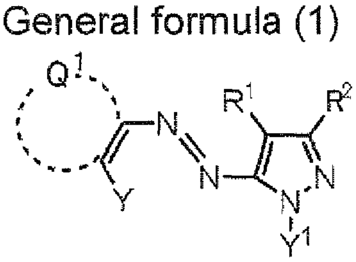

wherein, in general formula (1), $Q^1$ denotes an atom group forming a heterocyclic ring or a carbon ring with two adjacent carbon atoms, Y denotes a group comprising a hydrogen atom that may dissociate during formation of the azo metal complex dye, and $R^1$, $R^2$, and $Y^1$ are defined respectively as in general formula (A).

16. The photosensitizer according to claim 15, wherein $Q^1$ in general formula (1) denotes an atom group forming a pyrazol ring with two adjacent carbon atoms.

17. The photosensitizer according to any of claims 12 to 16, which has a maximum absorption wavelength at a wavelength range of 385 to 425 mn.

18. The photosensitizer according to any of claims 12 to 17, which is a photosensitizer for a light with a wavelength of equal to or shorter than 440 nm.

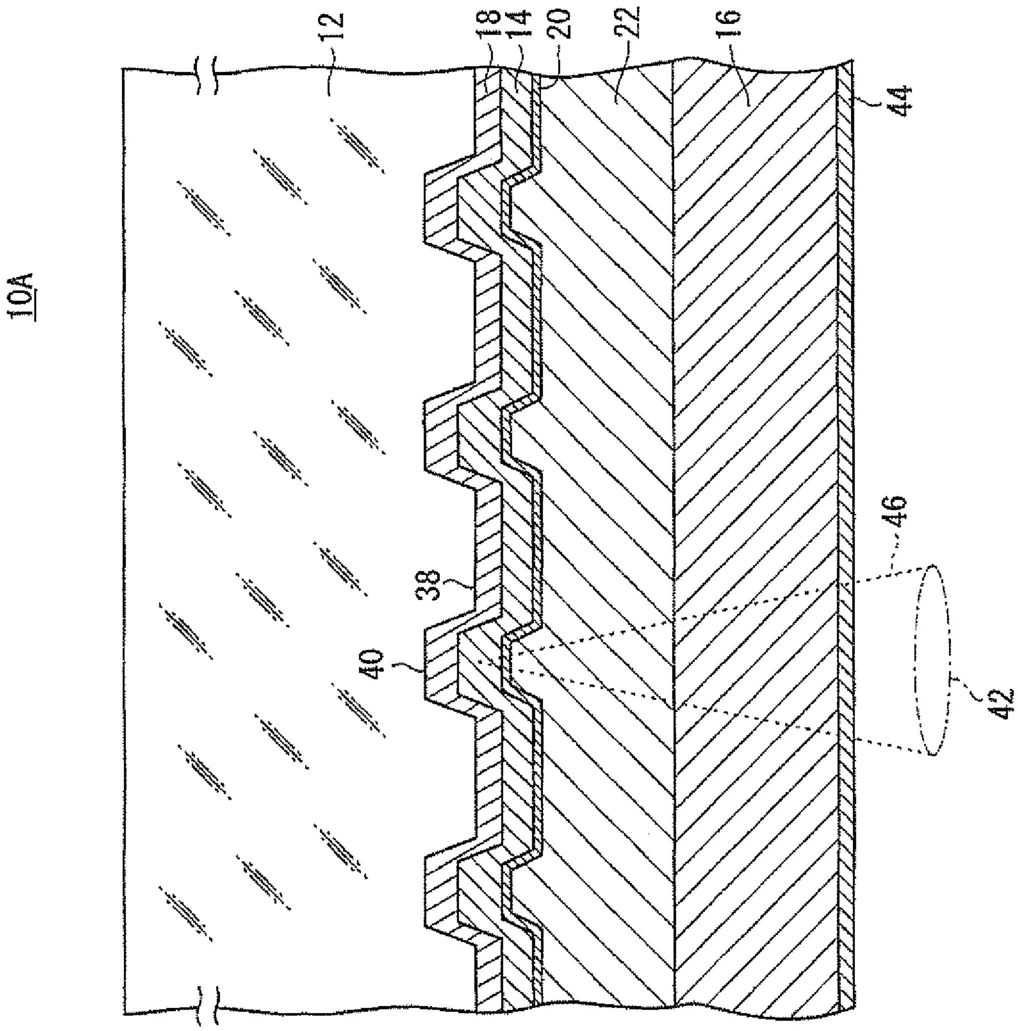


FIG. 1

**INTERNATIONAL SEARCH REPORT**

International application No.
PCT/JP2009/005295

A. CLASSIFICATION OF SUBJECT MATTER
*B41M5/26*(2006.01)i, *G11B7/24*(2006.01)i, *G11B7/244*(2006.01)i

According to International Patent Classification (IPC) or to both national classification and IPC

B. FIELDS SEARCHED

Minimum documentation searched (classification system followed by classification symbols)
B41M5/26, G11B7/24, G11B7/244

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2008/038765 A1 (Fujifilm Corp.), 03 April 2008 (03.04.2008), entire text & JP 2008-105380 A & US 2008/0081285 A1 & EP 1906401 A2 & CN 101154408 A & KR 10-2008-0030528 A | 1-18 |
| A | WO 2008/108406 A1 (Fujifilm Corp.), 12 September 2008 (12.09.2008), entire text & JP 2008-252056 A & JP 2009-48687 A | 1-18 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 14 December, 2009 (14.12.09) | 22 December, 2009 (22.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008264480 A
- JP 11310728 A
- JP 11130970 A
- JP 2002274040 A
- JP 2000168237 A
- JP 2001158862 A
- JP 2006142789 A
- JP 2006306070 A
- US 20090053455 A1
- JP 61036362 A
- US 4685934 A
- JP 2006057076 A
- US 20080199615 A1
- US 2008019615 A1
- WO 0144374 A
- JP 58175693 A
- JP 59081194 A
- JP 60018387 A
- JP 60019586 A
- JP 60019587 A
- JP 60035054 A
- JP 60036190 A
- JP 60036191 A
- JP 60044554 A
- JP 60044555 A
- JP 60044389 A
- JP 60044390 A
- JP 60054892 A
- JP 60047069 A
- JP 63209995 A
- JP 4025492 A
- JP 1038680 A
- JP 6026028 A
- DE 350399
- JP 2003217177 A
- JP 2003203387 A
- JP 9147418 A
- JP 2007045147 A

### Non-patent literature cited in the description

- **K. Venkataraman.** The Chemistry of Synthetic Dynes. Academic Press, 1971
- *Journal of the Japanese Chemical Society,* 1992, 1141
- **K. Venkataraman.** The Chemistry of Synthetic Dyes. Academic Press, 1971